# EUROPEAN PATENT APPLICATION

(11) **EP 2 053 591 A1**
(43) Date of publication of application: **29.04.2009**
(21) Application number: 07791970.2
(22) Date of filing: 03.08.2007
(51) Int. Cl.: G09G 5/00, G09G 5/14, H04N 5/45, H04N 5/66, H04N 17/04

(54) **IMAGE DISPLAY CONTROL DEVICE, IMAGE PROCESSING DEVICE, IMAGE DISPLAY CONTROL METHOD, ITS PROGRAM, AND RECORDING MEDIUM WITH THE PROGRAM RECORDED THEREIN**

(30) Priority: 03.08.2006 WO PCT/JP2006/315418
(71) Applicant: Pioneer Corporation, Tokyo 153-8654 (JP)
(72) Inventor: HOSOI, Kenichiro, Ota-ku Tokyo 143-8564 (JP); OCHIAI, Kazunori, Ota-ku Tokyo 143-8564 (JP)
(74) Representative: Haley, Stephen
(86) International application number: PCT/JP2007/065297
(87) International publication number: WO 2008/016149

(57) **Abstract**

An image processor (100) of an image processor system (1A) acquires outputted image data from an image-data output unit (10), and generates first quality-adjusted image data and second quality-adjusted image data each of which has been processed under a different quality adjustment condition. The image processor (100) controls a display (20) to display in a display area a first time-division-comparison image having a first quality adjusted image based on the first quality-adjusted image data and a second time-division-comparison image having a second quality-adjusted image based on the second quality-adjusted image data in an alternately-switching manner. With this arrangement, the first and second quality-adjusted images can be displayed without reducing a scale of the entirety. Thus, a user can view the images processed under different quality-adjustment conditions alternately in the same size as the actual size. In addition, since motion images are switchably displayed, continuously-inputted images such as broadcast can be compared with each other in real time. Accordingly, a user can suitably compare quality of the images.

## Description

### Technical Field

The present invention relates to an image display controller for controlling a display to display an image based on a processed image data generated by performing a predetermined processing on a predetermined image data, an image processor system, an image-display controlling method, a program thereof and a recording medium on which the program is recorded.

### Background Art

According to known arrangements, images respectively subjected to different processings are displayed for user's comparison (e.g., patent documents 1 to 6).

According to an arrangement disclosed in the patent document 1, when a user selects an item of "dual-screen/detail", a quality-adjustment screen is largely divided into a left screen area and a right screen area, and a corrected image based on a corrected set value is displayed in the left screen area. On the other hand, a before-correction image based on a before-correction set value is displayed in the right screen area.
Alternatively, when an item of "parent-child screen/detail" is selected, the quality-adjustment screen is divided into a child screen area formed of a partial region of the quality-adjustment screen and a parent screen area formed of the remaining region of the quality-adjustment screen, and such a corrected image is displayed in the parent screen area. On the other hand, such a before-correction image is displayed in the child screen area.

According to an arrangement disclosed in the patent document 2, a first image and a second image generated by processing a desirable image correction on the first image are switchably displayed at the same display position. Specifically, the first image data and the second image data are stored in an image memory within a monitor controller, and with the first and second image data being alternately read, the first image and the second image are switchably displayed at the same display position.

According to an arrangement disclosed in the patent document 3, two or more images that are based on the same image data but subjected to different color adjustments are alternately displayed in a screen at the same position. Specifically, the original image data is read into an image memory, and the read image data is subjected to a color adjustment based on color-adjustment data inputted by an operator. Then, before-color-adjustment image data and after-color-adjustment image data are written into first to forth image areas of a video RAM in advance. By alternately reading the image data, the images are switchably displayed at the same display position.

According to an arrangement disclosed in the patent document 4, when a user presses an image-quality comparing button, a comparative area of the original image data is automatically retrieved, and a display signal necessary for displaying the comparative area on an image-quality comparison window on an enlarged scale is generated. Then, an image of high quality, an image of standard quality and an image compressed at a high compression rate are respectively generated, and the image-quality comparison window is simultaneously displayed in a child screen in a picture-in-picture format.

According to an arrangement disclosed in the patent document 5, a before-compression image and a compressed/decompressed image are selectively displayable.

According to an arrangement disclosed in the patent document 6, images respectively based on first processed image data and second processed image data, of which difference is in a encode-processing condition, are subjected to the same image processing, and the images are displayed in one display area. Specifically, a plurality of encode processings (image compression) designated by an operator are sequentially performed on the original image data, and the encoded data are sequentially stored in a compression coding data file. Then, the compression data each is subjected to the same image processing designated by the operator, and the images are sequentially displayed in accordance with instruction by the operator.

Patent Document 1: JP-A-2006-13618
Patent Document 2: JP-A-2003-281562
Patent Document 3: JP-A-9-179539
Patent Document 4: JP-A-2004-147181
Patent Document 5: JP-A-2001-28749
Patent Document 6: JP-A-7-131656

### Disclosure of the Invention

### Problems to Be Solved by the Invention

However, since the arrangement of the patent document 1 displays either one of the before-correction image and the corrected image on a reduced scale, a user may not be able to check image quality of the image when displayed on a not-reduced scale. Thus, according to the patent document 1, the image quality may not be suitably compared with one another.
On the other hand, since the arrangements of the patent documents 2 and 3 each switchably display a still image, the arrangements may not be applicable to a real-time comparison of continuously-inputted images such as broadcast.
According to the patent document 4, since the image-quality comparison window for partially display an image compressed at a different compression rate is partially superposed on an image displayed on a screen of single-view display, the original image may be partially hidden behind the window, so that a user may not be able to check the compression of the image while seeing the entirety of the original image. Thus, according to the patent document 4, the compression of the images may not be suitably compared with one another.
Further, the arrangements of the patent documents 4 and 5 each merely display images subjected to different encode-processings. Thus, for instance, degradation unique to encode-processing may be brought to the image quality of the images, so that images of degraded quality may be a target of comparison. Hence, the comparison for selecting a desirable image may not be suitably carried out.
On the other hand, the arrangement of the patent document 6 performs the same image processing on the images subjected to different encode-processings for displaying. According to the arrangement, for instance, blurring of an image can be restrained by performing a sharpness processing on an image compressed at a high compression rate. However, when a sharpness processing is performed on an image compressed at a low compression rate, noises of such an image may become remarkable. Thus, an image having remarkable noises may be a target of comparison, so that a comparison for selecting a desirable image may not be suitably carried out.

An object of the invention is to provide an image display controller with which images based on processed-image data subjected to different processings are suitably comparable, an image processor system, an image-display controlling method, a program thereof and a recording medium on which the program is recorded.

### Means for Solving the Problems

An image display controller according to an aspect of the invention is an image display controller that controls a display to display an image based on a processed image data generated by performing a predetermined processing on a predetermined image data, the image display controller including: an outputted-image acquirer that acquires an outputted image data continuously outputted from an image-data output unit as the image data; a processed-image generation controller that controls a processed-image generator for generating the processed image data to generate a first processed image data and a second processed image data based on the image data acquired by the outputted-image acquirer at different timings, the first processed image data and the second processed image data being different in a processing condition; and a processed-image display controller that controls the display to display an image based on the first processed image data and an image based on the second processed image data in one display area of the display in an alternately-switching manner.

An image display controller according to another aspect of the invention is an image display controller that controls a display to display an image based on a processed image data generated by performing a predetermined processing on a predetermined image data, the processing being an encode processing of the image data, a decode processing of the image data and a quality adjustment processing of the image, the image display controller including: a processed-image generation controller that controls a processed-image generator for generating the processed-image data to generate a first processed image data and a second processed image data of which encode processings and quality adjustment processings are different; and a processed-image display controller that controls the display to display an image based on the first processed image data and an image based on the second processed image data.

An image processor according to a still further aspect of the invention includes: a processed-image generator that generates a processed image data by performing a predetermined processing on a predetermined image data; and the above-described image display controller, the image display controller controlling a display to display an image based on the processed image data generated by the processed-image generator.

An image-display controlling method according to a still further aspect of the invention is a method controlling a display by a computing unit to display an image based on a processed image data generated by performing a predetermined processing on a predetermined image data, the computing unit executing: acquiring an outputted image data continuously outputted from an image-data output unit as the image data; controlling a processed-image generator for generating the processed image data to generate a first processed image data and a second processed image data based on the image data acquired at different timings, the first processed image data and the second processed image data being different in a processing condition; and controlling the display to display an image based on the first processed image data and an image based on the second processed image data in one display area of the display in an alternately-switching manner.

An image-display controlling method according to a still further aspect of the invention is a method for controlling a display by a computing unit to display an image based on a processed image data generated by performing a predetermined processing on a predetermined image data, the processing being an encode processing of the image data, a decode processing of the image data and a quality adjustment processing of the image, the computing unit executing: controlling a processed-image generator for generating the processed-image data to generate a first processed image data and a second processed image data of which encode processings and quality adjustment processings are different; and controlling the display to display an image based on the first processed image data and an image based on the second processed image data.

An image-display controlling program according to a still further aspect of the invention is a program for operating a computing unit to execute the above-described image-display controlling method.

An image-display controlling program according to a still further aspect of the invention is a program for operating a computing unit to function as the above-described image display controller.

A recording medium according to a still further aspect of the invention is a recording medium on which the above-described image-display controlling program is recorded in a computer-readable manner.

### Brief Description of Drawings

Fig. 1 is a block diagram schematically showing an arrangement of an image processor system according to a first exemplary embodiment of the invention.
Fig. 2 schematically shows an arrangement of a quality-adjusting-method selection menu according to the first exemplary embodiment and a second exemplary embodiment of the invention.
Fig. 3 schematically shows an arrangement of an image-quality adjustment menu according to the first and second exemplary embodiments and an eighth exemplary embodiment of the invention.
Fig. 4 schematically shows an arrangement of a comparative-screen-pattern selection menu according to the first, second and eighth exemplary embodiments and third to seventh exemplary embodiments of the invention.
Fig. 5 schematically shows an arrangement of a first time-division-comparison image according to the first, second and eighth exemplary embodiments of the invention.
Fig. 6 schematically shows an arrangement of a second time-division-comparison image according to the first, second and eighth exemplary embodiments of the invention.
Fig. 7 schematically shows an arrangement of a dual-screen-comparison image according to the first, second and eighth exemplary embodiments of the invention.
Fig. 8 schematically shows an arrangement of a comparing-method selection menu according to the first to eighth exemplary embodiments of the invention.
Fig. 9 is a flow chart showing a quality adjustment processing according to the first and second exemplary embodiments of the invention.
Fig. 10 is a flow chart showing a comparison adjustment processing according to the first exemplary embodiment of the invention.
Fig. 11 is a block diagram schematically showing an arrangement of an image processor system according to the second exemplary embodiment of the invention.
Fig. 12 schematically shows an arrangement of a comparison-image selection menu according to the second to seventh exemplary embodiments of the invention.
Fig. 13 is a flow chart showing a comparison adjustment processing according to the second exemplary embodiment of the invention.
Fig. 14 is a block diagram schematically showing an arrangement of an image processor system according to the third exemplary embodiment of the invention.
Fig. 15 schematically shows an arrangement of a recording-condition-setting-method selection menu according to the third to seventh exemplary embodiments of the invention.
Fig. 16 schematically shows an arrangement of a recording-condition-setting selection menu according to the third to seventh exemplary embodiments of the invention.
Fig. 17 schematically shows an arrangement of a first time-division-comparison image according to the third to seventh exemplary embodiments of the invention.
Fig. 18 schematically shows an arrangement of a second time-division-comparison image according to the third to seventh exemplary embodiments of the invention.
Fig. 19 schematically shows an arrangement of a dual-screen-comparison image according to the third to seventh exemplary embodiments of the invention.
Fig. 20 is a flow chart showing a recording-condition setting processing according to the third to seventh exemplary embodiments of the invention.
Fig. 21 is a flow chart showing a comparison setting processing according to the third exemplary embodiment of the invention.
Fig. 22 is a block diagram schematically showing an arrangement of an image processor system according to the fourth exemplary embodiment of the invention.
Fig. 23 is a flow chart showing a comparison setting processing according to the fourth to sixth exemplary embodiments of the invention.
Fig. 24 is a block diagram schematically showing an arrangement of an image processor system according to the fifth exemplary embodiment of the invention.
Fig. 25 is a block diagram schematically showing an arrangement of an image processor system according to the sixth exemplary embodiment of the invention.
Fig. 26 is a block diagram schematically showing an arrangement of an image processor system according to the seventh exemplary embodiment of the invention.
Fig. 27 schematically shows an arrangement of a degradation simulator according to the seventh exemplary embodiment of the invention.
Fig. 28 schematically shows an arrangement of a degradation-mode selection menu according to the seventh exemplary embodiment of the invention.
Fig. 29 is a flow chart showing a comparison setting processing according to the seventh exemplary embodiment of the invention.
Fig. 30 is a block diagram schematically showing an arrangement of an image processor system according to the eighth exemplary embodiment of the invention.
Fig. 31 is a block diagram schematically showing an arrangement of an image processor system according to a ninth exemplary embodiment of the invention.
Fig. 32 is a block diagram schematically showing an arrangement of an image processor system according to another exemplary embodiment of the invention.
Fig. 33 is a block diagram schematically showing an arrangement of an image processor system according to a still further exemplary embodiment of the invention.
Fig. 34 is a block diagram schematically showing an arrangement of an image processor system according to a still further exemplary embodiment of the invention.
Fig. 35 is a block diagram schematically showing an arrangement of an image processor system according to a still further exemplary embodiment of the invention.
Fig. 36 is a block diagram schematically showing an arrangement of a dual-screen-comparison image according to a still further exemplary embodiment of the invention.
Fig. 37 is a block diagram schematically showing an arrangement of a dual-screen-comparison image according to a still further exemplary embodiment of the invention.

### Explanation of Codes

10, 11...image-data output unit
20... display
21... display area
30... remote controller serving as input unit included in image processor and image display controller
32A... image-switch operation button serving as operating section
32B... other-processing operation button serving as operating section
42... recording medium
100, 200, 300, 400, 500, 600, 700, 800, 900, 1000, 1100, 1200, 1300...image processor
120... interface serving as processing-signal output unit
130... quality-adjustment condition memory serving as adjustment-condition-information storage
140, 840... image processing section serving as processed-image generator and outputted-image acquirer
150, 240, 340, 440, 540, 640, 740, 940... image combining section serving as processed-image display controller included in image display controller and computing unit
160, 250, 350, 450, 550, 650, 750, 860, 950... controller serving as image display controller and computing unit
162, 252, 352, 452, 552, 652, 752, 862, 952... comparison-image generation controller serving as processed-image generation controller and selective-processing recognizer
163, 353... comparison-image display controller included in processed-image display controller
165... selectively-quality-adjusted-image generation controller serving as selectively-processed-image generation controller
210... first image memory serving as outputted-image storage
220A, 220B... second image memory serving as generation-image storage
230... selector serving as outputted-image acquirer
320, 420, 520, 620, 720... first selector serving as outputted-image acquirer
330, 430, 530, 630, 730, 930, 1030, 1130, 1230, 1330... image processing section serving as processed-image generation controller
331, 531, 631, 731... encoder
333,533, 734... decoder
334, 735... delay circuit as delay unit
355, 455... recording medium
431... first encoder
433, 634... first decoder
434... second encoder
435, 635... second decoder
534... third image memory serving as storage-and-output processor
633... third image memory serving as storage-and-output processor
936... image-quality adjuster serving as processed-image generation controller
J23B... number line
J23C... first adjustment-degree graphic serving as first figure (displayed-image processing information)
J23D... second adjustment-degree graphic serving as second figure (non-displayed-image processing information)
J32, J42... first and second recording-setting-condition name information as displayed-image processing information

### Best Mode for Carrying Out the Invention

### [First Exemplary Embodiment]

A first exemplary embodiment of the invention will be described below with reference to the attached drawings.
In the first exemplary embodiment and a second exemplary embodiment described later, an image processor system including an image display controller and an image processor according to the aspect of the invention is exemplified. The image processor system displays two images of which conditions for image-quality adjustment processing (processing) are mutually different.
The image(s) is exemplarily a motion image(s).

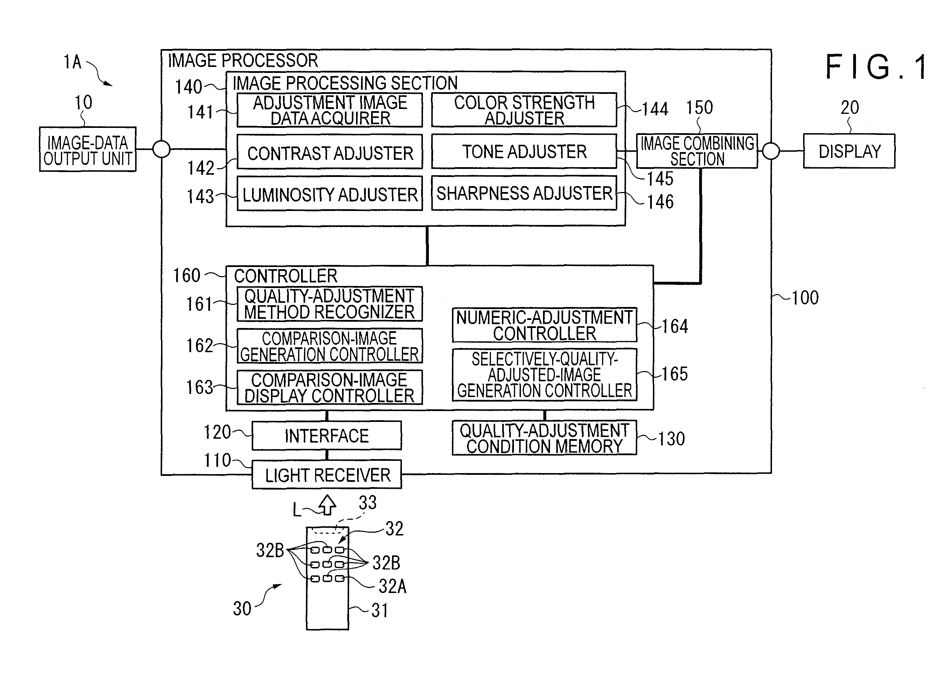

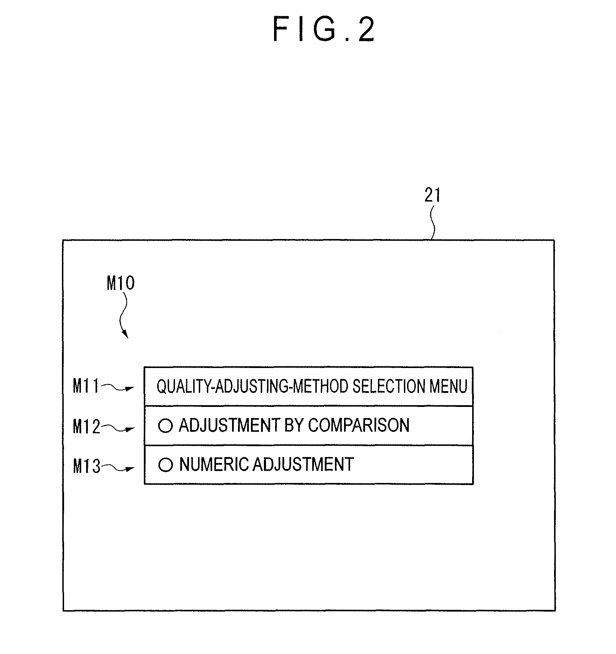

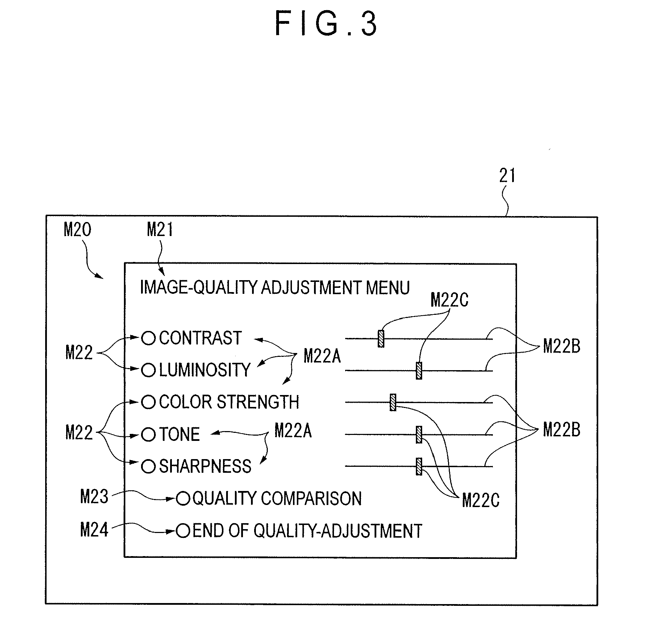

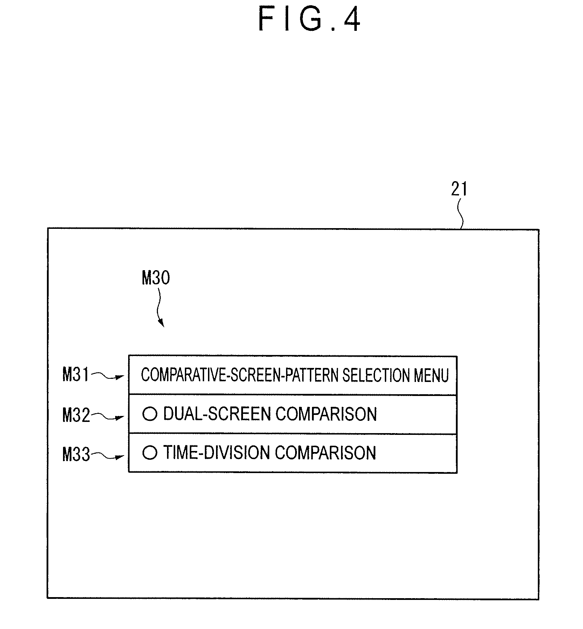

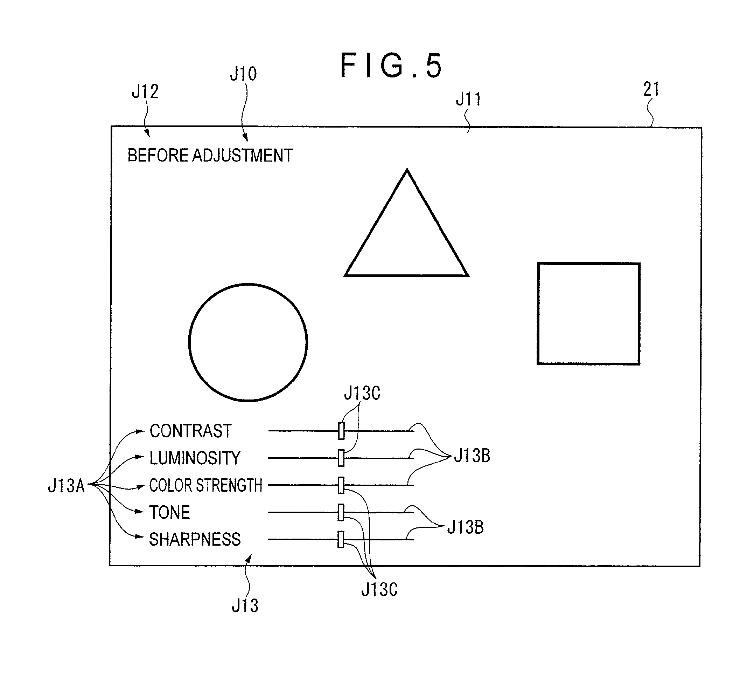

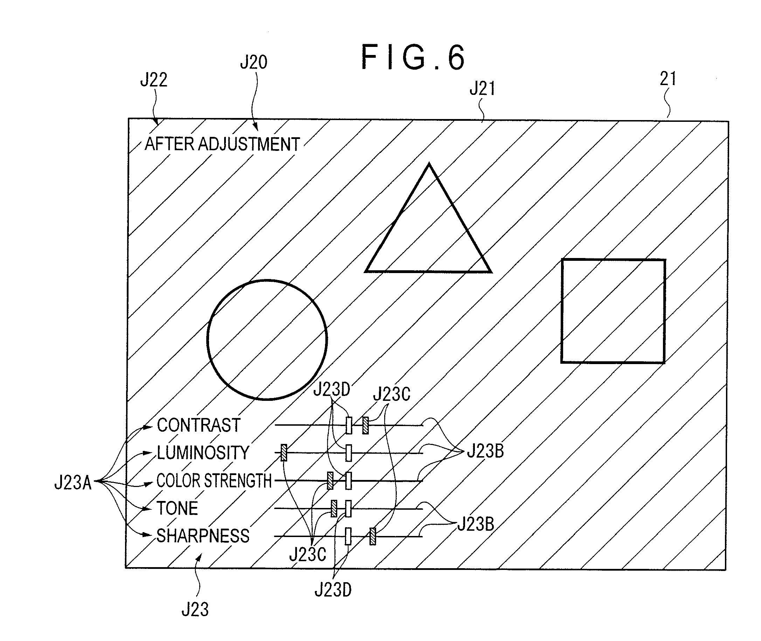

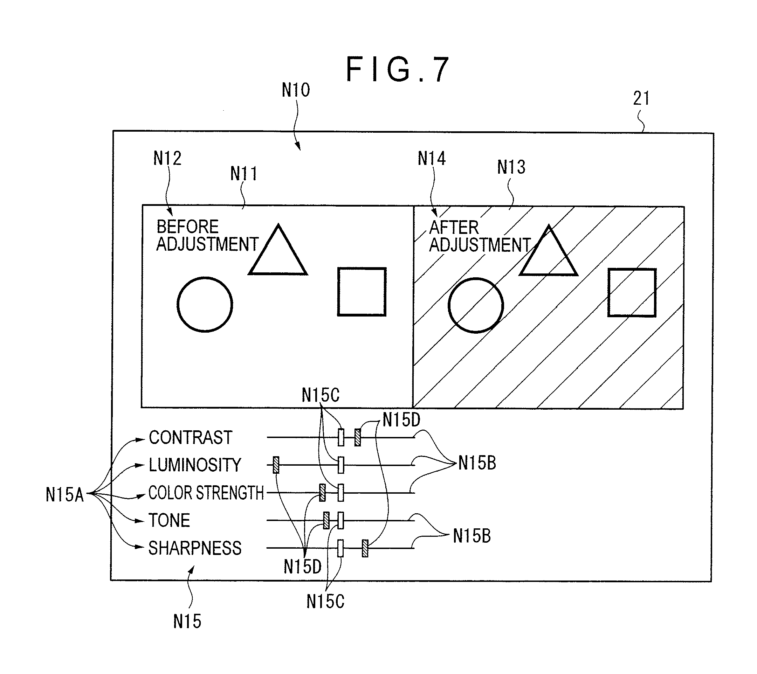

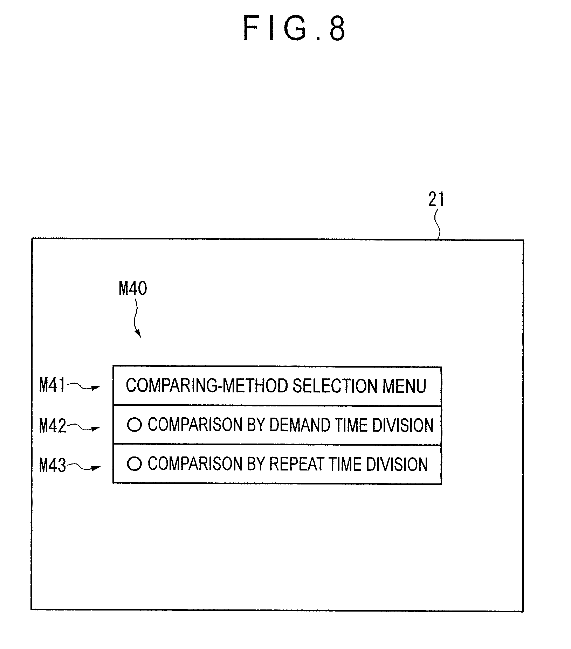

Fig. 1 is a block diagram schematically showing an arrangement of an image processor system. Fig. 2 schematically shows an arrangement of a quality-adjusting-method selection menu. Fig. 3 schematically shows an arrangement of a quality adjustment menu. Fig. 4 schematically shows an arrangement of a comparative-screen-pattern selection menu. Fig. 5 schematically shows an arrangement of a first time-division-comparison image. Fig. 6 schematically shows an arrangement of a second time-division-comparison image. Fig. 7 schematically shows an arrangement of a dual-screen-comparison image. Fig. 8 schematically shows an arrangement of a comparing-method selection menu.

### [Arrangement of Image Processor System]

In Fig. 1, the numeral 1A denotes the image processor system.
The image processor system 1A includes: an image-data output unit 10; a display 20; a remote controller 30 (an input unit included in an image processor and an image display controller); and an image processor 100.
In Fig. 1 as well as Figs. 11, 14, 22, 24, 25 and 26, lines for connecting each component are shown in two different line weights. The thinner lines each represent a data line for sending and receiving data such as outputted image data for displaying images. In other words, the thinner lines each represent a line through which the image data is conveyed to the display 20 while being subjected to several signal processings during a flow of the input from the image-data output unit 10 to the output to the display 20. The thicker lines each represent a control line for sending and receiving a signal such as a control signal for displaying images. In other words, the thicker lines each represent a data line for other than the image data. It should be noted that the output image data and the like is inputted into each functional block from the left and outputted from the right in Figs. 1,11,14,22,24,25 and 26.

A data output terminal of the image-data output unit 10 is connected to the image processor 100 by a data line. The image-data output unit 10 continuously acquires the output image data for displaying a motion image on the display 20 via airwaves or from a recording medium such as a HD (hard disk), a DVD (digital versatile disc), an optical disc and a memory card. The image-data output unit 10 also continuously outputs the output image data to the image processor 100.

A data input terminal of the display 20 is connected to the image processor 100 by a data line. The display 20 is controlled by the image processor 100 to display on a screen an image based on later-described quality-adjusted image data (processed image data) from the image processor 100 and an image based on a selectively-quality-adjusted image data (selectively-processed image data) from the image processor 100. Hereinafter in this description, the image based on the quality-adjusted image data will be referred to as quality-adjusted image while the image based on the selectively-quality-adjusted image data will be referred to as selectively-quality-adjusted image. Examples of the display 20 include a liquid crystal panel, an organic EL (electro luminescence) panel, a PDP (plasma display panel), a CRT (cathode-ray tube), an FED (field emission display) and an electrophoretic display panel.

The remote controller 30 includes a case 31, an operation unit 32 and operation-signal output unit 33.
The case 31 is exemplarily shaped like a thin and substantially rectangular box.
The operation unit 32 includes: an image-switch operation button 32A (operating section) partially projecting from a surface of the case 31; and a plurality of other-processing operation buttons 32B (operating sections) juxtaposed to the image-switch operation button 32A. The image-switch operation button 32A is input-operated at the time of controlling the image processor 100 to switch the quality-adjusted image displayed on the display 20. The other-processing operation buttons 32B are input-operated at the time of controlling the image processor 100 to perform processings other than the processing in correspondence with the image-switch operation button 32A. Examples of such processings include quality adjustment processing and display processing for displaying various menu screens.
The operation-signal output unit 33 is provided in an internal space of the case 31. The operation-signal output unit 33 generates operation signals based on input operations on the image-switch operation button 32A and the other-processing operation button 32B, and outputs the generated operation signals to the image processor 100 via infrared ray L.
Instead of using the remote controller 30, various setting items may be inputted through, for instance, input operations on a touch panel provided on the display 20 or voice input operations.

The image processor 100 includes: a light receiver 110; an interface 120 serving as a processing-signal output unit; a quality-adjustment condition memory 130 serving as an adjustment condition storage; an image processing section 140 serving as an outputted image acquirer and also as a processed-image generator; an image combining section 150 serving as a processed-image display controller included in the image display controller and a computing unit; and a controller 160 serving as the image display controller and the computing unit.

The light receiver 110 is partially exposed to the outside of a case body (not shown) of the image processor 100. A signal output terminal of the light receiver 110 is connected to a signal input terminal of the interface 120 by a control line.
Upon receipt of the infrared ray L from the remote controller 30, the light receiver 110 outputs to the interface 120 the operation signal transmitted with the infrared ray L.

A signal output terminal of the interface 120 is connected to a control-signal input terminal of the controller 160 by a control line.
The interface 120 acquires the operation signal outputted from the light receiver 110 and outputs to the controller 160 a processing signal for commanding that a processing in correspondence with the operation signal be conducted.

A signal input/output terminal of the quality-adjustment condition memory 130 is connected to a control-signal input/output terminal of the controller 160 by a control line.
In the quality-adjustment condition memory 130, a first quality-adjustment condition information (adjustment condition information) recorded with a first quality-adjustment condition and a second quality-adjustment condition information (adjustment condition information) recorded with a second quality-adjustment condition that is different from the first quality-adjustment condition are stored in a manner readable as necessary. The first quality-adjustment condition information and the second quality-adjustment condition information are updated as necessary under the control by the controller 160. The first and second quality-adjustment condition informations are recorded with later-described items adjustable by the image processing section 140 as the first and second adjustment conditions respectively. The items are numeric values representing adjustment conditions (hereinafter referred to as adjustment value) of contrast, chromatic luminosity, color strength, tone and contour sharpness (hereinafter referred to as sharpness).

A data input terminal of the image processing section 140 is connected to the data output terminal of the image-data output unit 10 by a data line. A data output terminal of the image processing section 140 is connected to the data input terminal of the image combining section 150 by a data line. A control-signal input terminal of the image processing section 140 is connected to the control-signal output terminal of the controller 160 by a control line.
The image processing section 140 is controlled by the controller 160 to perform on the outputted image data from the image-data output unit 10 a processing of image-quality adjustment necessary for an image based on the outputted image data (hereinafter referred to as outputted image). The image processing section 140 includes: an adjustment image data acquirer 141; a contrast adjuster 12; a luminosity adjuster 143; a color strength adjuster 144; a tone adjuster 145; and a sharpness adjuster 146.

The adjustment image data acquirer 141 acquires the outputted image data from the image-data output unit 10.
Upon acquiring the first and second quality-adjustment condition informations from the controller 160, the contrast adjuster 142 recognizes the adjustment values of contrast recorded in the first and second quality-adjustment condition informations, so that the contrast adjuster 142 adjusts the contrast of an outputted image of the outputted image data to a contrast accorded with the recognized adjustment values each.
The luminosity adjuster 143 adjusts the chromatic luminosity of the outputted image to a chromatic luminosity accorded with each of the adjustment values of the first and second quality-adjustment condition informations.
The color strength adjuster 144 adjusts the color strength of the outputted image to a color strength accorded with each of the adjustment values of the first and second quality-adjustment condition informations.
The tone adjuster 145 adjusts the tone of the outputted image to a tone accorded with each of the adjustment values of the first and second quality-adjustment condition informations.
The sharpness adjuster 146 adjusts the sharpness of the outputted image to a sharpness accorded with each of the adjustment values of the first and second quality-adjustment condition informations.

The image processing section 140 generates: first quality-adjusted image data by performing on the outputted image data a quality adjustment processing under the first quality adjustment condition based on the first quality-adjustment condition information; and second quality-adjusted image data by performing on the outputted image data a quality adjustment processing under the second quality adjustment condition based on the second quality-adjustment condition information. Then, the image processing section 140 outputs the generated data to the image combining section 150. In the image processing section 140 where the quality adjustment processing is performed on the outputted image data that is continuously inputted thereinto, either one of the first and second quality-adjusted image data is initially generated and the other one thereof is subsequently generated. Accordingly, as will be described later, when the first and second quality-adjusted images are to be simultaneously displayed and a screen frequency for the outputted image data from the image-data output unit 10 is exemplarily set at 60Hz, first and second quality adjustment processings respectively based on the first and second quality-adjustment condition informations are both required to be performed at 120Hz (i.e., at the double frequency).
The image processing section 140 generates selectively-quality-adjusted image data by performing on the outputted image data a quality adjustment processing under a quality adjustment condition selected by a user. Then, the image processing section 140 outputs the generated data to the image combining section 150.
As an alternative arrangement, the image processing section 140 may include at least one of the contrast adjuster 142, the luminosity adjuster 143, the color strength adjuster 144, the tone adjuster 145 and the sharpness adjuster 146.

A data output terminal of the image combining section 150 is connected to the data input terminal of the display 20 by a data line. A control-signal input terminal of the image combining section 150 is connected to the control-signal output terminal of the controller 160 by a control line.
The image combining section 150 is controlled by the controller 160 to display a quality-adjusting-method selection menu M10 on the display area 21 of the display as shown in Fig. 2. The quality-adjusting-method selection menu M10 includes: a menu content information M11 for indicating that the quality-adjusting-method selection menu M10 is displayed; a comparison-adjustment selective information M12 to be selected when the image quality of the image is to be adjusted while a quality before the adjustment and a quality after the adjustment are being compared with each other (hereinafter referred to as comparative adjustment); and a numeric-adjustment selective information M13 to be selected when the image quality of the image is to be adjusted in terms of numeric value (hereinafter referred to as numeric adjustment). The informations M11 to M13 are vertically in juxtaposition.
The image combining section 150 displays a cursor (not shown) superposed on the comparison-adjustment selective information M12 or the numeric-adjustment selective information M13, and moves the cursor as necessary under the control by the controller 160.

The image combining section 150 acquires the first quality-adjustment condition information from the controller 160 to display an image-quality-adjustment menu M20 on the display area 21 as shown in Fig. 3. The image-quality adjustment menu M20 includes: a menu content information M21; five quality-adjustment selective informations M22 to be selected when the image quality is adjusted; a quality-comparison selective information M23 to be selected when the adjusted image is displayed; and an adjustment-termination selective menu M24 to be selected when the adjustment of the image quality is terminated. The informations M21 to M24 are vertically in juxtaposition.
The quality-adjustment selective informations M22 include: an adjustment item information M22A for indicating adjustment items for the image quality; a number line M22B displayed to the right of the adjustment item information M22A and serving as a reference for indicating an adjustment degree; and an adjustment-degree graphic M22C shaped like a rectangle and displayed on the number line M22B. The adjustment-degree graphic M22C is displayed on the number line M22B at such a position as to correspond to each adjustment value of the first quality-adjustment condition information. The position of the adjustment-degree graphic M22C indicates an adjustment degree set by a user.
The image combining section 150 displays a cursor (not shown) superposed on one of the five quality-adjustment selective informations M22, the quality-comparison selective information M23 and the adjustment-termination selective information M24, and moves the cursor as necessary under the control by the controller 160. While the cursor is displayed at a position superposed on one of the quality-adjustment selective informations M22, the image combining section 150 moves the adjustment-degree graphic M22C on the number line M22B in a left-and-right direction under the control by the controller 160 as necessary.

As shown in Fig. 4, the image combining section 150 further displays a comparative-screen-pattern selection menu M30 on the display area 21. The comparative-screen-pattem selection menu M30 includes: a menu content information M31; a dual-screen-comparison selective information M32 to be selected when a quality-adjusted image based on the first quality-adjustment image data (hereinafter referred to as first quality-adjusted image) and a quality-adjusted image based on the second quality-adjustment image data (hereinafter referred to as second quality-adjusted image) are juxtaposed to each other for comparison (hereinafter referred to as dual-screen comparison); and a time-division-comparison selective information M33 to be selected when the first quality-adjusted image and the second quality-adjusted image are displayed in an alternately-switching manner (hereinafter referred to as time-division comparison). The informations M31 to M33 are vertically in juxtaposition.
The image combining section 150 displays a cursor (not shown) superposed on the dual-screen-comparison selective information M32 or the time-division-comparison selective information M33, and moves the cursor as necessary under the control by the controller 160.

The image combining section 150 acquires the first and second quality-adjusted image data from the image processing section 140 and the first and second quality-adjustment condition informations from the controller 160, and displays a first time-division-comparison image J10 as shown in Fig. 5 and a second time-division-comparison image J20 as shown in Fig. 6 in an alternately-switching manner as necessary.
The first and second time-division-comparison images J10 and J20 include: the first and second quality-adjusted images J11 and J21 that are substantially as large as the display area 21; first and second adjustment-condition name informations J12 and J22 displayed at the upper left of the first and second quality-adjusted images J11 and J21 for indicating names of adjustment conditions for the first and second quality-adjusted images; and first and second adjustment degree information J13 and J23 displayed at the lower left of the first and second quality-adjusted images J11 and J21 for indicating adjustment degrees of the first and second quality-adjusted images.

Incidentally, since a movement between the outputted images is slow, the first and second quality-adjusted images J11 and J21 each are exemplarily formed from a perfect circle, a regular triangle and quadrate to be mutually the same. Oblique lines shown in the entirety of the second quality-adjusted image J21 are for indicating that the second quality-adjusted image J21 is an image formed by mainly reducing the luminosity of the first quality-adjusted image J11, and not for indicating that the second quality-adjusted image J21 actually contains the oblique lines.
As described above, when the movement between the outputted images is fast, the first and second quality-adjusted images J11 and J21 each are an image of a different scene.

Like the quality-adjustment selective informations M22, the first adjustment degree information J13 includes an adjustment item information J13A, a number line J13B and a first adjustment-degree graphic J13C for indicating an adjustment degree of the first quality-adjusted image J11. The first adjustment-degree graphic J13C is displayed at a position corresponding to the adjustment value of the first quality-adjustment condition information.
The second adjustment-degree information J23 includes: an adjustment item information J23A; a number line J23B; a first adjustment-degree graphic J23C for indicating an adjustment degree of the second quality-adjusted image J21 (a first figure serving as a displayed-image processing information); and a second adjustment-degree graphic J23D for indicating the adjustment degree of the first quality-adjusted image J11 (a second figure serving as a non-displayed-image processing information). In other words, the second adjustment-degree information J23 indicates not only the adjustment degree of the displayed second quality-adjusted image J21 but also the adjustment degree of the non-displayed first quality-adjusted image J11.
The first adjustment-degree graphic J23C and the second adjustment-degree graphic J23D are displayed in different colors on the number line J23B at positions based on the adjustment values of the second and first quality-adjusted condition informations. In other words, the first and second adjustment-degree graphics J23C and J23D are differently displayed. The first and second adjustment-degree graphics J23C and J23D may be differently sized from each other, or either one of them may be displayed in a blinking manner.

The image combining section 150 acquires the first and second quality-adjusted image data from the image processing section 140 and the first and second quality-adjustment condition informations from the controller 160 to display a dual-screen-comparison image N10 on the display area 21 as shown in Fig. 7.
The dual-screen-comparison image N10 includes: a first minified quality-adjusted image N11 displayed at the upper left of the display area 21; a first adjustment-condition name information N12 displayed at the upper left of the first minified quality-adjusted image N11; a second minified quality-adjusted image N13 displayed at the upper right of the display area 21; a second adjustment-condition name information N14 displayed at the upper left of the second minified quality-adjusted image N13; and an adjustment degree information N15 displayed below the first minified quality-adjusted image N11.
The first and second minified quality-adjusted images N11 and N13 are formed by reducing the scales of the first and second quality-adjusted images J11 and J21 without changing the aspect ratio. In other words, when the movement between the outputted images is fast, the first and second minified quality-adjusted images N11 and N21 each are an image of a different scene.
The adjustment degree information N15 includes: an adjustment item information N15A; a number line N15B; a first adjustment-degree graphic N15C for indicating an adjustment degree of the first minified quality-adjusted image N11; and a second adjustment-degree graphic N15D for indicating an adjustment degree of the second minified quality-adjusted image N13.
The first adjustment-degree graphic N15C and the second adjustment-degree graphic N15D are displayed in different colors at positions based on the adjustment values of the first and second quality-adjusted condition informations.

As shown in Fig. 8, the image combining section 150 further displays a comparing-method selection menu M40 on the display area 21. The comparing-method selection menu M40 includes: a menu content information M41; a demand-time-division-comparison selective information M42 to be selected when the first and second time-division-comparison images J10 and J20 are displayed in an alternately-switching manner for comparison based on the input operation on the remote controller 30 (hereinafter referred to as demand time-division comparison); and a repeat-time-division-comparison selective information M43 to be selected when the first and second time-division-comparison images J10 and J20 are displayed in an alternately-switching manner for comparison at predetermined time intervals (e.g., every 5 second). The informations M41 to M43 are vertically in juxtaposition.
The image combining section 150 displays a cursor (not shown) superposed on the demand-time-division-comparison selective information M42 or the repeat-time-division-comparison selective information M43, and moves the cursor as necessary under the control by the controller 160.

Upon acquiring the selectively-quality-adjusted image data from the image processing section 140, the image combining section 150 displays on the display 20 a selectively-quality-adjusted image based on the selectively-quality-adjusted image data.

The controller 160 controls the image processing section 140 and the image combining section 150 as necessary. As shown in Fig. 1, the controller 160 includes: a quality-adjustment method recognizer 161; a comparison-image generation controller 162 serving as a processed-image generation controller and selective-processing recognizer; a comparison-image display controller 163 included in the processed-image display controller; a numeric-adjustment controller 164; and a selectively-quality-adjusted-image generation controller 165 serving as a selectively-processed-image generation controller. The above-listed components may be configured as programs.

When, for instance, a user makes an input operation on the other-processing operation button 32B and the quality-adjustment method recognizer 161 acquires the processing signal from the interface 120 for commanding that a quality adjustment be performed, the quality-adjustment method recognizer 161 controls the image combining section 150 to display the quality-adjusting-method selection menu M10. Then, when recognizing that the user has made an input operation for selecting the comparison-adjustment selective information M12 (e.g., recognizing that the user has made an input operation while the cursor is superposed on the comparison-adjustment selective information M12), the quality-adjustment method recognizer 161 outputs a comparison adjustment signal of that effect to the comparison-image generation controller 162 and the comparison-image display controller 163. On the other hand, when recognizing that the numeric-adjustment selective information M13 is selected, the quality-adjustment method recognizer 161 outputs a numeric adjustment signal of that effect to the comparison-image display controller 164

Upon acquiring the comparison adjustment signal from the quality-adjustment method recognizer 161, the comparison-image generation controller 162 controls the image combining section 150 to display the image-quality adjustment menu M20. Then, when recognizing that the adjustment-degree graphic M22C of a desirable quality-adjustment selective information M22 is requested to be moved, the comparison-image generation controller 162 controls the image combining section 150 to move the adjustment-degree graphic M22C.
When recognizing that the quality-comparison selective information M23 is selected, the comparison-image generation controller 162 records the adjustment value accorded with the position of the adjustment-degree graphic M22C at this time in the second quality-adjustment condition information. In other words, the second quality-adjustment condition information is updated. Then, the comparison-image generation controller 162 outputs the first and second quality-adjustment condition informations to the image processing section 140 and controls the image processing section 140 to generate the first and second quality-adjusted image data. The first and second quality-adjusted condition informations are further outputted to the image combining section 150.
On the other hand, when recognizing that the adjustment-termination selective information M24 of the image-quality adjustment menu M20 is selected, the comparison-image generation controller 162 recognizes that the user has selected the second quality-adjustment condition and updates the content of the first quality-adjustment condition information by the content of the second quality-adjustment condition information.

Upon acquiring the comparison adjustment signal from the quality-adjustment method recognizer 161, the comparison-image display controller 163 controls the image combining section 150 to display the comparative-screen-pattern selection menu M30. When recognizing that the dual-screen-comparison selective information M32 is selected, the comparison-image display controller 163 controls the image combining section 150 to display the dual-screen-comparison image N10.
On the other hand, when recognizing that the time-division-comparison selective information M33 is selected, the comparison-image display controller 163 controls the image combining section 150 to display the first time-division-comparison image J10. Then, the comparison-image display controller 163 controls the image combining section 150 to display the comparing-method selection menu M40 as necessary. When recognizing that the demand-time-division-comparison selective information M42 is selected, the comparison-image display controller 163 determines whether or not a switching display is demanded. Every time recognizing that the switching display is demanded, i.e., the image-switch operation button 32A is input-operated, the comparison-image display controller 163 controls the image combining section 150 to display the first and second time-division-comparison images J10 and J20 in a switching manner.
Alternatively, when recognizing that the repeat-time-division-comparison selective information M43 of the comparing-method selection menu M40 is selected, the comparison-image display controller 163 controls the image combining section 150 to switch between the first and second time-division-comparison images J10 and J20 exemplarily every 5 second.

Upon acquiring the numeric adjustment signal from the quality-adjustment method recognizer 161, the numeric-adjustment controller 164 outputs, for instance, the first quality-adjustment condition information to the image processing section 140 and the image combining section 150, and controls the image combining section 150 to display a numeric adjustment image (not shown) having the same configuration as the first time-division-comparison image J10. When recognizing that an adjustment-degree graphic configured the same as the adjustment-degree graphic M22C is requested to be moved, the numeric-adjustment controller 164 moves the adjustment-degree graphic and changes the first quality-adjusted image to the second quality-adjusted image. When recognizing that the numeric adjustment is requested to be terminated, the numeric-adjustment controller 164 updates the content of the first quality-adjustment condition information by the adjustment value accorded with position of the adjustment-degree graphic.

The selectively-quality-adjusted-image generation controller 165 controls the display 20 to display a selectively-quality-adjusted image generated by performing on the outputted image a quality-adjustment processing under the quality adjustment condition selected by the user.
Specifically, when recognizing that the selectively-quality-adjusted image is requested to be displayed, the selectively-quality-adjusted-image generation controller 165 outputs the first quality-adjustment condition information to the image processing section 140. Then, by controlling the image processing section 140 to perform on the outputted image data from the image data output unit 10 a quality adjustment processing under the quality adjustment condition accorded with the first quality-adjustment condition information (i.e., under the quality adjustment condition selected by the user), selectively-quality-adjusted image data is generated. Then, the selectively-quality-adjusted image data is outputted to the image combining section 150, and the display 20 displays the selectively-quality-adjusted image.

### [Operation(s) of Image Processor System]

Now, operation(s) of the image processor system 1A will be described with reference to the attached drawings.

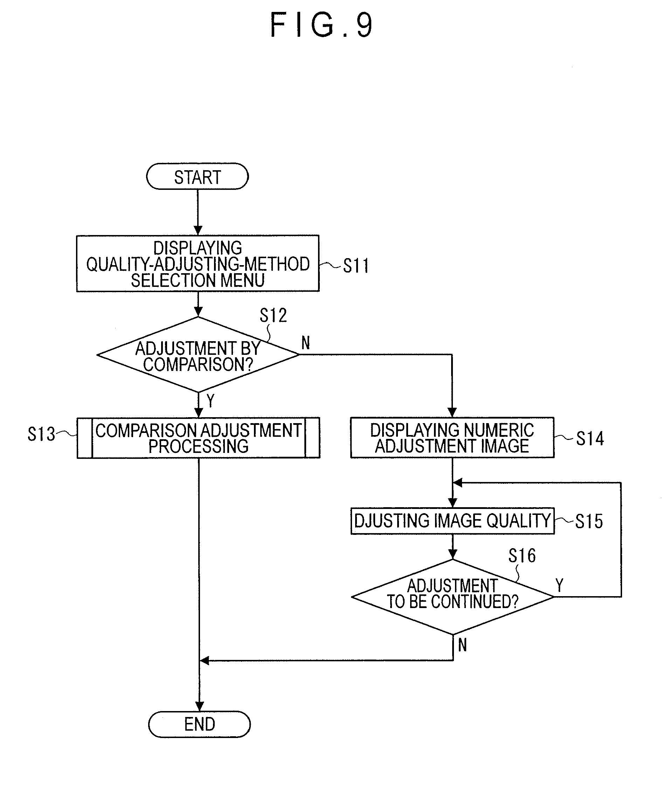

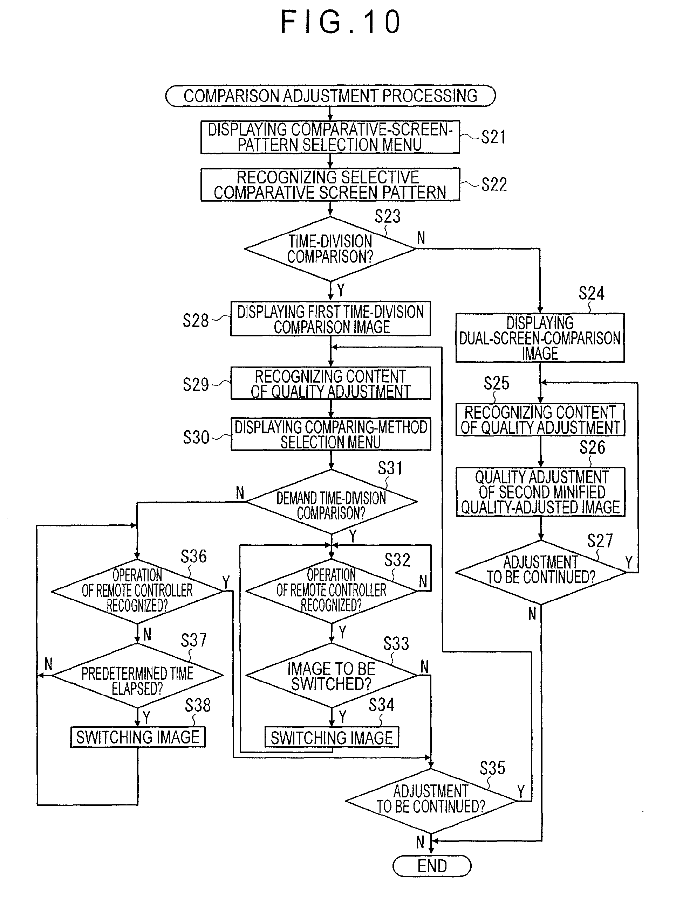

Fig. 9 is a flow chart schematically showing a quality adjustment processing. Fig. 10 is a flow chart schematically showing a comparison adjustment processing.

First of all, a user makes an input operation on the other-processing operation button 32B of the remote controller 30, and makes an input setting of a request for the display of the quality-adjusting-method selection menu M10.
As shown in Fig. 9, when recognizing this input setting, the image processor 100 of the image processor system 1A displays the quality-adjusting-method selection menu M10 (step S11) and determines whether or not a comparison adjustment is selected (step S12).
When determining that the comparison adjustment is selected in the step S12, a comparison adjustment processing is performed (step S 13), and then is terminated.
On the other hand, when determining that the numeric adjustment is selected in the step S12, a numeric adjustment image is displayed (step S14). Subsequently, the quality-adjusting processing is performed in accordance with the input setting by the user (step S15), and whether an input setting to continue the adjustment is made or not is determined (step S16).
When determining that the adjustment is to be continued in the step S16, the processing of the step S 15 is performed. On the other hand, when determining that the adjustment is to terminated in the step S16, the quality adjustment condition at this time is recorded in the first quality-adjustment condition information as the quality adjustment condition selected by the user. Then, the processing is terminated.

As shown in Fig. 10, in the comparison adjustment processing in the step S13, the image processor 100 displays the comparative-screen-pattern selection menu M30 (step S21), and performs a processing for recognizing the selection of a dual-screen comparison or a time-division comparison, i.e., a processing of recognizing the selected comparative screen pattern (step S22). Then, whether the time-division comparison is selected or not is determined (step S23).
When determining that the dual-screen comparison is selected in the step S23, the dual-screen comparison image N10 is displayed (step S24). Subsequently, the image-quality adjustment menu M20 is displayed as necessary, and a processing for updating the second quality-adjustment condition information, i.e., a processing of recognizing a content of the quality adjustment, is performed based on the input setting (step S25). Thereafter, based on the recognized content, the quality-adjusting processing is performed on the second minified quality-adjusted image N13 (step S26), and whether an input setting to continue the adjustment is made or not is determined (step S27). When determining that the adjustment is to be continued in the step S27, the processing of the step S25 is performed. On the other hand, when determining that the adjustment is to terminated in the step S27, the quality adjustment condition at this time is recorded in the first quality-adjustment condition information. Then, the processing is terminated.

On the other hand, when determining that a time-division comparison is selected in the step S23, the image processor 100 displays the first time-division-comparison image J10 (step S28). Then, the quality adjustment menu M20 is displayed as necessary, a content of the quality adjustment is recognized based on the input setting (step S29). Subsequently, the comparing-method selection menu M40 is displayed (step S30), and whether a demand-time-division comparison is selected or not is determined (step S31).

When determining that the demand-time-division comparison is selected in the step S31, whether the remote controller 30 is operated or not is determined (step S32). Then, when determining that the remote controller is not operated in the step S32, the processing of the step S32 is performed. On the other hand, when determining that the remote controller is operated in the step S32, whether the image-switch operation button 32A is operated or not, i.e., whether the operation is for switching the image or not, is determined (step S33).
When determining that the operation is for switching the image in the step S33, a processing for switching the displayed image (e.g., a processing for switching the first time-division comparison image J10 to the second time-division comparison image J20) is performed (step S34). Then the processing of the step S32 is performed.
On the other hand, when determining that the operation is not for switching the image in the step S33, whether the adjustment is to be continued or not is determined (step S35). When determining that the adjustment is to be continued in the step S35, the processing of the step S29 is performed. On the other hand, when determining that the adjustment is to be terminated in the step S35, the quality adjustment condition at this time is recorded in the first quality-adjustment condition information as the quality adjustment condition selected by the user. Then, the processing is terminated.

Further, when determining that the repeat-time-division comparison is selected in the step S31, whether the remote controller 30 is operated or not is determined (step S36). Then, when determining that the remote controller is operated in the step S36, the processing of the step S35 is performed. On the other hand, when determining that the remote controller is not operated in the step S36, whether a predetermined time has elapsed or not is determined (step S37). Then, when determining that the predetermined time has not elapsed in the step S37, the processing of the step S36 is performed. On the contrary, when determining that the predetermined time has elapsed in the step S37, the processing of switching the image is performed (step S38). Then, the processing of the step S36 is performed.

### [Advantage(s) of First Exemplary Embodiment]

As described above, according to the first exemplary embodiment, the image processor 100 of the image processor system 1A acquires the outputted image data from the image-data output unit 10, and generates the first quality-adjusted image data and the second quality-adjusted image data each of which has been processed under a different quality adjustment condition. Then, the first time-division-comparison image J10 having the first quality-adjusted image J11 accorded with the first quality-adjusted image data and the second time-division-comparison image J20 having the second quality-adjusted image J21 accorded with the second quality-adjusted image data are displayed on the display area 21 of the display 20 in an alternately-switching manner.
With this arrangement, the first and second quality-adjusted images J11 and J21 can be displayed without reducing the scale of the entirety. Thus, a user can view the images processed under different quality-adjustment conditions alternately in the same size as the actual size. In addition, since motion images are switchably displayed, continuously-inputted images such as broadcast can be compared with each other in real time. Accordingly, a user can properly compare the images in terms of their quality.

It should be noted that, even when a first outputted image data acquired from the image-data output unit 10 at a first timing and a second outputted image data acquired at a second timing different from the first timing are subjected to the same image quality adjustment and displayed in one display area 21 in an alternately-switching manner, the first and second quality-adjusted images J11 and J21 to be displayed are different from each other because the first and second outputted image data are different from each other. However, the first and second outputted image data are typically related to continuous scenes in most cases. Accordingly, by performing a different image-quality adjustment on each of the first and second outputted image data and displaying the first and second outputted image data in the display area 21 in an alternately-switching manner, a comparison of the displayed images subjected to the different image quality adjustments is possible.
Incidentally, by storing the first outputted image data in a memory once and then displaying in the display area 21 in an alternately-switching manner a third outputted image data generated by performing a first image adjustment processing on the first outputted image data and a fourth outputted image data generated by performing a second adjustment processing on the first outputted image data, the displayed images respectively originated from the first outputted image data that are mutually the same but subjected to the different quality adjustment processings can be more accurately compared.
However, it is typical that image-quality adjustment is performed on images that are actually and currently viewed. In view of the above, it is practically more convenient to perform the image-quality adjustment on the currently-viewed images as in this exemplary embodiment because it is possible to perform the image-quality adjustment without missing the currently-viewed images.

On the other hand, for performing the image quality adjustment on still images, there is no need to perform the image quality adjustment on currently-viewed images or currently-broadcasted images. Thus, it is natural to store the images in a memory once, and to compare the displayed images after performing different image quality adjustment on the same image data. Even when image data recorded in a video equipment is used, the comparison of the displayed images originated from the same data requires reproduction by the video equipment to be temporarily stopped. This operation is cumbersome. When images that are currently being broadcasted are concerned, temporarily stopping the broadcasting is no longer a possible option. In these respects, demands in motion images are different from those in still images.
When motion images are compared with each other in terms of image quality through a dual-screen display, a comparison of the third outputted image data generated by performing the first quality adjustment processing on the first outputted image data with the fourth outputted image data generated by performing the second quality adjustment processing on the first outputted image data is possible. In the image quality adjustment through the dual-screen display, a problem that the image quality adjustment cannot be performed on the currently-broadcasted images is no longer at issue.
In other words, while an object of the invention is to suitably compare motion images outputted from the image-data output unit 10, such a problem no longer persists when still images are targeted.

When a user selects the demand-time-division comparison, the first and second time-division-comparison images J10 and J20 are displayed in an alternately-switching manner based on the input operations on the remote controller 30.
With this arrangement, the user can conduct the display switching at the user's desirable timing. Thus, a more suitable comparison of images is possible.

Every time an input operation is made on the image-switch operation button 32A solely provided on the remote controller 30, the first and second time-division-comparison images J10 and J20 are displayed in an alternately-switching manner.
With this arrangement, once the user makes an input operation on the solely-provided image-switch operation button 32A, the images can be displayed in an alternately-switching manner. Thus, a more facilitated comparison of images is possible.

When the user selects the repeat-time-division comparison, the first and second time-division-comparison images J10 and J20 are displayed in an alternately-switching manner at a predetermined time intervals.
With this arrangement, images can be displayed in an alternately-switching manner without requiring the user to perform an operation for display switching. Thus, a more facilitated comparison of images is possible.

On the first and second time-division-comparison images J10 and J20, the first and second adjustment degree informations J13 and J23 for respectively indicating the quality adjustment conditions for the first and second quality-adjusted images J11 and J21 are displayed.
With this arrangement, the images subjected to the image quality adjustments can be displayed together with the adjustment conditions. Thus, a difference in the adjustment condition between the two images can be easily recognized, thereby contributing to a more suitable comparison of images.

On the second adjustment degree information J23 of the second time-division-comparison image J20, the quality adjustment condition for the first quality-adjusted image J11 and the quality adjustment condition for the second quality-adjusted image J21 are displayed.
With this arrangement, only by use of the second time-division-comparison image J20, a difference in the adjustment condition between the two images can be easily recognized, thereby contributing to a more suitable comparison of images.

In addition, the quality adjustment conditions for the first and second quality-adjusted images J11 and J21 are indicated by the number line J23B and the second and first adjustment-degree graphics J23D and J23C positioned on the number line J23B at the positions accorded with the quality adjustment conditions.
Accordingly, a user can recognize the difference between the quality adjustment conditions more easily by referencing to the positional relationship of the first and second adjustment-degree graphics J23C and J23D than by referencing to the numeric indication of the quality adjustment conditions.

The first and second adjustment-degree graphics J23C and J23D are displayed in different colors.
With this arrangement, a user can recognize the difference between the adjustment conditions more easily.

The first and second quality-adjusted image data are generated by performing the quality adjustment processing on the outputted image data outputted from the image data output unit 10.
With this arrangement, by use of the outputted image data that are being outputted from the image-data output unit 10, the first and second quality-adjusted images J11 and J21 can be displayed. Thus, there is no need to provide a storage arrangement dedicated to storing the image data solely used for generation of the first and second quality-adjusted image data. Accordingly, the arrangement of the image processor system 1A can be more simplified.

After the quality adjustment condition has been set, the quality adjustment processing is performed on the outputted image data outputted from the image-data output unit 10 under the set quality adjustment condition, and the selectively-quality-adjusted image is displayed.
Accordingly, the outputted images continuously outputted from the image-data output unit 10 can be processed under the quality adjustment condition suitably set through the comparison of the images, and a user can view the outputted images processed under the condition.

### [Second Exemplary Embodiment]

A second exemplary embodiment of the invention will be described below with reference to the attached drawings.
The components for performing the same processings as in the first embodiment will be denoted with the same names and the same numerals, and the description thereof will be omitted or simplified. Also, the components for performing substantially the same processings as in the first embodiment will be denoted with the same names, and the description thereof will be omitted or simplified.

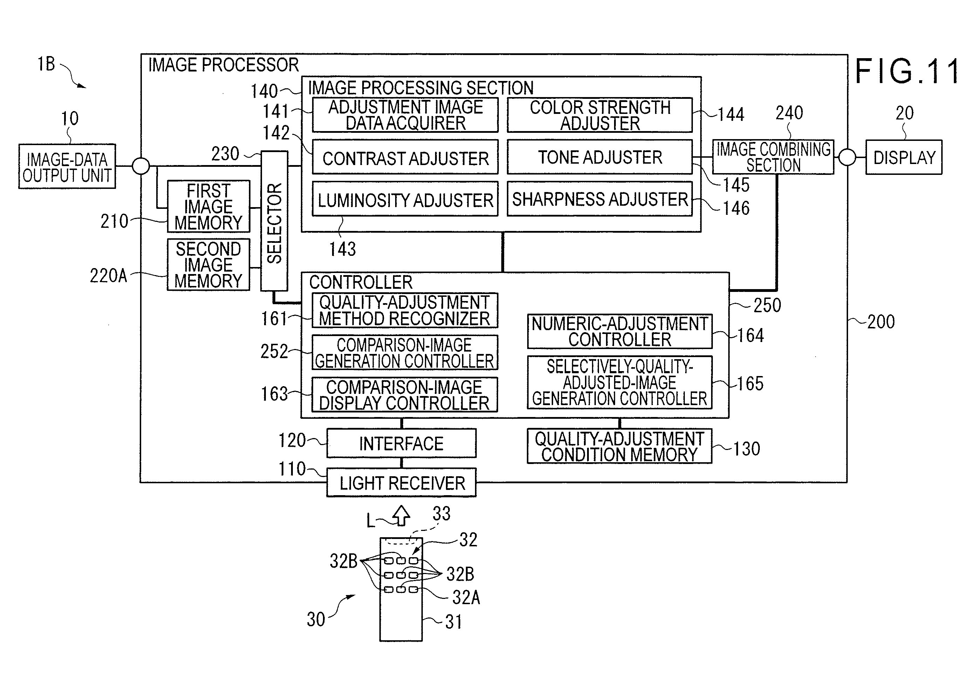

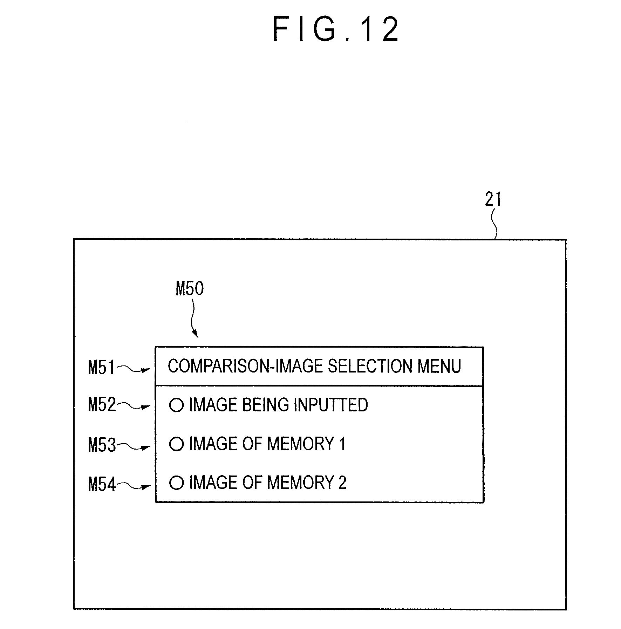

Fig. 11 is a block diagram schematically showing an arrangement of an image processor system. Fig. 12 schematically shows an arrangement of a comparison-image selection menu.

### [Arrangement of Image Processor System]

In Fig. 11, the numeral 1 B denotes the image processor system.
The image processor system 1B includes an image-data output unit 10, a display 20, a remote controller 30, and an image processor 200.
The image processor 200 includes: a light receiver 110; an interface 120; a quality-adjustment condition memory 130; a first image memory 210 serving as an outputted-image storage; a second image memory 220A serving as a generation-image storage; a selector 230 serving as an outputted-image acquirer; an image processing section 140 serving as a processed-image generator; an image combining section 240 serving as a processed-image display controller included in the image display controller and a computing unit; and a controller 250 serving as the image display controller and the computing unit.

A data input terminal of the first image memory 210 is connected to a data output terminal of the image-data output unit 10 by a data line. A data output terminal of the first image memory 210 is connected to a data input terminal of the selector 230 by a data line.
In the first image memory 210, an outputted image data from the image-data output unit 10 is stored in a manner readable as necessary. The outputted image data stored in the first image memory 210 is updated to an outputted image data inputted from the image-data output unit 10 as necessary.

A data output terminal of the second image memory 220A is connected to a data input terminal of the selector 230 by a data line.
In the second image memory 220A, a reference image data (an image data for generation) is stored in a manner readable as necessary. The reference image data includes a contrast reference image data, a luminosity reference image data, a color-strength reference image data, a tone reference image data, and a sharpness reference image data. The above-listed image data are used as an adjustment reference of contrast, chromatic luminosity, color strength, tone and sharpness, respectively.
The contrast reference image data is provide with, for instance, a black-and-white pattern. The luminosity reference image data, the color-strength reference image data, and the tone reference image data are, for instance, colored in a specific color. The sharpness reference image data is provided, for instance, with a lattice pattern.
Incidentally, the reference image data may include at least one of the contrast reference image data, the luminosity reference image data, the color-strength reference image data, the tone reference image data, and the sharpness reference image data. Alternatively, the reference image data is either a still image or a motion image.

Three data input terminals of the selector 230 are connected to the data output terminals of the image-data output unit 10, the first image memory 210 and the second image memory 220A, respectively, by data lines. A data output terminal of the selector 230 is connected to a data input terminal of the image processing section 140 by a data line. A control-signal input terminal of the selector 230 is connected to a control-signal output terminal of the controller 250 by a control line.
The selector 230 is controlled by the controller 250 to perform an output processing for outputting the outputted image data from the image-data output unit 10 to the image processing section 140. The selector 230 also performs an output processing for outputting the outputted image data from the image-data output unit 10 stored in the first image memory 210 to the image processing section 140. Further, the selector 230 performs an output processing for outputting the reference image data stored in the second image memory 220A to the image processing section 140.
Specifically, the selector 230 selects one of the image data acquired from the image-data output unit 10, the first image memory 210 and the second image memory 220A based on a first selective signal from the controller 250. Then, the selector 230 outputs the selected image data to the image processing section 140.
Incidentally, when the reference image data is outputted, at least one of the contrast reference image data, the luminosity reference image data, the color-strength reference image data, the tone reference image data, and the sharpness reference image data may be outputted.

A data output terminal of the image processing section 140 is connected to a data input terminal of the image combining section 240 by a data line. A control-signal input terminal of the image processing section 140 is connected to a control-signal output terminal of the controller 250 by a control line.
The image processing section 140 is controlled by the controller 250 to perform a quality-adjustment processing on an outputted image accorded with the outputted image data directly acquired from the image-data output unit 10 via the selector 230, an image accorded with the outputted image data acquired from the first image memory 210 via the selector 230 (hereinafter referred to as a temporary recorded image), and an image accorded with the reference image data (hereinafter referred to as a reference image), and to output a first quality-adjusted image data and a second quality-adjusted image data to the image combining section 240. Also, the image processing section 140 generates a selectively-quality-adjusted image data and outputs the generated selectively-quality-adjusted image data to the image combining section 240.
The image processing section 140 initially generates one of the first and second quality-adjusted image data, and then generates the other quality-adjusted image data as described above. When the outputted image, which is a motion image, is selected as an image used for comparison adjustment (hereinafter referred to as a comparison image), the first and second quality-adjusted images each may be an image of a different scene.
On the other hand, when the temporary recorded image or the reference image is selected as the comparison image, the outputted image data and reference image data which are identical with the image data stored in the first and second image memory 210 and 220A can be acquired from the selector 230 at different timings. Accordingly, even when the temporary recorded image or the reference image is a motion image, the first and second quality-adjusted images each are an image of the same scene.

A data output terminal of the image combining section 240 is connected to a data input terminal of the display 20 by a data line. A control-signal input terminal of the image combining section 240 is connected to a control-signal output terminal of the controller 250 by a control line.
The image combining section 240 is controlled by the controller 250 to display a quality-adjusting method selection menu M10, an image-quality adjustment menu M20, a comparative-screen-pattern selection menu M30, and a comparing-method selection menu M40.
As shown in Fig. 12, the image combining section 240 displays a comparison-image selection menu M50 on a display area 21. The comparison-image selection menu M50 includes: a menu content information M51; an ongoing-inputted image selective information M52 to be selected when an outputted image being outputted from the image-data output unit 10 is used as the comparison image; a memory 1 image selective information M53 to be selected when the temporary recorded image of the first image memory 210 is used as the comparison image; a memory 2 image selective information M54 to be selected when the reference image of the second image memory 220A is used as the comparison image. The informations M51 to M54 are vertically in juxtaposition.
The image combining section 240 displays a cursor (not shown) superposed on one of the ongoing-inputted image selective information M52, the memory 1 image selective information M53, and the memory 2 image selective information M54, and moves the cursor as necessary under the control by the controller 250.
Also, the image combining section 240 displays a first time-division-comparison image J10, a second time-division-comparison image J20 and a dual-screen-comparison image N10.

As shown in Fig. 11, the controller 250 includes: a quality-adjustment method recognizer 161; a comparison-image generation controller 252 serving as a processed-image generation controller and selective-processing recognizer; a comparison-image display controller 163; a numeric-adjustment controller 164; and a selectively-quality-adjusted-image generation controller 165. The above-listed components may be configured as programs.

The comparison-image generation controller 252 performs the following processing in addition to substantially the same processing as the comparison-image generation controller 162 of the first exemplary embodiment.
Specifically, the comparison-image generation controller 252 controls the image combining section 240 to display the comparison-image selection menu M50 as necessary. Then, when recognizing that the ongoing-inputted image selective information M52 is selected, the comparison-image generation controller 252 outputs to the selector 230 a first selective signal for commanding that the outputted image data being outputted from the image-data output unit 10 be outputted to the image processing section 140. When recognizing that the memory 1 image selective information M53 is selected, the comparison-image generation controller 252 outputs to the selector 230 a first selective signal for commanding that the outputted image data from the image-data output unit 10 stored in the first image memory 210 be outputted to the image processing section 140. Further, when recognizing that the memory 2 image selective information M54 is selected, the comparison-image generation controller 252 outputs to the selector 230 a first selective signal for commanding that the reference image data stored in the second image memory 220A be outputted to the image processing section 140.

### [Operation(s) of Image Processor System]

Now, operation(s) of the image processor system 1B will be described with reference to the attached drawings.

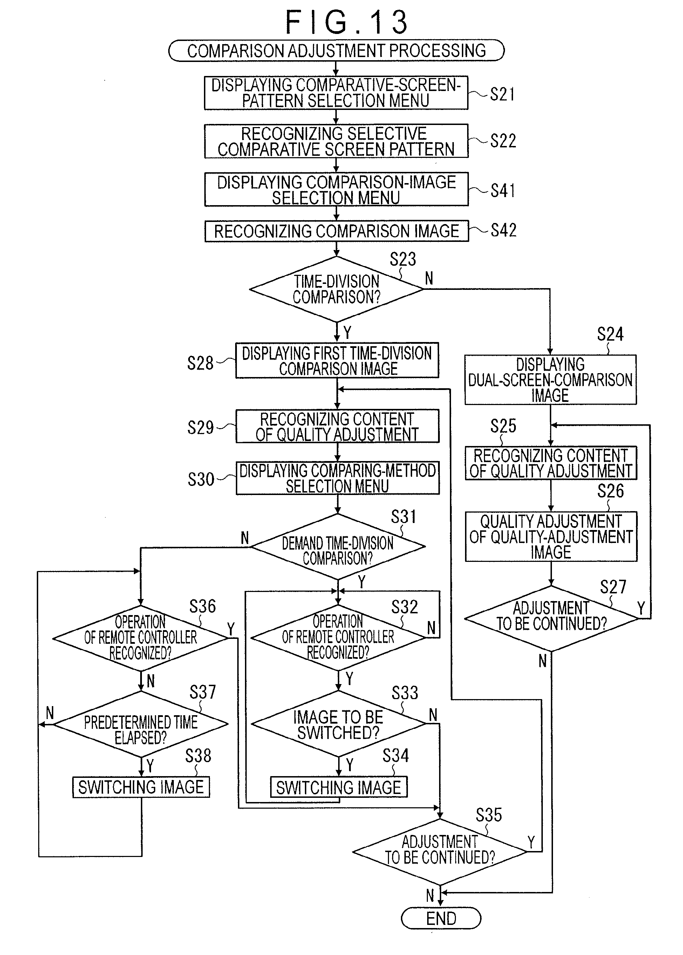

Fig. 13 is a flow chart showing a comparison adjustment processing.
It should be noted that, in the image processor system 1B, the same processing is performed as the quality-adjustment processing shown in the flow chart of Fig. 9 according to the first exemplary embodiment, and only a comparison-adjustment processing in a step S 13 is different from that of the first exemplary embodiment. In the comparison adjustment processing shown in Fig. 13, the same operation(s) as in the first exemplary embodiment will be denoted with the same numerals, the description of which will be simplified.

The image processor 200 of the image processor system 1B performs the processings of the steps S11 to S16 as shown in Fig. 9.
As shown in Fig. 13, in the comparison-adjustment processing in the step S13, after performing the processing of the steps S21 and S22, the image processor 200 displays the comparison-image selection menu M50 (step S41), and recognizes that one of the outputted image, the temporary recorded image and the reference image is selected as the comparison image (step S42). Then, the image processor 200 performs the processing of the steps S23 to S38.

### [Advantage(s) of Second Exemplary Embodiment]

In the second exemplary embodiment as described above, the following advantages can be obtained in addition to the advantages of the first exemplary embodiment.

Specifically, the image processor 200 includes the first image memory 210 that stores the outputted image data from the image-data output unit 10. The first and second quality-adjusted image data are generated based on the outputted image data stored in the first image memory 210.
Accordingly, the image processing section 140, in which one of the first and second quality-adjusted image data is initially generated and then the other quality-adjusted image data is generated, can acquire the identical outputted image data stored in the first image memory 210 at different timings. Thus, even when the outputted image data is a motion image, the first and second quality-adjusted images each can be an image of the same scene, which allows a more suitable comparison of images. Further, the outputted image data which a user has determined is suitable for, e.g., a comparison of images, can be stored in the first image memory 210. Thus, a more suitable comparison of images is possible at a user's desirable timing.

The image processor 200 further includes the second image memory 220A for storing the reference image data, and generates the first and second quality-adjusted image data based on the reference image data.
Accordingly, the image processing section 140, in which one of the first and second quality-adjusted image data is initially generated and then the other quality-adjusted image data is generated, can acquire the identical reference image data stored in the second image memory 220A at different timings. Thus, the first and second quality-adjusted images each can be an image of the same scene, which allows a more suitable comparison of images. Even when the image-data output unit 10 is not in operation, a quality-adjustment-condition setting processing can be performed.

The reference image data includes the contrast reference image data, the luminosity reference image data, the color-strength reference image data, the tone reference image data, and the sharpness reference image data. The above-listed data are respectively used as an adjustment reference of contrast, chromatic luminosity, color strength, tone and sharpness.
Thus, a more suitable comparison of images can be made based on an image used as an adjustment reference of contrast, chromatic luminosity, color strength, tone and sharpness.

### [Third Exemplary Embodiment]

A third exemplary embodiment of the invention will be described below with reference to the attached drawings.
In the third exemplary embodiment and the forth to seventh exemplary embodiments described later, an image processor system according to the invention, in which two images processed under different conditions for encode processing (processing) of image data are displayed, is exemplified.
The image(s) is either a still image(s) or a motion image(s).
The components for performing the same processings as in the first and second exemplary embodiments will be denoted with the same names and the same numerals, and the description thereof will be omitted or simplified. Further, the components for performing substantially the same processings as in the first and second exemplary embodiments will be denoted with the same names, and the description thereof will be omitted or simplified.

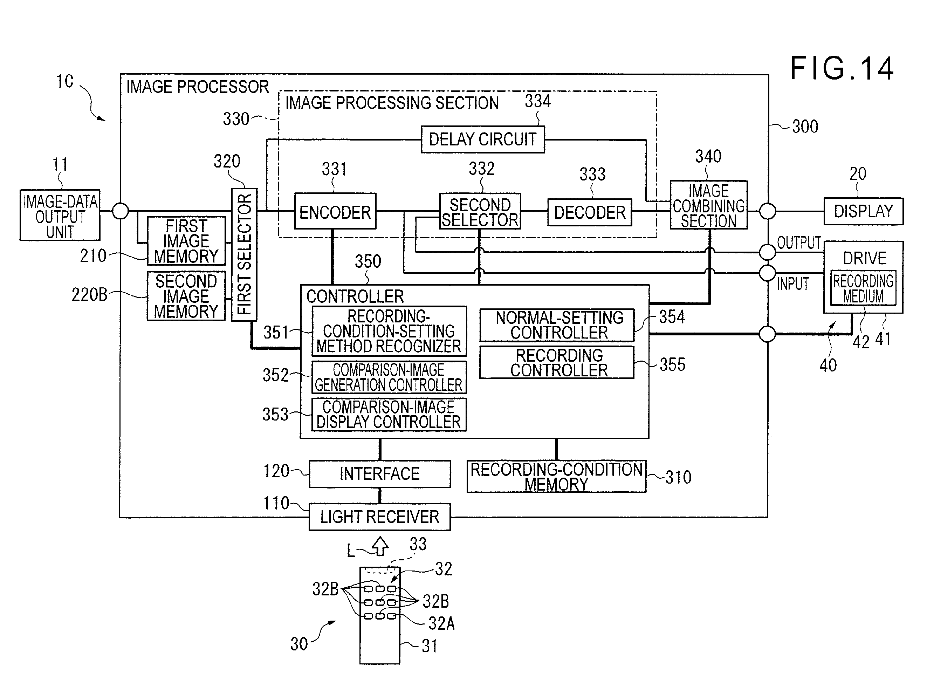

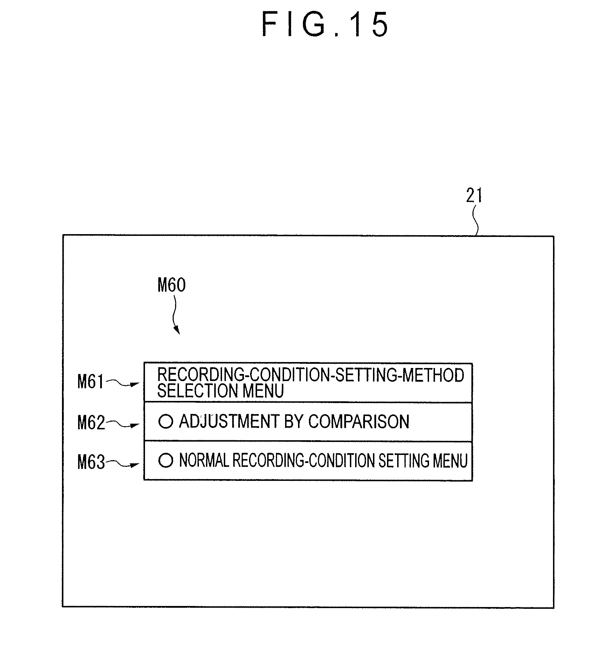

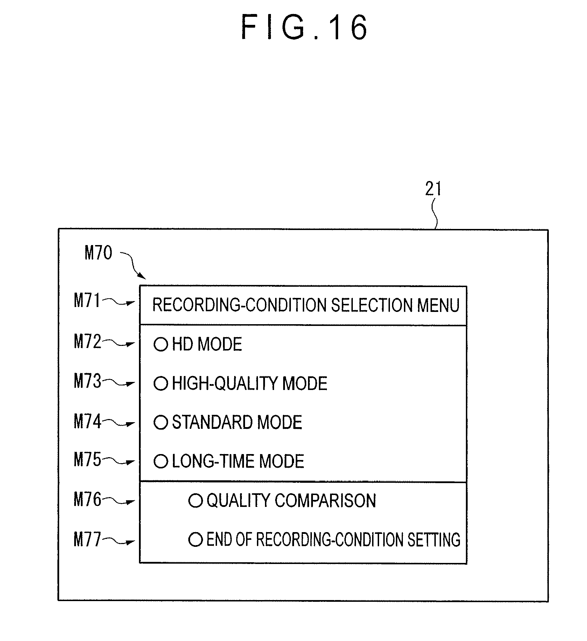

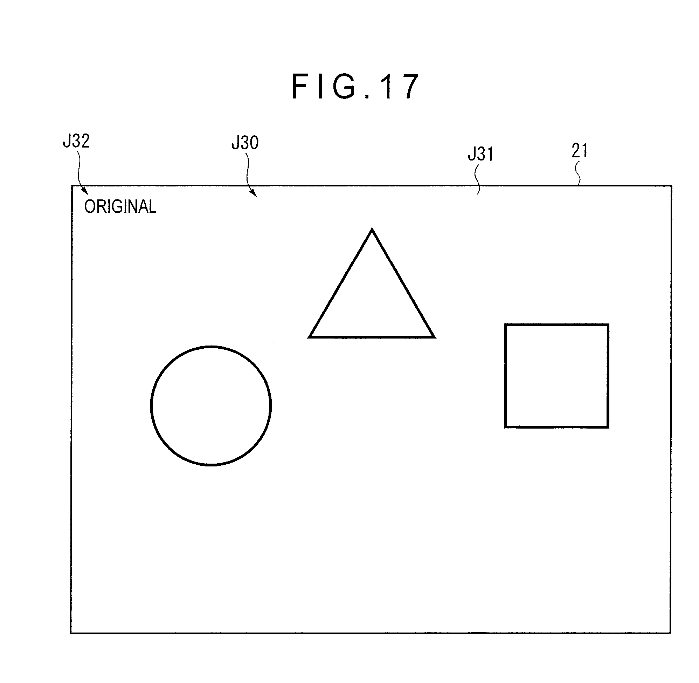

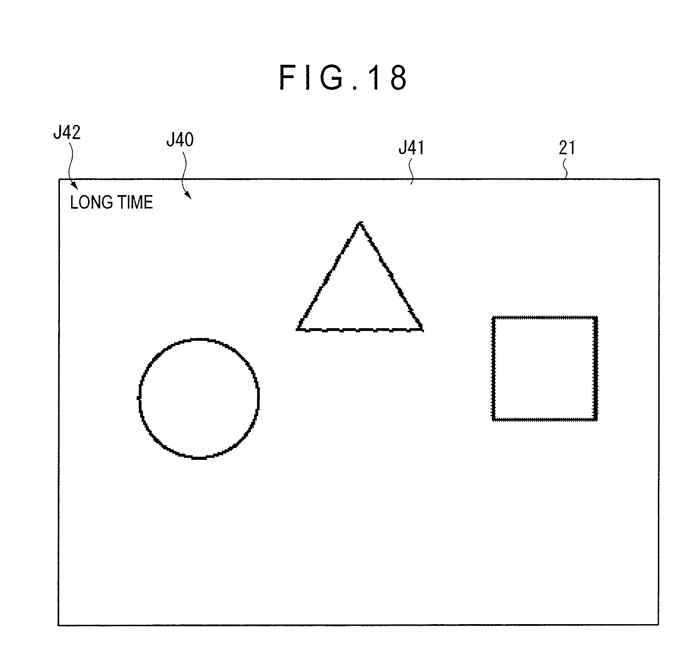

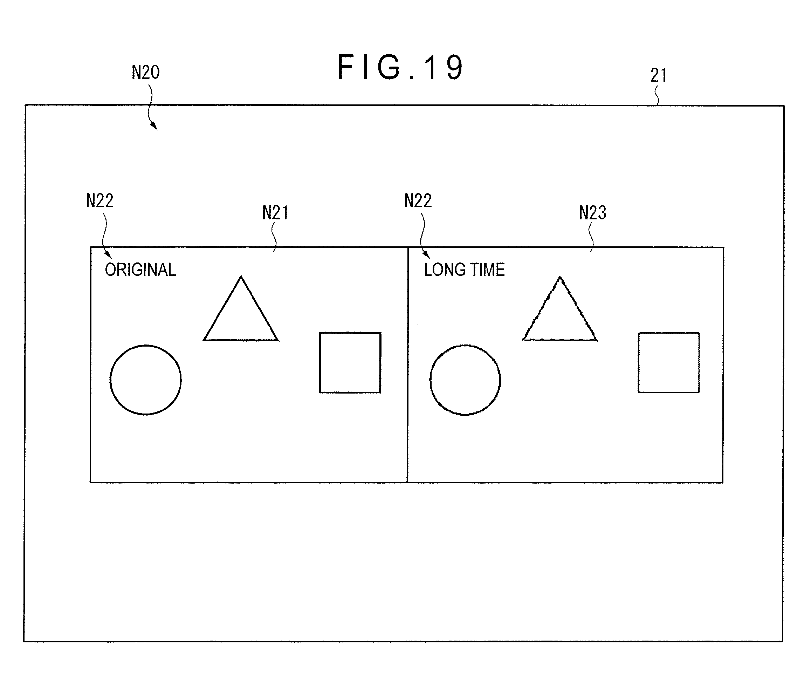

Fig. 14 is a block diagram schematically showing an arrangement of the image processor system. Fig. 15 schematically shows an arrangement of a recording-condition-setting-method selection menu. Fig. 16 schematically shows an arrangement of a recording-condition setting menu. Fig. 17 schematically shows an arrangement of a first time-division-comparison image. Fig. 18 schematically shows an arrangement of a second time-division-comparison image. Fig. 19 schematically shows an arrangement of a dual-screen-comparison image.

### [Arrangement of Image Processor System]

In Fig. 14, the numeral 1C denotes the image processor system.
The image processor system 1C includes: an image-data output unit 11; a display 20; a remote controller 30 (an input unit included in an image processor and an image display controller); a storage 40; and an image processor 300.

A data output terminal of the image-data output unit 11 is connected to the image processor 300 by a data line and outputs to the image processor 300 an outputted image data used for displaying a predetermined image on the display 20. The image-data output unit 11 may continuously acquire an output image data for displaying a motion image via airwaves or from a recording medium such as a DVD. Alternatively, the image-data output unit 11 may acquire an outputted image data for displaying a still image.

A data input terminal of the display 20 is connected to the image processor 300 to display on a screen an image accorded with later-described record-adjusted image data (first processed image data) from the image processor 300 and an image accorded with a record-unadjusted image data (second processed image data) from the image processor 300. Hereinafter in this description, the image accorded with the record-adjusted image data will be referred to as record-adjusted image while the image accorded with the record-unadjusted image data will be referred to as record-unadjusted image. Examples of the display 20 include a liquid crystal panel, an organic EL panel, a PDP, a CRT, an FED and an electrophoretic display panel.

The remote controller 30 includes a case 31, an operation unit 32 and an operation-signal output unit 33.
The operation unit 32 includes an image-switch operation button 32A (operating section) and a plurality of other-processing operation buttons 32B (operation sections). The image-switch operation button 32A is input-operated at the time of controlling the image processor 300 to switch between the record-adjusted image and the record-unadjusted image displayed on the display 20. The other-processing operation buttons 32B are input-operated at the time of controlling the image processor 300 to perform processings other than the processing in correspondence with the image-switch operation button 32A. Examples of such processings include a recording-condition setting processing and display processing for displaying various menu screens.
The operation-signal output unit 33 generates operation signals based on input operations on the image-switch operation button 32A and the other-processing operation buttons 32B, and outputs the generated operation signals to the image processor 300 via infrared ray L.
Instead of using the remote controller 30, various setting items may be inputted through, for instance, input operations on a touch panel provided on the display 20 or voice input operations.

The storage 40 includes a drive 41 connected to the image processor 300. A data input terminal of the drive 41 is connected to a data output terminal of a later-described encoder 331 by a data line. A data output terminal of the drive 41 is connected to a data input terminal of a later-described second selector 332 by a data line. A control-signal input terminal of the drive 41 is connected to a control-signal output terminal of a later-described controller 350 by a control line.
The drive 41 records an outputted image data from the image processor 300 on a recording medium 42 in a manner readable as necessary. Examples of the recording medium 42 may be an HD, a DVD, an optical disc and a memory card.

The image processor 300 includes: a light receiver 110; an interface 120 serving as a processing-signal output unit; a first image memory 210 serving as an outputted-image storage; a second image memory 220B serving as a generation-image storage; a recording-condition memory 310; a first selector 320 serving as an outputted-image acquirer; an image processing section 330 serving as a processed-image generator; an image combining section 340 serving as a processed-image display controller included in an image display controller and a computing unit; and a controller 350 serving as the image display controller and the computing unit.

The light receiver 110 is partially exposed to the outside of a case body (not shown) of the image processor 300. A signal output terminal of the light receiver 110 is connected to a signal input terminal of the interface 120 by a control line.
Upon receipt of infrared ray L from the remote controller 30, the light receiver 110 outputs to the interface 120 an operation signal transmitted with the infrared ray L.

A signal output terminal of the interface 120 is connected to a control-signal input terminal of the controller 350 by a control line to acquire an operation signal outputted from the light receiver 110 and output to the controller 350 a processing signal for commanding that a processing in correspondence with the operation signal be conducted.

A data input terminal of the first image memory 210 is connected to a data output terminal of the image-data output unit 11 by a data line. Also, a data output terminal of the first image memory 210 is connected to a data input terminal of the first selector 320 by a data line.
In the first image memory 210, an outputted image data from the image-data output unit 11 is recorded in a manner readable as necessary. The outputted image data recorded in the first image memory 210 is updated to an outputted image data newly inputted from the image-data output unit 11 as necessary.

A data output terminal of the second image memory 220B is connected to the data input terminal of the first selector 320 by a data line.
In the second image memory 220B, a reference image data (an image data for generation) is recorded in a manner readable as necessary. The reference image data is used as a reference for setting conditions for encode processing. Examples of the reference image data include a data for displaying an image that easily makes differences depending on a condition for encode processing, for instance, an image having a specific shape such as a lattice pattern, a straight line, a curved line, a perfect circle, and a square. The reference image data is either a still image or a motion image.

A signal input/output terminal of the recording-condition memory 310 is connected to a control-signal input/output terminal of the controller 350 by a control line.
The recording-condition memory 310 stores an HD condition information that records conditions for encode processing to be performed when an outputted image data is recorded in an HD (High Definition) mode; a high-quality condition information that records conditions for encode processing to be performed when an outputted image data is recorded in a high-quality condition mode; a normal condition information that records conditions for encode processing to be performed when an outputted image data is recorded in a normal mode; and a long-time condition information that records conditions for encode processing when an outputted image data is recorded in a long-time mode in a readable manner as necessary. Here, images in the HD mode are of the highest image quality among the above. Images in the high-quality mode are of lower quality, images in the normal mode are further lower quality, and images in the long-time mode are much lower quality.

Three data input terminals of the first selector 320 are connected to the data output terminals of the image-data output unit 11, the first image memory 210 and the second image memory 220B, respectively, by data lines. One data output terminal of the first selector 320 is connected to a data input terminal of a later-described encoder 331 in the image processing section 330 and a data input terminal of a later-described delay circuit 334 in the image processing section 330 by a data line of which an end is branched. A control-signal input terminal of the first selector 320 is connected to a control-signal output terminal of the controller 350 by a control line.
The first selector 320 is controlled by the controller 350 to perform an output processing for outputting an outputted image data from the image-data output unit 11 to the encoder 331 and the delay circuit 334 at the same timing. The first selector 320 also performs an output processing for outputting an outputted image data from the image-data output unit 11 stored in the first image memory 210 to the encoder 331 and the delay circuit 334 at the same timing. Further, the first selector 320 performs an output processing for outputting a reference image data stored in the second image memory 220B to the encoder 331 and the delay circuit 334 at the same timing.
Specifically, the first selector 320 selects one of the image data acquired from the image-data output unit 11, the first image memory 210 and the second image memory 220B based on a first selective signal from the controller 350. Then, the first selector 320 outputs the selected image data to the encoder 331 and the delay circuit 334.

The image processing section 330 includes the encoder 331, a second selector 332, a decoder 333 and the delay circuit 334 serving as a delay unit.

One data output terminal of the encoder 331 is connected to a data input terminal of the second selector 332 and a data input terminal of the storage 40 by a data line of which an end is branched. A control-signal input terminal of the encoder 331 is connected to a control-signal output terminal of the controller 350 by a control line.
The encoder 331 acquires the outputted image data and the reference image data from the first selector 320 while acquiring from the controller 350 either one information (hereinafter referred to as a set recording-condition information) of the HD condition information, the high-quality condition information, the normal condition information, and the long-time condition information. Subsequently, the encoder 331 generates an encode-processed image data by encoding the outputted image data and the reference image data based on the set recording-condition information. Then, the encoder 331 outputs the encode-processed image data to the second selector 332 and the storage 40. The encode-processed image data outputted to the storage 40 is written into the storage 40.
Incidentally, an encode based on the set recording-condition information in the encoder 331 is an irreversible conversion. Thus, an image data obtained by decoding the encode-processed image data inputted into the decoder 333 is of lower quality than the original image data inputted into the encoder 331. The image data is compressed by encode processing.
The encode-processed image data outputted to and written in the storage 40 corresponds to a selectively-processed image data of the invention.

Two data input terminals of the second selector 332 are respectively connected to a data output terminal of the encoder 331 and a data output terminal of the storage 40 by a data line. A data output terminal of the second selector 332 is connected to a data input terminal of the decoder 333 by a data line. A control-signal input terminal of the second selector 332 is connected to a control-signal output terminal of the controller 350 by a control line.
The second selector 332 is controlled by the controller 350 to output to the decoder 333 the encode-processed image data acquired from the encoder 331. Also, the second selector 332 outputs to the decoder 333 the encode-processed image data acquired from the storage 40.
Specifically, the second selector 332 selects one of the encode-processed image data acquired from the encoder 331 and the storage 40 based on a second selective signal from the controller 350. Then, the second selector 332 outputs the selected encode-processed image data to the decoder 333.

A data output terminal of the decoder 333 is connected to a data input terminal of the image combining section 340 by a data line.
The decoder 333 acquires the encode-processed image data from the encoder 331 via the second selector 332. Then, the decoder 333 generates a record-adjusted image data by decoding the encode-processed image data, and outputs the record-adjusted image data to the image combining section 340.

A data output terminal of the delay circuit 334 is connected to the data input terminal of the image combining section 340 by a data line.
Here, the outputted image data and the reference image data outputted from the first selector 320 are inputted to the image combining section 340 via the delay circuit 334. On the other hand, the outputted image data and the reference image data are also inputted to the image combining section 340 via the encoder 331, the second selector 332, and the decoder 333. A delay time of the delay circuit 334 is set so that the outputted image data and the reference image data are inputted to the image combining section 340 via the two different lines at the same timing.
Thus, upon acquiring the outputted image data and the reference image data from the first selector 320, the delay circuit 334 outputs to the image combining section 340 the outputted image data and the reference image data as the record-unadjusted image data after lapse of time equivalent to the time needed for encode processing and decode processing of the encoder 331 and the decoder 333.
In other words, the image processing section 330 outputs to the image combining section 340 the record-adjusted image data generated by the encoder 331 and the decoder 333, and the record-unadjusted image data that is equivalent to the data used for generating the record-adjusted image data at the same timing. Accordingly, even when the outputted image, the temporary recorded image and the reference image are motion images, the record-adjusted image and the record-unadjusted image can be images of the same scene.
Incidentally, the outputted image data and the reference image data outputted from the delay circuit 334 correspond to the second processed image data according to the invention.

Two data input terminals of the image combining section 340 are connected to a data output terminal of the decoder 333 and a data output terminal of the delay circuit 334, respectively, by a data line. A data output terminal of the image combining section 340 is connected to a data input terminal of the display 20 by a data line. A control-signal input terminal of the image combining section 340 is connected to a control-signal output terminal of the controller 350 by a control line.
The image combining section 340 is controlled by the controller 350 to display a recording-condition-setting-method selection menu M60 on a display area 21 as shown in Fig. 15. The recording-condition-setting-method selection menu M60 includes: a menu content information M61; a comparison-setting selective information M62 to be selected when a recording condition is set while a recording condition before the setting and a recording condition after the setting are being compared with each other (hereinafter referred to as comparative setting); and a normal-setting selective information M63 to be selected when a recording condition is set based on a recording-condition selection menu M70 (see Fig. 16) (hereinafter referred to as normal setting). The informations M61 to M63 are vertically in juxtaposition.
The image combining section 340 displays a cursor (not shown) superposed on the comparison-setting selective information M62 or the normal-setting selective information M63, and moves the cursor as necessary under the control by the controller 350.

As shown in Fig. 16, the image combining section 340 also displays the recording-condition selection menu M70. The recording-condition selection menu M70 includes: a menu content information M71; an HD selective information M72 to be selected when a recording condition is set to be in an HD mode; a high-quality selective information M73 to be selected when the recording condition is set in a high-quality mode; a normal selective information M74 to be selected when the recording condition is set in a normal mode; a long-time selective information M75 to be selected when the recording condition is set in a long-time mode; a quality-comparison selective information M76 to be selected when an image is displayed with set contents; and a setting-termination selective information M77 to be selected when a setting of the recording condition is terminated. The informations M 71 to M77 are vertically in juxtaposition.
The image combining section 340 displays a cursor (not shown) superposed on one of the HD selective information M72, the high-quality selective information M73, the normal selective information M74, the long-time selective information M75, the quality-comparison selective information M76 and the setting-termination selective information M77, and moves the cursor as necessary under the control by the controller 350.

The image combining section 340 acquires the record-adjusted image data and the record-unadjusted image data from the image processing section 330, and the set recording condition information from the controller 350. Then, the image combining section 340 displays on the display area 21 a first time-division-comparison image J30 as shown in Fig. 17 and a second time-division-comparison image J40 as shown in Fig. 18 in an alternately-switching manner as necessary.
The first and second time-division-comparison images J30 and J40 include: first and second recording-setting images J31 and J41 that are substantially as large as the display area 21; and first and second recording-setting condition name informations J32 and J42 (displayed-image processing information) displayed at the upper left of the first and second recording-setting images J31 and J41 for indicating names of recording-setting-conditions.
The first recording-setting image J31 is the record-unadjusted image based on the record-unadjusted image data. The second recording-setting image is the record-adjusted image based on the record-adjusted image data.
The second recording-setting-condition name information J42 indicates names accorded with a mode recorded in the recording-setting information.

Incidentally, since the first and second recording-setting images J31 and J41 each are exemplarily formed from a perfect circle, a regular triangle and a quadrate. "Original" of the first recording-setting-condition name information J32 means the record-unadjusted image. Lines in the second recording-setting image J41 are jagged as compared with those in the first recording-setting image J31 because the image J41 is of lower quality due to the long-time mode.

The image combining section 340 acquires the record-adjusted image data and the record-unadjusted image data from the image processing section 330 and the setting-recording-condition information from the controller 350 to display a dual-screen-comparison image N20 on the display area 21 as shown in Fig. 19.
The dual-screen-comparison image N20 includes: a first minified recording-setting image N21 displayed at the left of the display area 21; a first recording-setting-condition name information N22 displayed at the upper left of the first minified recording-setting image N21; a second minified recording-setting image N23 displayed at the right of the display area 21; a second recording-setting-condition name information N24 displayed at the upper left of the second minified recording-setting image N23.
The first and second minified recording-setting images N21 and N23 are formed by minifying the first and second recording-setting images J31 and J41 without changing the aspect ratio. Alternatively, the first and second minified recording-setting images N21 and N23 can be displayed without partially minifying the first and second recording-setting images J31 and J41.

The image combining section 340 displays a comparative-screen-pattern selection menu M30, a comparing-method selection menu M40, and a comparison-image selection menu M50. It should be noted that the detailed arrangements of the comparative-screen-pattern selection menu M30, the comparing-method selection menu M40, and the comparison-image selection menu M50 are described in the first exemplary embodiment, and therefore the description thereof is omitted in this exemplary embodiment. The image combining section 340 moves a cursor (not shown) displayed on the above-listed menus as necessary under the control by the controller 350.

As shown in Fig. 14, the controller 350 includes: a recording-condition-setting method recognizer 351; a comparison-image generation controller 352 serving as a processed-image generation controller and a selective-processing recognizer; a comparison-image display controller 353 included in a processed-image display controller; a normal-setting controller 354; and a recording controller 355. The above-listed components may be configured as programs.

When, for instance, a user makes an input operation on the other-processing operation button 32B and the recording-condition-setting method recognizer 351 acquires the processing signal for commanding that a setting of a recording condition be performed from the interface 120, the recording-condition-setting method recognizer 351 controls the image combining section 340 to display the recording-condition-setting-method selection menu M60. Then, when recognizing that the user has made an input operation for selecting the comparison-setting selective information M62 (e.g., recognizing that the user has made an input operation while the cursor is superposed on the comparison-setting selective information M62), the recording-condition-setting method recognizer 351 outputs a comparison-setting signal of that effect to the comparison-image generation controller 352 and the comparison-image display controller 353. On the other hand, when recognizing that the normal-setting selective information M63 is selected, the recording-condition-setting method recognizer 351 outputs a normal setting signal of that effect to the normal-setting controller 354.

Upon acquiring the comparison-setting signal from the recording-condition-setting method recognizer 351, the comparison-image generation controller 352 controls the image combining section 340 to perform a display processing of the comparison-image selection menu M50. Then, when recognizing that the ongoing-inputted image selective information M52 is selected, the comparison-image generation controller 352 outputs to the first selector 320 a first selective signal for commanding that the image being outputted from the image-data output unit 11 be outputted to the image processing section 330. When recognizing that the memory 1 image selective information M53 is selected, the comparison-image generation controller 352 outputs to the first selector 320 a first selective signal for commanding that the outputted image data from the image-data output unit 11 recorded in the first image memory 210 be outputted to the image processing section 330. Further, when recognizing that the memory 2 image selective information M54 is selected, the comparison-image generation controller 352 outputs to the first selector 320 a first selective signal for commanding that the reference image data recorded in the second image memory 220B be outputted to the image processing section 330.

When displaying the recording-condition selection menu M70 as necessary and recognizing that the quality-comparison selective information M76 is selected while a predetermined recording condition is selected, the comparison-image generation controller 352 outputs to the encoder 331 the setting-recording-condition information regarding the recording condition while outputting to the second selector 332 a second selective signal for commanding that the encode-processed image data from the encoder 331 be outputted to the decoder 333 to generate a record-adjusted image data accorded with the encode-processed image data from the encoder 331. The setting-recording-condition information is further outputted to the image combining section 340.
On the other hand, when recognizing that the setting-termination selective information M77 of the recording-condition selection menu M70 is selected, the comparison-image generation controller 352 recognizes that the user has selected the recording condition corresponding to the setting-recording-condition information and outputs the setting-recording-condition information to the recording controller 355.

Upon acquiring the comparison-setting signal from the recording-condition-setting method recognizer 351, the comparison-image display controller 353 controls the image combining section 340 to display the comparative-screen-pattern selection menu M30. When recognizing that the dual-screen-comparison selective information M32 is selected, the comparison-image display controller 353 controls the image combining section 340 to display the dual-screen-comparison image N20.
On the other hand, when recognizing that the time-division-comparison selective information M33 is selected, the comparison-image display controller 353 controls the image combining section 340 to display the first time-division-comparison image J30. Also, the comparison-image display controller 353 controls the image combining section 340 to display the comparing-method selection menu M40 as necessary. When recognizing that the demand-time-division-comparison selective information M42 is selected, the comparison-image display controller 353 determines whether or not a switching display is demanded. Every time determining that the switching display is demanded, i.e., the image-switch operation button 32A is input-operated, the comparison-image display controller 353 controls the image combining section 150 to display the first and second time-division-comparison images J30 and J40 in a switching manner.
On the other hand, when recognizing that the repeat-time-division-comparison selective information M43 of the comparing-method selection menu M40 is selected, the comparison-image display controller 353 controls the image combining section 340 to switch between the first and second time-division-comparison images J30 and J40 for display exemplarily every 5 second.

Upon acquiring the normal-setting signal from the recording-condition-setting method recognizer 351, the normal-setting controller 354 controls the image combining section 340 to display, for instance, the recording-condition selection menu M70. Then, the normal-setting controller 354 outputs to the recording controller 355 the setting-recording-condition information based on the input setting.

The recording controller 355 controls the recording medium 42 to record the outputted image data under a recording condition selected by a user.
Specifically, when recognizing that the outputted image data is requested to be recorded, the recording controller 355 outputs to the encoder 331 the set recording-condition information acquired from the comparison-image generation controller 352 and the normal-setting controller 354. Then, the encode-processed image data obtained by encoding the outputted data with the encoder 331 is outputted to the storage 40 to be recorded on the reading medium 42. In other words, the encode-processed image data is written into the storage 40.

### [Operation(s) of Image Processor System]

Now, operation(s) of the image processor system 1C will be described with reference to the attached drawings.

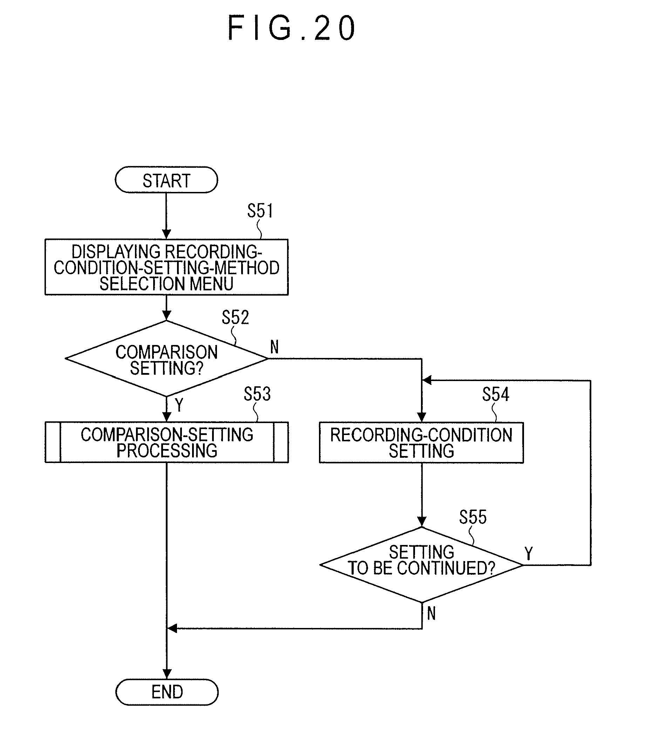

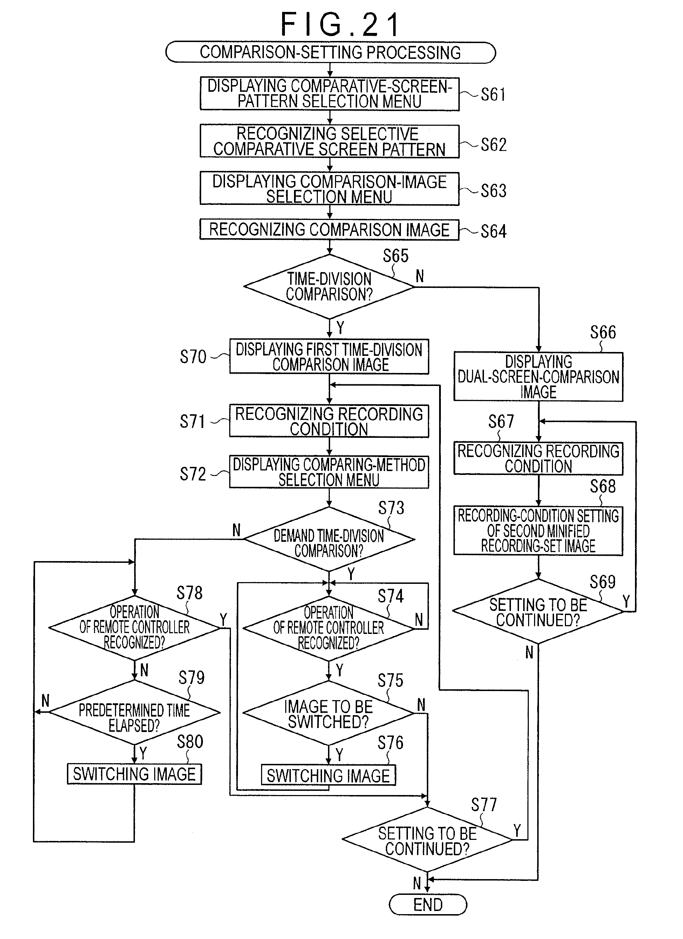

Fig. 20 is a flow chart showing a recording-condition setting processing Fig. 21 is a flow chart showing a comparison setting processing.

First of all, a user makes an input setting of a request for the display of the recording-condition-setting-method selection menu M60.
As shown in Fig. 20, when recognizing this input setting operation, the image processor 300 of the image processor system 1C displays the recording-condition-setting-method selection menu M60 (step S51) and determines whether or not a comparison setting is selected (step S52).
When determining that the comparison setting is selected in the step S52, a comparison-setting processing is performed (step S53), and then is terminated.
On the other hand, when determining that the normal setting is selected in the step 52, the recording-condition selection menu M70 is displayed to set the recording condition in accordance with the input setting operation by the user (step S54), and whether the setting is to be continued or not is determined (step S55).
When determining that the setting is to be continued in the step S55, the processing of the step S54 is performed. On the other hand, when determining that the setting is to be terminated in the step S55, the image processor 300 recognized that a user has selected the recording condition, so that the processing is terminated.

As shown in Fig. 21, in the comparison setting processing in the step S53, the image processor 300 displays the comparative-screen-pattern selection menu M30 (step S61), and performs a processing for recognizing the selection of a dual-screen comparison or a time-division comparison, i.e., a processing of recognizing the selected comparative screen pattern (step S62). Subsequently, the comparison-image selection menu M50 is displayed (step S63), and the selection of either one of the outputted image, the temporary recorded image and the reference image as the comparison image is recognized (step S64). Then, whether the time-division comparison is selected or not is determined (step S65).
When determining that the dual-screen comparison is selected in the step S65, the dual-screen comparison image N20 is displayed (step S66). Subsequently, the recording-condition selection menu M70 is displayed as necessary, the recording condition is recognized based on the input setting operation (step S67). Then, based on the recognized contents, the recording-condition setting processing of the second minified recording-setting image N23 is performed (step S68), and whether a setting is to continue or not is determined (step S69). When determining that the setting is to be continued in the step S69, the processing of the step S67 is performed. On the other hand, when determining that the setting is to be terminated in the step S69, the image processor 300 recognizes that the user has set the recording condition at this time. Then, the processing is terminated.

When determining that the time-division comparison is selected in the step S65, the image processor 300 displays the first time-division-comparison image J30 (step S70). Then, the image processor 300 displays the recording-condition selection menu M70 as necessary, and recognizes the recording condition based on the input setting operation (step S71). Subsequently, the comparing-method selection menu M40 is displayed (step S72), and whether the demand-time-division comparison is selected or not is determined (step S73).

When determining that the demand-time-division comparison is selected in the step S73, whether the remote controller 30 is operated or not is determined (step S74). Then, when determining that the remote controller is not operated in the step S74, the processing of the step S74 is performed. On the other hand, when determining that the remote controller is operated in the step S74, whether the image-switch operation button 32A is operated or not, i.e., whether the operation is for switching the image or not, is determined (step S75).
When determining that the operation is for switching the image in the step S75, a processing for switching the displayed image (e.g., a processing for switching the first time-division comparison image J30 to the second time-division comparison image J40) is performed (step S76). Then, the processing of the step S74 is performed.
On the contrary, when determining that the operation is not for switching the image in the step S75, whether the setting is to be continued or not is determined (step S77). When determining that the setting is to be continued in the step S77, the processing of the step S71 is performed. On the contrary, when determining that the setting is to be terminated in the step S77, the image processor 300 recognizes that the user has set the recording condition at this time. Then, the processing is terminated.

Further, when determining that the repeat-time-division comparison is selected in the step S573, whether the remote controller 30 is operated or not is determined (step S78). Then, when determining that the remote controller is operated in the step S78, the processing of the step S77 is performed. On the other hand, when determining that the remote controller is not operated in the step S78, whether a predetermined time has elapsed or not is determined (step S79). Then, when determining that the predetermined time has not elapsed in the step S79, the processing of the step S78 is performed. On the contrary, when determining that the predetermined time has elapsed in the step S79, the processing of switching the image is performed (step S80). Then, the processing of the step S78 is performed.

### [Advantage(s) of Third Exemplary Embodiment]

As described above, according to the third exemplary embodiment, the image processor 300 of the image processor system 1C acquires the outputted image data from the image-data output unit 11 to generate the record-adjusted image data by performing the encode processing and the record-unadjusted image data without performing the encode processing. Then, the display 20 displays the record-adjusted image accorded with the record-adjusted image data and the record-unadjusted image accorded with the record-unadjusted image data.
Accordingly, the whole record-adjusted image and the whole record-unadjusted image are displayed, so that a user can check the images processed under different encoding conditions while viewing the entirety of the images. Accordingly, a user can properly compare the images in terms of their encoding conditions.

Then, the first time-division-comparison image J30 including the first recording-setting image J31 accorded with the record-unadjusted image data and the second time-division-comparison image J40 including the second recording-setting image J41 accorded with the record-adjusted image data are displayed on the display area 21 of the display 20 in an alternately-switching manner.
With this arrangement, the first and second recording-setting images J31 and J41 can be entirely displayed without reducing the scale of the images. Thus, a user can view the images processed under different encoding conditions alternately in the same size as the actual size. Accordingly, a user can more properly compare the images in terms of their encoding conditions.

When a user selects the demand-time-division comparison, the first and second time-division-comparison images J30 and J40 are displayed in an alternately-switching manner based on an input operation on the remote controller 30.
With this arrangement, the user can conduct the display switching at the user's desirable timing. Thus, a more suitable comparison of images is possible.

Every time an input operation is made on the image-switch operation button 32A solely provided on the remote controller 30, the first and second time-division-comparison images J30 and J40 are displayed in an alternately-switching manner.
With this arrangement, once the user makes an input operation on the solely-provided image-switch operation button 32A, the images can be displayed in an alternately-switching manner. Thus, a more facilitated comparison of images is possible.

When the user selects the repeat-time-division comparison, the first and second time-division-comparison images J30 and J40 are displayed in an alternately-switching manner at a predetermined time intervals.
With this arrangement, images can be displayed in an alternately-switching manner without requiring the user to perform an operation for display switching. Thus, a more facilitated comparison of images is possible.

On the first and second time-division-comparison images J30 and J40, the first and second recording-setting-condition name informations J32 and J42 for respectively indicating the encoding conditions for the first and second recording-setting images J31 and J41 are displayed.
Accordingly, the encoded images can be displayed together with the encoding conditions. Thus, a difference in the encoding conditions between the two images can be easily recognized, thereby contributing to a more suitable comparison of images.

The dual-screen-comparison image N20 is displayed, the dual-screen-comparison image N20 including the first minified recording-setting image N21 accorded with the record-unadjusted image data and the second minified recording-setting image N23 accorded with the record-adjusted image data. In other words, the two images processed under different encoding conditions are displayed on the display area 21 in juxtaposition.
Thus, a user can compare the images processed under different encoding conditions without switching between the images.

The first and second minified recording-setting images N21 and N23 are formed by minifying the first and second recording-setting images J31 and J41 without changing the aspect ratio.
Thus, since a user can recognize a shape of each object displayed on the images without deforming an original shape of each object, the images processed under different encoding conditions can be compared more properly. In addition, the images can be displayed without minifying a part of the respective first and second recording-setting images J31 and J41.

With this arrangement, the record-adjusted image generated by performing the encode processing and the record-unadjusted image generated without performing the encoding processing can be compared.
Accordingly, a change of an original image due to recording of the outputted image data on the storage medium 43 can be recognized, so that the recording condition can be set properly.

The image processing section 330 includes the encoder 331, the decoder 333, and the delay circuit 334 that outputs to the image combining section 340 the acquired image data after lapse of time equivalent to the time required for the encode processing and the decode processing. Further, the first selector 320 outputs the outputted image data and the like to the encoder 331 and the delay circuit 334 at the same timing.
Accordingly, the record-adjusted image data generated by the encoder 331 and the decoder 333, and the record-unadjusted image data that is equivalent with the data used for generating the record-adjusted image data can be outputted to the image combining section 340 at the same timing. Thus, even when the outputted image, the temporary recorded image and the reference image are motion images, the record-adjusted image and the record-unadjusted image can be images of the same scene, which allows a proper comparison of the images processed under different encoding conditions.

The image processor 300 further includes the first image memory 210 that stores the outputted image data from the image-data output unit 11 to generate the record-adjusted image data and the record-unadjusted image data based on the outputted image data stored on the first image memory 210.
Thus, the outputted image data which a user determines is suitable for, e.g., an image comparison can be recorded on the first image memory 210, which allows a proper comparison of images at a user's desirable timing.

The image processor 300 further includes the second image memory 220B that records the reference image data to generate the record-adjusted image data and the record-unadjusted image data based on the reference image data.
Thus, a difference between the record-adjusted image and the record-unadjusted image due to encoding conditions can be more easily recognized by using the reference image data, which allows a more proper comparison of images.

After the recording condition has been set, the encode processing is performed on the outputted image data outputted from the image-data output unit 11 under the set recording condition, so that the encode-processed image data is recorded on the record medium 42.
Accordingly, the outputted images continuously outputted from the image-data output unit 11 can be recorded under the recording condition suitably set through the comparison of images.

### [Fourth Exemplary Embodiment]

A fourth exemplary embodiment of the invention will be described below with reference to the attached drawings.
The components for performing the same processings as in the first to third exemplary embodiments will be denoted with the same names and the same numerals, and the description thereof will be omitted or simplified. Also, the components for performing substantially the same processings as in the first to third exemplary embodiments will be denoted with the same names, and the description thereof will be omitted or simplified.

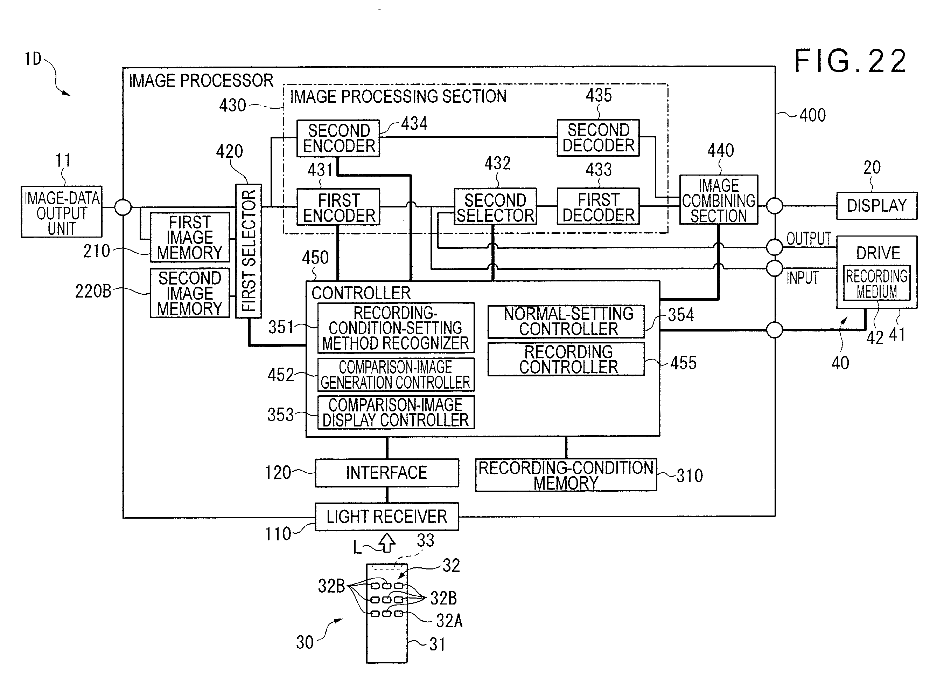

Fig. 22 is a block diagram schematically showing an arrangement of an image processor system.

### [Arrangement of Image Processor System]

In Fig. 22, the numeral 1D denotes the image processor system.
The image processor system 1D includes an image-data output unit 11, a display 20, a remote controller 30, a storage 40, and an image processor 400.

The display 20 is connected to the image processor 400 to display on a screen an image accorded with a later-described first record-adjusted image data (first processed image data) from the image processor 400 and an image accorded with a second record-adjusted image data (second processed image data) from the image processor 400. Hereinafter in this description, the image accorded with the first record-adjusted image data will be referred to as a first record-adjusted image while the image accorded with the second record-adjusted image data will be referred to as a second record-adjusted image.

The image processor 400 includes: a light receiver 110; an interface 120; a first image memory 210; a second image memory 220B; a recording-condition memory 310; a first selector 420 serving as an outputted-image acquirer; an image processing section 430 serving as a processed-image generator; an image combining section 440 serving as a processed-image display controller included in an image display controller and a computing unit; and a controller 450 serving as the image display controller and the computing unit.

Three input terminals of the first selector 420 are connected to data output terminals of the image-data output unit 11, the first image memory 210 and the second image memory 220B, respectively, by data lines. One data output terminal of the first selector 420 is connected to a data input terminal of a later-described first encoder 431 in the image processing section 430 and a data input terminal of a later-described second encoder 434 in the image processing section 430 by a data line of which an end is branched. A control-signal input terminal of the first selector 420 is connected to a control-signal output terminal of the controller 450 by a control line.
The first selector 420 also performs an output processing for outputting an outputted image data from the image-data output unit 11, an outputted image data recorded on the first image memory 210, and a reference image data recorded on the second image memory 220B to the first and second encoders 431 and 434 at substantially the same timing.

The image processing section 430 includes the first encoder 431, a second selector 432, the first decoder 433, the second encoder 434, and the second decoder 435.

A data output terminal of the first encoder 431 is connected to a data input terminal of the second selector 432 and a data input terminal of the storage 40 by a data line of which an end is branched. A control-signal input terminal of the first encoder 431 is connected to a control-signal output terminal of the controller 450 by a control line.
The first encoder 431 acquires the outputted image data and the reference image data from the first selector 420 while acquiring a first setting-recording-condition information from the controller 450. Then, the first encoder 431 outputs to the second selector 432 and the storage 40 a first encode-processed image data generated by encoding the outputted image data and the reference image data based on the first setting-recording-condition information.
The encode-processed image data outputted to and written into the storage 40 corresponds to a selectively-processed image data according to the invention.

Two data input terminals of the second selector 432 are connected to a data output terminal of the first encoder 431 and a data output terminal of the storage 40 by a data line, respectively. Also, a data output terminal of the second selector 432 is connected to a data input terminal of the first decoder 433 by a data line. A control-signal input terminal of the second selector 432 is connected to a control-signal output terminal of the controller 450 by a control line.
The second selector 432 selects either one of the encode-processed image data acquired from the first encoder 431 and the storage 40 based on a second selective signal from the controller 450. Then, the second selector 432 outputs the encode-processed image data to the first decoder 433.

A data output terminal of the first decoder 433 is connected to a data input terminal of the image combining section 440 by a data line.
The first decoder 433 acquires the first encode-processed image data from the first encoder 431 via the second selector 432. Subsequently, a first record-adjusted image data is generated by performing a decode processing. Then, the first record-adjusted image data is outputted to the image processing section 440.

A data output terminal of the second encoder 434 is connected to a data input terminal of the second decoder 435 by a data line. A control-signal input terminal of the second encoder 434 is connected to a control-signal output terminal of the controller 450 by a control line.
After acquiring the outputted image data and the reference image data from the first selector 420 while acquiring a second setting-recording-condition information from the controller 450, the second encoder 434 outputs to the second decoder 435 a second encode-processed image data generated by encoding the outputted image data and the reference image data based on the second setting-recording-condition information.

A data output terminal of the second decoder 435 is connected to a data input terminal of the image combining section 440.
The second decoder 435 acquires the second encode-processed image data from the second encoder 434. Subsequently, a second record-adjusted image data is generated through a decode processing and is outputted to the image processing section 440.

Two data input terminals of the image combining section 440 are connected to a data output terminal of the first encoder 433 and a data output terminal of the second decoder 435, respectively, by a data line. A data output terminal of the image combining section 440 is connected to a data input terminal of the display 20 by a data line. A control-signal input terminal of the image combining section 440 is connected to a control-signal output terminal of the controller 450 by a control line.
The image combining section 440 displays a comparative-screen-pattern selection menu M30, a comparing-method selection menu M40, a comparison-image selection menu M50, a recording-condition-setting-method selection menu M60, and a recording-condition selection menu M70 as necessary.

The image combining section 440 acquires the first and second record-adjusted image data from the image processing section 430 and the first and second setting-recording-condition informations from the controller 450, and displays a first time-division-comparison image J30 and a second time-division-comparison image J40 in an alternately-switching manner as necessary. The image combining section 440 further displays a dual-screen-comparison image N20.
Incidentally, in this fourth exemplary embodiment, as first and second recording-setting images J31 and J41 of the first and second time-division-comparison images J30 and J40 and as first and second minified recording-setting images N21 and N23 of the dual-screen-comparison image N20, the first and second record-adjusted images accorded with the first and second record-adjusted image data are displayed. In addition, names of the recording-setting conditions based on the first and second setting-recording-condition informations are displayed as first recording-setting-condition name informations J32 and N22 and second recording-setting-condition name informations J42 and N24.

The controller 450 includes: a recording-condition-setting method recognizer 351; a comparison-image generation controller 452 serving as a processed-image generation controller and selective-processing recognizer; a comparison-image display controller 353; a normal-setting controller 354; and a recording controller 455. The above-listed components may be configured as programs.

The comparison-image generation controller 452 controls the image combining section 440 to perform a display processing of the comparison-image selection menu M50. When recognizing that the ongoing-inputted image selective information M52 is selected, the comparison-image generation controller 452 outputs to the first selector 420 a first selective signal for commanding that one of the outputted image data being outputted, the outputted image data stored in the first image memory 210 and the reference image data be outputted to the image processing section 430.
When displaying the recording-condition selection menu M70 as necessary and recognizing that the quality-comparison selective information M76 is selected while a first recording condition is selected as necessary, the comparison-image generation contoller 452 outputs to the first encoder 431 the first setting-recording-condition information regarding the first recording condition while outputting to the second selector 432 a second selective signal for commanding that the encode-processed image data from the first encoder 431 be outputted to the first decoder 433 to generate a first record-adjusted image data. When recognizing that the quality-comparison selective information M76 is selected while a second recording condition is selected as necessary, the comparison-image generation controller 452 outputs to the second encoder 434 a second setting-recording-condition information regarding a second recording condition to generate a second record-adjusted image data. The first and second setting-recording-condition informations are outputted to the image combining section 440.
Further, when recognizing that the setting-termination selective information M77 of the recording-condition selection menu M70 is selected while the first recording condition or the second recording condition is selected, the comparison-image generation controller 452 outputs to the recording controller 455 either one of the first and second setting-recording-condition informations corresponding to the selected recording condition.

When recognizing that the outputted image data is requested to be recorded, the recording controller 455 outputs to the first encoder 431 the setting-recording-condition information acquired from the comparison-image generation controller 452 and the normal-setting controller 354. Then, the recording controller 455 controls the second selector 432 to output to the storage 40 an encode-processed image data generated by encoding the outputted image data with the first encoder 431 and to record the image data on the recording medium 42.

### [Operation(s) of Image Processor System]

Now, operation(s) of the image processor system 1D will be described with reference to the attached drawings.

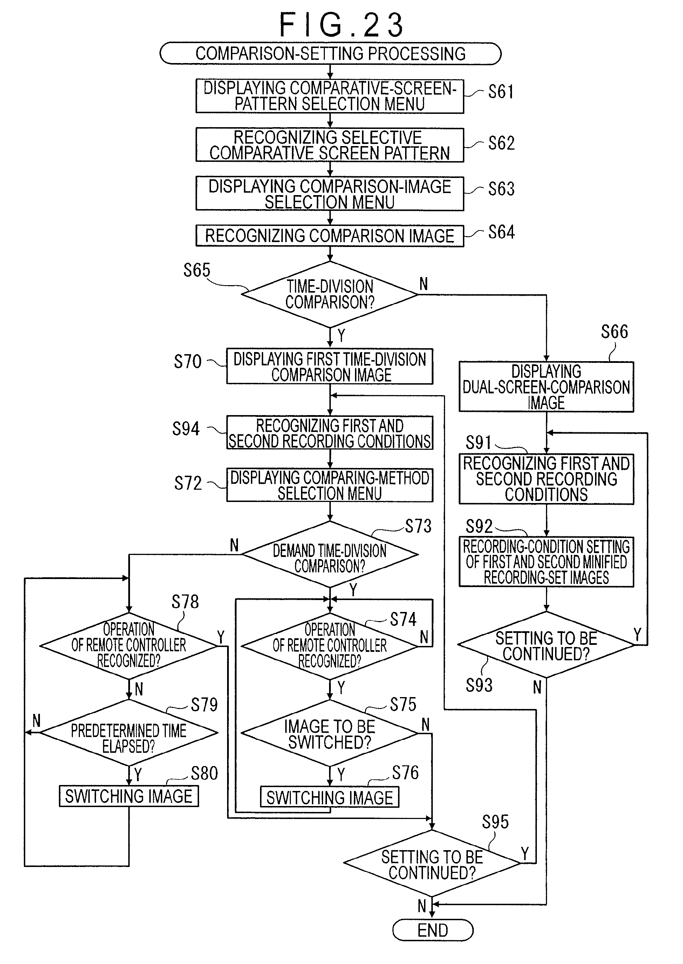

Fig. 23 is a flow chart showing a comparison setting processing.
It should be noted that, in the image processor system 1D, the same processing as the recording-condition setting processing shown in the flow chart of Fig. 20 according to the third exemplary embodiment is performed, and only a comparison setting processing in the step S53 is different from that of the third exemplary embodiment. In the comparison setting processing shown in Fig. 23, the same operation(s) as in the third exemplary embodiment will be denoted with the same numerals, the description of which will be simplified.

The image processor 400 of the image processor system 1D performs the processings of the steps S51 to S55 as shown in Fig. 20.
In the comparison setting processing in the step S53, the image processor 400 performs the processings of the steps S61 to S65 as shown in Fig. 23. When determining that the dual-screen comparison is selected in the step S65, the processing of the step S66 is performed to display the dual-screen comparison image N20. Subsequently, the recording-condition selection menu M70 is displayed as necessary, and the first and second recording conditions are recognized based on the input setting operation (step S91). Based on this recognized contents, the recording-condition setting processing is performed on the first and second minified recording-setting images N21 and N23 (step S92), and whether a setting is to continue or not is determined (step S93). When determining that the setting is to be continued in the step S93, the processing of the step S91 is performed. On the other hand, when determining that the recording condition is selected by a user and the setting is to be terminated in the step S93, the image processor 400 recognizes that the user has set the recording condition. Then, the processing is terminated.

When determining that the time-division comparison is selected in the step S65, the processing of the step S70 is performed to display the first time-division-comparison image J30. Subsequently, the recording-condition selection menu M70 is displayed as necessary and the first and second recording conditions are recognized (step S94). Thereafter the processings of the step S72 to S75 is performed.
When determining that the image is to be switched in the step S75, the processing of the step S76 is performed. On the contrary, when determining that the image is not to be switched in the step S75, whether the setting is to be continued or not is determined (step S95). When determining that the setting is to be continued in the step S95, the processing of the step S94 is performed. On the other hand, when determining that the recording condition is selected by the user and the setting is to be terminated in the step S95, the image processor 400 recognizes that the user has set the recording condition at this time by the user is recognized and the processing is terminated.
Further, when determining that the repeat-time-division comparison is selected in the step S73, the processings of the steps S78 to S80 are performed.

### [Advantage(s) of Fourth Exemplary Embodiment]

In the fourth exemplary embodiment as described above, the following advantages can be obtained in addition to the advantages of the third exemplary embodiment.

The image processor 400 displays: the first record-adjusted image accorded with the first record-adjusted image data subjected to the encode processing under the first recording condition; and the second record-adjusted image accorded with the second record-adjusted image data subjected to the encode processing under the second recording condition in an alternatively-switching manner or in juxtaposition.
Thus, the images recorded under the two different recording conditions can be compared. As compared with an arrangement in which an original image and an image recorded under one recording condition are compared, recording conditions can be easily selected.

The image processor 400 includes: the first and second encoders 431 and 434; and first and second decoders 433 and 435. Then, the first selector 420 outputs the outputted image data and the like to the first and second encoders 431 and 434 at the same timing. Further, the delay time of the first and second encoders 431 and 434 and the delay time of the first and second decoders 433 and 435 are respectively equalized.
Thus, even when the outputted image, the temporary recorded image and the reference image are motion images, the first and second record-adjusted images can be images of the same scene, which allows a further proper comparison of images processed under different encoding conditions.

### [Fifth Exemplary Embodiment]

A fifth exemplary embodiment of the invention will be described below with reference to the attached drawings.
The components for performing the same processings as in the first to fourth exemplary embodiments will be denoted with the same names and the same numerals, and the description thereof will be omitted or simplified. In addition, the components for performing substantially the same processings as in the first to fourth exemplary embodiments will be denoted with the same names, and the description thereof will be omitted or simplified.

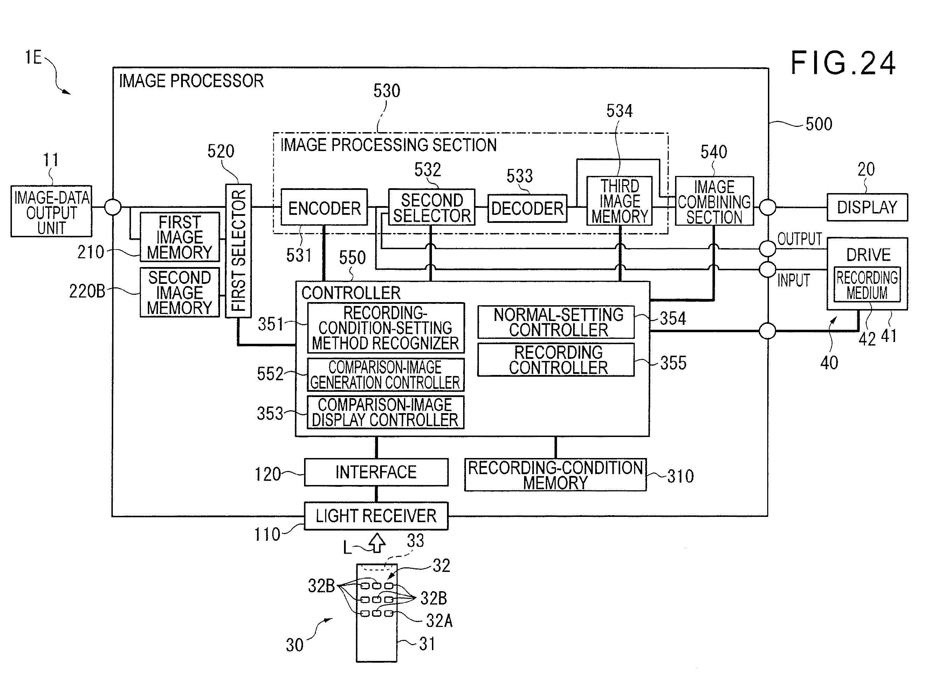

Fig. 24 is a block diagram schematically showing an arrangement of an image processor system.
It should be noted that a recording-condition setting processing and a comparison setting processing according to the fifth exemplary embodiment are the same as the processings shown in Figs. 20 and 23, and therefore an operation of the image processor system will not be duplicately described.

### [Arrangement of Image Processor System]

In Fig. 24, the numeral 1E denotes the image processor system.
The image processor system 1E includes an image-data output unit 11, a display 20, a remote controller 30, a storage 40, and an image processor 500.
The image processor 500 of the fifth exemplary embodiment generates first and second record-adjusted image data by performing processings different from those of the image processor 400 of the fourth exemplary embodiment.

The image processor 500 includes: a light receiver 110; an interface 120; a first image memory 210; a second image memory 220B; a recording-condition memory 310; a first selector 520 serving as an outputted-image acquirer; an image processing section 530 serving as a processed-image generator; an image combining section 540 serving as a processed-image display controller included in an image display controller and a computing unit; and a controller 550 serving as the image display controller and the computing unit.

Three input terminals of the first selector 520 are connected to the data output terminals of the image-data output unit 11, the first image memory 210 and the second image memory 220B, respectively, by a data line. A data output terminal of the first image memory 520 is connected to a data input terminal of a later-described encoder 531 of the image processing section 530 by a data line. A control-signal input terminal of the first selector 520 is connected to a control-signal output terminal of the controller 550 by a control line.
The first selector 520 outputs to the encoder 531 an outputted image data from the image-data output unit 11, an outputted image data recorded on the first image memory 210, and a reference image data recorded on the second image memory 220B as necessary.

The image processor 530 includes the encoder 531, a second selector 532, a decoder 533 and a third image memory 534 serving as a storage-and-output processor.

A data output terminal of the encoder 531 is connected to a data input terminal of the second selector 532 and a data input terminal of the storage 40 by a data line of which an end is branched. A control-signal input terminal of the encoder 531 is connected to a control-signal output terminal of the controller 550 by a control line.
The encoder 531 acquires the outputted image data and the reference image data from the first selector 520 while acquiring a first setting-recording-condition information from the controller 550. Then, the encoder 531 outputs to the second selector 532 and the storage 40 a first encode-processed image data generated by encoding the outputted image data and the reference image data under a first recording condition. Also, the encoder 531 acquires a second setting-recording-condition information at a timing different from the first setting-recording-condition information to output a second encode-processed image data processed under a second recording condition to the second selector 532.
Incidentally, the encode-processed image data outputted to and written into the storage 40 corresponds to a selectively-processed image data according to the invention.

Two data input terminals of the second selector 532 are connected to a data output terminal of the encoder 531 and a data output terminal of the storage 40, respectively, by data lines. A data output terminal of the second selector 532 is connected to a data input terminal of the decoder 533 by a data line. A control-signal input terminal of the second selector 532 is connected to a control-signal output terminal of the controller 550 by a control line.
The second selector 532 selects one of the first encode-processed image data from the encoder 531 and the second encode-processed image data from the storage 40 based on a second selective signal from the controller 550. Then, the second selector 532 outputs the selected encode-processed image data to the decoder 533. The second selector 532 outputs to the decoder 533 the second encode-processed image data acquired from the encoder 531.

A data output terminal of the decoder 533 is connected to a data input terminal of the third image memory 534 and a data input terminal of the image combining section 540 by a data line of which an end is branched.
The decoder 533 acquires the first encode-processed image data from the encoder 531 via the second selector 532. Subsequently, the decoder 533 generates a first record-adjusted image data by performing a decode processing and outputs the image data. Then, the decoder 533 acquires the second encode-processed image data from the second selector 532 at a timing different from the first encode-processed image data to generate and output a second record-adjusted image data. These first and second encode-processed image data are outputted to both of the third image memory 534 and the image combining section 540.
Here, the decoder 533 generates the first and second record-adjusted image data based on the first and second encode-processed image data acquired at different timings. Accordingly, when the outputted image, which is a motion image, is selected as a comparison image, the first and second record-adjusted images each may be an image of a different scene.
On the other hand, when the temporary recorded image or the reference image is selected as the comparison image, the encoder 531 can acquire the identical outputted image data or reference image data recorded on the first and second image memories 210 and 220B at difference timings. Accordingly, even when the temporary recorded image or the reference image is a motion image, the first and second record-adjusted images each can be an image of the same scene.

A data output terminal of the third image memory 534 is connected to the image combining section 540 by a data line. A control-signal input terminal of the third image memory 534 is connected to a control-signal output terminal of the controller 550 by a control line.
Upon acquiring the first record-adjusted image data from the decoder 533, the third image memory 534 records the first record-adjusted image data under the control of the controller 550. Subsequently, the third image memory 534 acquires the recorded first record-adjusted image data, and outputs the recorded first record-adjusted image data to the image combining section 540 under the control of the controller 550.
The second record-adjusted image data is inputted to the third image memory 534 from the decoder 533 as necessary. However, the third image memory 534 does not record the second record-adjusted image data.

Two data input terminals of the image combining section 540 are connected to a data output terminal of the decoder 533 and a data output terminal of the third image memory 534, respectively, by data lines. A data output terminal of the image combining section 540 is connected to a data input terminal of the display 20 by a data line. A control-signal input terminal of the image combining section 540 is connected to a control-signal output terminal of the controller 550 by a control line.
The image combining section 540 acquires the first record-adjusted image data from the third image memory 534 and the second record-adjusted image data from the decoder 533, and performs the same processing as the image combining section 440 of the fourth exemplary embodiment. Specifically, the image combining section 540 displays a comparative-screen-pattern selection menu M30, a comparing-method selection menu M40, a comparison-image selection menu M50, a recording-condition-setting-method selection menu M60, a recording-condition selection menu M70, a first time-division-comparison image J30, a second time-division-comparison image J40 and a dual-screen-comparison image N20 as necessary.
The first record-adjusted image data is inputted directly to the image combining section 540 from the decoder 533. However, the image combining section 540 does not display this first record-adjusted image data. In other words, the image combining section 540 displays the first time-division-comparison image J30, the second time-division-comparison image J40 and the dual-screen-comparison image N20 based on the first record-adjusted image data acquired from the third image memory 534 and the second record-adjusted image data acquired directly from the decoder 533.

The controller 550 includes: a recording-condition-setting method recognizer 351; a comparison-image generation controller 552 serving as a processed-image generation controller and selective-processing recognizer; a comparison-image display controller 353; a normal-setting controller 354; and a recording controller 355. The above-listed components may be configured as programs.

The comparison-image generation controller 552 controls the image combining section 540 to perform a display processing of the comparison-image selection menu M50 as necessary. When recognizing that the ongoing-inputted image selective information M52 is selected, the comparison-image generation controller 552 outputs to the first selector 520 a first selective signal for commanding that either one of the outputted image data being outputted, the outputted image data recorded on the first image memory 210 and the reference image data be outputted to the image processing section 530.
Subsequently, the comparison-image generation controller 552 controls the image combining section 540 to display the recording-condition selection menu M70 as necessary, and outputs the first setting-recording-condition information to the encoder 531. Further, the comparison-image generation controller 552 outputs to the second selector 532 a second selective signal for commanding that the first encode-processed image data from the encoder 531 be outputted to the decoder 533, while controlling the third image memory 534 to record on the third image memory 534 the first record-adjusted image data generated by the decoder 533.
Then, the comparison-image generation controller 552 outputs the second set recording-condition information to the encoder 531, while controlling the second selector 532 to generate the second record-adjusted image data. Then, the comparison-image generation controller 552 outputs the generated record-adjusted image data to the image combining section 540. The comparison-image generation controller 552 further controls the third image memory 534 to output the first record-adjusted image data to the image combining section 540 at substantially the same timing as generating the second record-adjusted image data. The first and second set recording-condition informations are outputted to the image combining section 540.
Under such a control, the image combining section 540 acquires the first and second record-adjusted image data at substantially the same timing.
Also, when recognizing that the setting-termination selective information M77 of the recording-condition selection menu M70 is selected while the first recording condition or the second recording condition is selected, the comparison-image generation controller 552 outputs to the recording controller 355 either one of the first and second set recording-condition informations corresponding to the selected recording condition.

### [Advantage(s) of Fifth Exemplary Embodiment]

In the fifth exemplary embodiment as described above, the following advantages can be obtained in addition to the advantages of the third and fourth exemplary embodiments.

The image processor 500 includes the encoder 531, the decoder 533 and the third image memory 534. The image processor 500 controls third image memory 534 to store the first record-adjusted image data generated by the encoder 531 and the decoder 533, and outputs the second record-adjusted image data generated thereafter to the image combining section 540 while outputting the first record-adjusted image data recorded on the third image memory 534 to the image combining section 540.
Thus, only one component is required for performing each of an encode processing and a decode processing. As compared with the fourth exemplary embodiment in which two components are required for each processing, arrangements can be simplified and costs can be lowered in the fifth exemplary embodiment.

### [Sixth Exemplary Embodiment]

A sixth exemplary embodiment of the invention will be described below with reference to the attached drawings.
The components for performing the same processings as in the first to fifth exemplary embodiments will be denoted with the same names and the same numerals, and the description thereof will be omitted or simplified. Also, the components for performing substantially the same processings as in the first to fifth exemplary embodiments will be denoted with the same names, and the description thereof will be omitted or simplified.

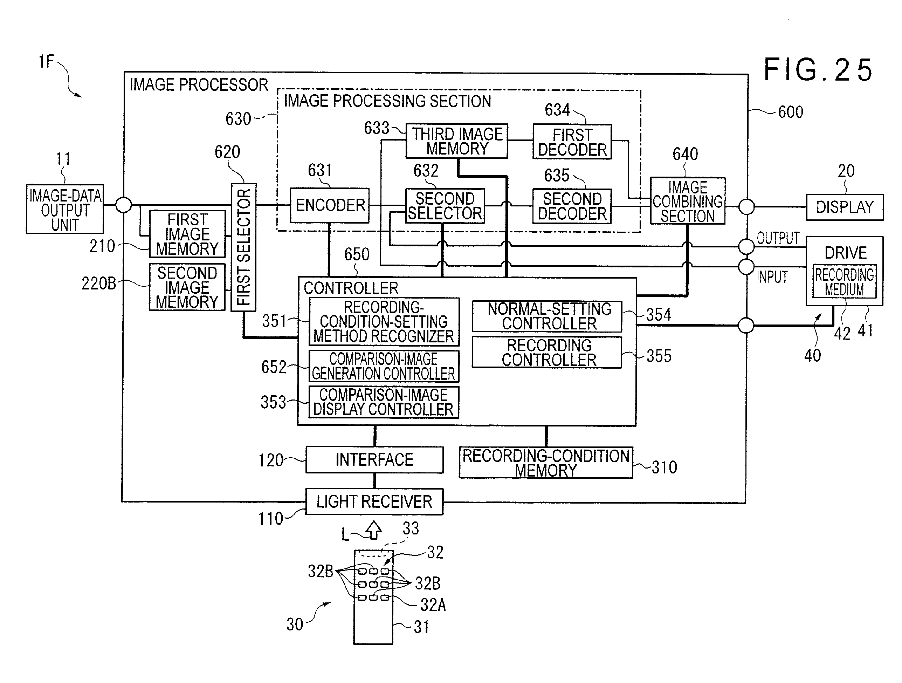

Fig. 25 is a block diagram schematically showing an arrangement of an image processor system.
It should be noted that a recording-condition setting processing and a comparison setting processing according to the sixth exemplary embodiment are the same as the processings shown in Figs. 20 and 23, and therefore an operation of the image processor system will not be duplicately described.

### [Arrangement of Image Processor System]

In Fig. 25, the numeral 1F denotes the image processor system.
The image processor system 1F includes an image-data output unit 11, a display 20, a remote controller 30, a storage 40, and an image processor 600.
The image processor 600 of the sixth exemplary embodiment generates first and second record-adjusted image data by performing processings different from those of the image processors 400 and 500 of the fourth and fifth exemplary embodiments.

The image processor 600 includes: a light receiver 110; an interface 120; a first image memory 210; a second image memory 220B; a recording-condition memory 310; a first selector 620 serving as an outputted-image acquirer; an image processing section 630 serving as a processed-image generator; an image combining section 640 serving as a processed-image display controller included in an image display controller and a computing unit; and a controller 650 serving as the image display controller and the computing unit.

Three input terminals of the first selector 620 are connected to data output terminals of the image-data output unit 11, the first image memory 210 and the second image memory 220B, respectively, by a data line. A data output terminal of the first image memory 620 is connected to a data input terminal of a later-described encoder 631 of the image processing section 630 by a data line. A control-signal input terminal of the first selector 620 is connected to a control-signal output terminal of the controller 650 by a control line.
The first selector 620 outputs to the encoder 631 an outputted image data from the image-data output unit 11, an outputted image data stored on the first image memory 210, and a reference image data stored in the second image memory 220B as necessary.

The image processor 630 includes an encoder 631, a second selector 632 serving as a storage-and-output processor, a third image memory 633 serving as a storage-and output processor, a first decoder 634, and a second decoder 635.

A data output terminal of the encoder 631 is connected to a data input terminal of the second selector 632, a data input terminal of the storage 40, and a data input terminal of the third image memory 633 by a data line of which an end is branched. A control-signal input terminal of the encoder 631 is connected to a control-signal output terminal of the controller 650 by a control line.
The encoder 631 acquires the outputted image data and the reference image data from the first selector 620 while acquiring first and second setting-recording-condition informations from the controller 650 at different timings. Then, the encoder 631 outputs to the second selector 632 and the third image memory 633 first and second encode-processed image data generated by encoding the outputted image data and the reference image data under first and second recording conditions at different timings. The first encode-processed image data is outputted to the storage 40 as necessary.
Incidentally, the encode-processed image data outputted to and written into the storage 40 corresponds to a selectively-processed image data according to the invention.

Two data input terminals of the second selector 632 are connected to a data output terminal of the encoder 631 and a data output terminal of the storage 40, respectively, by a data line. A data output terminal of the second selector 632 is connected to a data input terminal of the second decoder 635 by a data line. A control-signal input terminal of the second selector 632 is connected to a control-signal output terminal of the controller 650 by a control line.
The second selector 632 acquires the second encode-processed image data from the encoder 631 based on a second selective signal from the controller 650. Then, the second selector 632 outputs the second encode-processed image data to the second decoder 635. The second selector 632 further outputs to the second decoder 635 the encode-processed image data acquired from the storage 40 based on the second selective signal.
The second selector 632 also acquires the first encode-processed image data from the encoder 631 under the control of the controller 650. However, the second selector 632 does not output the first encode-processed image data to the second decoder 635.

A data output terminal of the third image memory 633 is connected to the first decoder 634 by a data line. A control-signal input terminal of the third image memory 633 is connected to a control-signal output terminal of the controller 650 by a control line.
When acquiring the first record-adjusted image data from the encoder 631, the third image memory 633 records the first record-adjusted image data under the control of the controller 650. Subsequently, the third image memory 633 acquires the recorded first record-adjusted image data and outputs the recorded first record-adjusted image data to the first decoder 634 under the control of the controller 650.
The second record-adjusted image data is inputted to the third image memory 633 from the encoder 631 as necessary. However, the third image memory 534 does not record this second record-adjusted image data.

The data output terminals of the first and second decoders 634 and 635 are respectively connected to two data input terminals of the image combining section 640.
The first decoder 634 acquires the first encode-processed image data from the third image memory 633 and generates the first record-adjusted image data. Then, the first decoder 634 outputs the generated first record-adjusted image data to the image combining section 640. The second decoder 635 acquires the second encode-processed image data from the second selector 632 to generate the second record-adjusted image data. Then, the second decoder outputs the generated second record-adjusted image data to the image combining section 640.
Here, the first and second decoders 634 and 635 generate the first and second record-adjusted image data based on the first and second encode-processed image data generated by performing the encoding processings at different timings. Accordingly, when the outputted image, which is a motion image, is selected as a comparison image, the first and second record-adjusted images each may be an image of a different scene.
On the other hand, when the temporary recorded image or the reference image is selected as the comparison image, the encoder 631 can acquire the identical outputted image data or reference image data recorded in the first and second image memories 210 and 220B from the first selector 620 at different timings. Thus, even when the temporary recorded image or the reference image is a motion image, the first and second record-adjusted image each can be an image of the same scene.

Two data input terminals of the image combining section 640 are connected to a data output terminal of the first decoder 634 and a data output terminal of the second decoder 634, respectively, by a data line. A data output terminal of the image combining section 640 is connected to a data input terminal of the display 20 by a data line. A control-signal input terminal of the image combining section 640 is connected to a control-signal output terminal of the controller 650 by a control line.
The image combining section 640 acquires the first and second record-adjusted image data from the first and second decoders 634 and 635, and performs the same processings as the image combining section 540 of the fifth exemplary embodiment. Specifically, the image combining section 640 displays a comparative-screen-pattern selection menu M30, a comparing-method selection menu M40, a comparison-image selection menu M50, a recording-condition-setting-method selection menu M60, a recording-condition selection menu M70, a first time-division-comparison image J30, a second time-division-comparison image J40 and a dual-screen-comparison image N20 as necessary.

The controller 650 includes: a recording-condition-setting method recognizer 351; a comparison-image generation controller 652 serving as a processed-image generation controller and selective-processing recognizer; a comparison-image display controller 353; a normal-setting controller 354; and a recording controller 355. The above-listed components may be configured as programs.

The comparison-image generation controller 652 controls the image combining section 640 to perform a display processing of the comparison-image selection menu M50. When recognizing that the ongoing-inputted image selective information M52 is selected, the comparison-image generation controller 652 outputs to the first selector 620 a first selective signal for commanding that either one of the outputted image data being outputted, the outputted image data recorded on the first image memory 210 and the reference image data be outputted to the image processing section 630.
Further, the comparison-image generation controller 652 controls the image combining section 640 to display the recording-condition selection menu M70 as necessary and outputs the first setting-recording-condition information to the encoder 631 while controlling the third image memory 633 to record the first encode-processed image data generated by the encoder 631. Then, the comparison-image generation controller 652 outputs to the encoder 631 the second setting-recording-condition information and outputs to the second selector 632 a second selective signal for commanding that the second encode-processed image data from the encoder 631 be outputted to the second decoder 635. The second decoder 635 generates the second record-adjusted image data and outputs the generated second record-adjusted image data to the image combining section 640. Further, the comparison-image generation controller 652 controls the third image memory 633 at substantially the same timing as generating the second record-adjusted image data in order to output the first encode-processed image data to the first decoder 634. Subsequently, the first decoder 634 generates the first record-adjusted image data and outputs the first record-adjusted image data to the image processing section 640.
Under such a control, the image combining section 640 can acquire the first and second record-adjusted image data at substantially the same timing.
Also, when recognizing that the setting-termination selective information M77 of the recording-condition selection menu M70 is selected while the first recording condition or the second recording condition is selected, the comparison-image generation controller 652 outputs to the recording controller 355 either one of the first and second setting-recording-condition informations corresponding to the selected recording condition.

### [Advantage(s) of Sixth Exemplary Embodiment]

In the sixth exemplary embodiment as described above, the following advantages can be obtained in addition to the advantages of the third and fourth exemplary embodiments.

The image processor 600 includes the encoder 631, the second selector 632, the third image memory 633, the first decoder 634, and the second decoder 635. The third image memory 633 records the first encode-processed image data generated by the encoder 631 and outputs the second encode-processed image data generated thereafter to the second decoder 635, while outputting the first encode-processed image data recorded on the third image memory 633 to the first decoder 634.
Thus, only one component is required for performing encode processing in the sixth exemplary embodiment. As compared with the fourth exemplary embodiment in which two components are required for encode processing, arrangements can be simplified and costs can be lowered.

### [Seventh Exemplary Embodiment]

A seventh exemplary embodiment of the invention will be described below with reference to the attached drawings.
The components for performing the same processings as in the first to sixth exemplary embodiments will be denoted with the same names and the same numerals, and the description thereof will be omitted or simplified. Also, the components for performing substantially the same processings as in the first to sixth exemplary embodiments will be denoted with the same names, and the description thereof will be omitted or simplified.

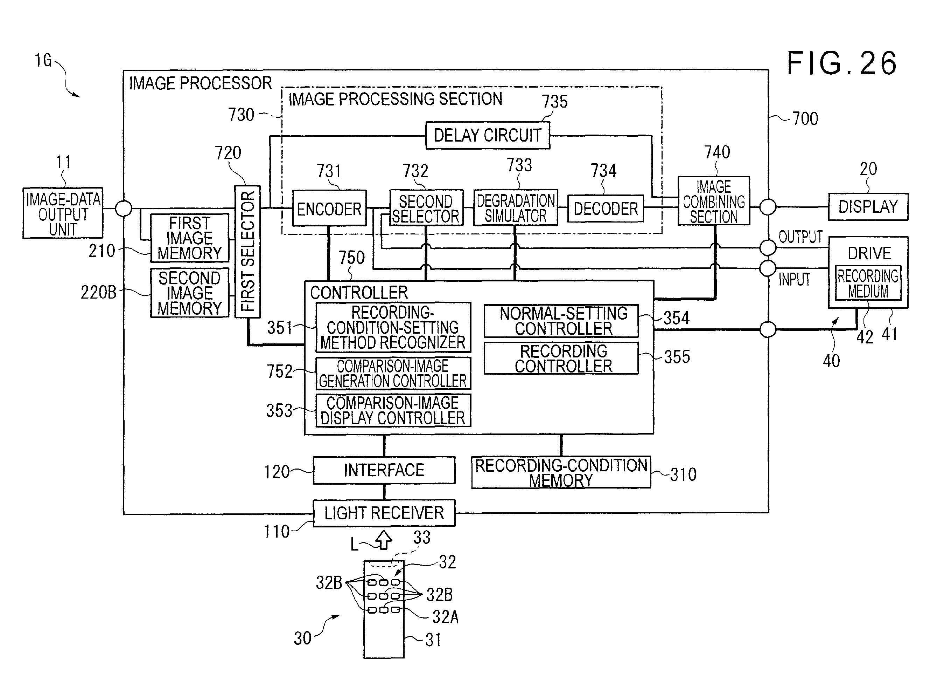

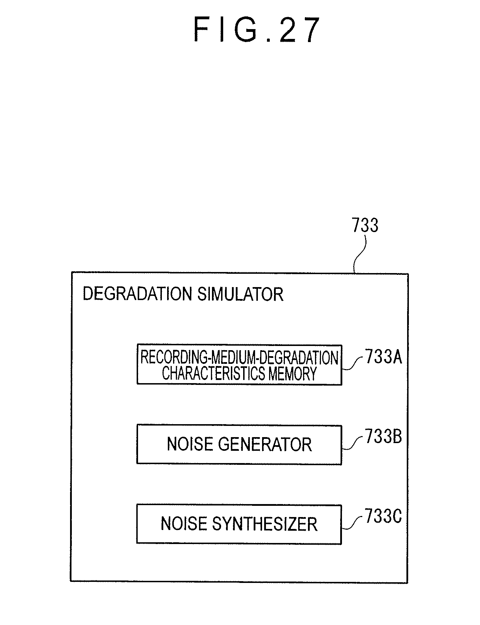

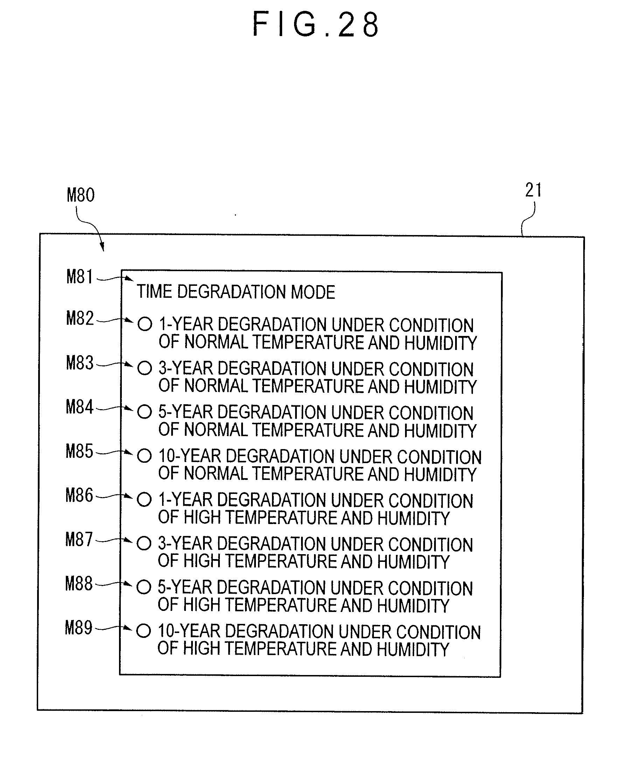

Fig. 26 is a block diagram schematically showing an arrangement of an image processor system. Fig. 27 schematically shows an arrangement of a degradation simulator. Fig. 28 schematically shows an arrangement of a degradation-mode selection menu.

### [Arrangement of Image Processor System]

In Fig. 26, the numeral 1 G denotes the image processor system.
The image processor system 1G includes an image-data output unit 11, a display 20, a remote controller 30, a storage 40, and an image processor 700.
The image processor 700 of the seventh exemplary embodiment generates first and second record-adjusted image data by performing a processing different from the image processors 400, 500 and 600 of the fourth to sixth exemplary embodiments.

The image processor 700 includes: a light receiver 110; an interface 120; a first image memory 210; a second image memory 220B; a recording-condition memory 310; a first selector 720 serving as an outputted-image acquirer; an image processing section 730 serving as a processed-image generator; an image combining section 740 serving as a processed-image display controller included in an image display controller and a computing unit; and a controller 750 serving as the image display controller and the computing unit.

Three input terminals of the first selector 720 are connected to data output terminals of the image-data output unit 11, the first image memory 210 and the second image memory 220B, respectively, by a data line. One data output terminal of the first selector 720 is connected to a data input terminal of a later-described encoder 731 in the image processor 730 and a data input terminal of a delay circuit 735 in the image processor 730 by a data line of which an end is branched. A control-signal input terminal of the first selector 720 is connected to a control-signal output terminal of the controller 750 by a control line.
The first selector 720 selects either one of an outputted image data from the image-data output unit 11, an outputted image data from the first image memory 210 and a reference image data from the second image memory 220B based on a first selective signal from the controller 750 and performs an outputting processing to output the selected image data to the encoder 731 and the delay circuit 735 at the same timing.

The image processor 730 includes the encoder 731, a second selector 732, a degradation simulator 733, a decoder 734 and the delay circuit 735 serving as a delay unit.

One data output terminal of the encoder 731 is connected to a data input terminal of the second selector 732 and a data input terminal of the storage 40 by a data line of which an end is branched. A control-signal input terminal of the encoder 731 is connected to a control-signal output terminal of the controller 750 by a control line.
Upon acquiring the outputted image data and the reference image data from the first selector 720 while acquiring the setting-recording-condition information from the controller 750, the encoder 731 generates a first encode-processed image data and outputs the generated first encode-processed image data to the second selector 732 and the storage 40.
The encode-processed image data outputted to and written into the storage 40 corresponds to a selectively-processed image data according to the invention.

Two data input terminals of the second selector 732 are connected to a data output terminal of the encoder 731 and a data output terminal of the storage 40, respectively, by data lines. Also, a data output terminal of the second selector 732 is connected to a data input terminal of the degradation simulator 733 by a data line. A control-signal input terminal of the second selector 732 is connected to a control-signal output terminal of the controller 750 by a control line.
The second selector 732 selects one of the encode-processed image data acquired from the encoder 731 and the storage 40 based on a second selective signal from the controller 750. Then, the second selector 732 outputs the selected encode-processed image data to the degradation simulator 733.

A data output terminal of the degradation simulator 733 is connected to the data input terminal of the decoder 734 by a data line. A control-signal input terminal of the degradation simulator 733 is connected to a control-signal output terminal of the controller 750 by a control line. The degradation simulator 733 includes a recording-medium-degradation characteristics memory 733A, a noise generator 733B, and a noise synthesizer 733C as shown in Fig. 27.

The recording-medium-degradation characteristics memory 733A records a plurality of degradation-characteristics informations in a manner readable as necessary.
The degradation-characteristics informations include informations regarding degradation characteristics of the storage 42 after being stored in one year, three years, five years, and ten years under a normal temperature and humidity condition and under a high temperature and humidity condition, respectively. Specifically, the degradation-characteristics informations include informations regarding how "0" and "1" included in an encode-processed image data recorded on the recording medium 42 is deteriorated depending on storage environments or periods.
The degradation-characteristics informations preferably include contents checked by experiments or the like in advance.

The noise generator 733B acquires from the controller 750 a time-degradation-condition information regarding a storage environment and a storage period selected by a user, and acquires from the recording-medium-degradation characteristics memory 733A the degradation-characteristics information accorded with the time-degradation-condition information. Then, the noise generator 733B outputs a noise accorded with the degradation-characteristics information to the noise synthesizer 733C.
Here, the noise generator 733B outputs to the noise synthesizer 733C one or both of a noise that randomly changes "0" and "1" of data in accordance with a specific incidence rate (hereinafter referred to as a white noise) and a noise that changes "0" and "1" of a specific part of data (hereinafter referred to as a burst noise).

Upon acquiring the encode-processed image data from the second selector 732 while acquiring a noise from the noise generator 733B, the noise synthesizer 733C causes the noise on the encode-processed image data and outputs the encode-processed image data to the decoder 734. Based on the noised encode-processed image data, a record-adjusted image is displayed in which a degradation state of image due to the degradation of the storage 42 is reflected.

The degradation simulator 733 outputs the non-noised encode-processed image data to the decoder 734 as necessary.

A data output terminal of the decoder 734 is connected to a data input terminal of the image combining section 740 by a data line.
The decoder 734 acquires from the degradation simulator 733 the noised encode-processed image data as necessary. Then, the decoder 734 outputs to the image combining section 740 the record-adjusted image data accorded with the encode-processed image data.

A data output terminal of the delay circuit 735 is connected to the data input terminal of the image combining section 740 by a data line.
Upon acquiring the outputted image data and the like from the first selector 720, the delay circuit 735 outputs to the image combining section 740 the outputted image data and the like as a record-unadjusted image data after lapse of time equivalent to the time required for processings in the encoder 731, the degradation simulator 733, and the decoder 734.

Two data input terminals of the image combining section 740 are respectively connected to a data output terminal of the decoder 734 and a data output terminal of the delay circuit 735 by a data line. A data output terminal of the image combining section 740 is connected to a data input terminal of the display 20 by a data line. A control-signal input terminal of the image combining section 740 is connected to a control-signal output terminal of the controller 750 by a control line.
The image combining section 740 is controlled by the controller 750 to display a degradation-mode selection menu M80 on the display area 21 as shown in Fig. 28. The degradation-mode selection menu M80 includes: a menu content information M81; first, second, third, and fourth degradation selective informations M82, M83, M84, and M85 to be selected when modes after elapse of one, three, five, and ten years are set under a condition of normal temperature and humidity; fifth, sixth, seventh, and eighth degradation selective informations M86, M87, M88 and M89 to be selected when modes after elapse of one, three, five, ten years are set under a condition of high temperature and humidity. The informations M81 to M89 are vertically in juxtaposition
The image combining section 740 displays a cursor (not shown) superposed on one of the first to eighth degradation selective informations M82 to M89, and moves the cursor as necessary under the control by the controller 750.

The image combining section 740 also displays a comparative-screen-pattern selection menu M30, a comparing-method selection menu M40, a comparison-image selection menu M50, a recording-condition-setting-method selection menu M60, and a recording-condition selection menu M70 as necessary. Further, the image combining section 740 acquires the record-adjusted image data and the record-unadjusted image data from the image processing section 730, and displays a first time-division-comparison image J30, a second time-division-comparison image J40, and a dual-screen-comparison image N20 as necessary.

The controller 750 includes: a recording-condition-setting method recognizer 351; a comparison-image generation controller 752 serving as a processed-image generation controller and selective-processing recognizer; a comparison-image display controller 353; a normal-setting controller 354; and a recording controller 355. The above-listed components may be configured as programs.

The comparison-image generation controller 752 controls the image combining section 740 to perform a display processing of the comparison-image selection menu M50. When recognizing that the ongoing-inputted image selective information M52 is selected, the comparison-image generation controller 752 outputs to the first selector 720 a first selective signal for commanding that either one of the outputted image data being outputted, the outputted image data recorded on the first image memory 210 and the reference image data be outputted to the image processing section 730.
The comparison-image generation controller 752 also controls the image combining section 740 to display the degradation-mode selection menu M80 as necessary, and outputs to the degradation simulator 733 the time-degradation-condition information regarding a storage environment and a storage period (i.e., a time-degradation condition) selected by a user based on an input-setting operation.

The comparison-image generation controller 752 further controls the image combining section 740 to display the recording-condition selection menu M70, and outputs to the encoder 731 the setting-recording-condition information based on an input-setting operation while outputting to the second selector 732 a second selective signal for commanding that the encode-processed image data from the encoder 731 be outputted to the degradation simulator 733. The degradation simulator 733 and the decoder 734 generate the noised record-adjusted image data as necessary and outputs the record-adjusted image data to the image combining section 740. The comparison-image generation controller 752 further outputs the setting-recording-condition information to the image combining section 740.
When recognizing that the setting-termination selective information M77 of the recording-condition selection menu M70 is selected, the comparison-image generation controller 752 recognizes that the user has selected the recording condition corresponding to the setting-recording-condition information and outputs the setting-recording-condition information to the recording controller 355.

### [Operation(s) of Image Processor System]

Now, operation(s) of the image processor system 1G will be described with reference to the attached drawings.

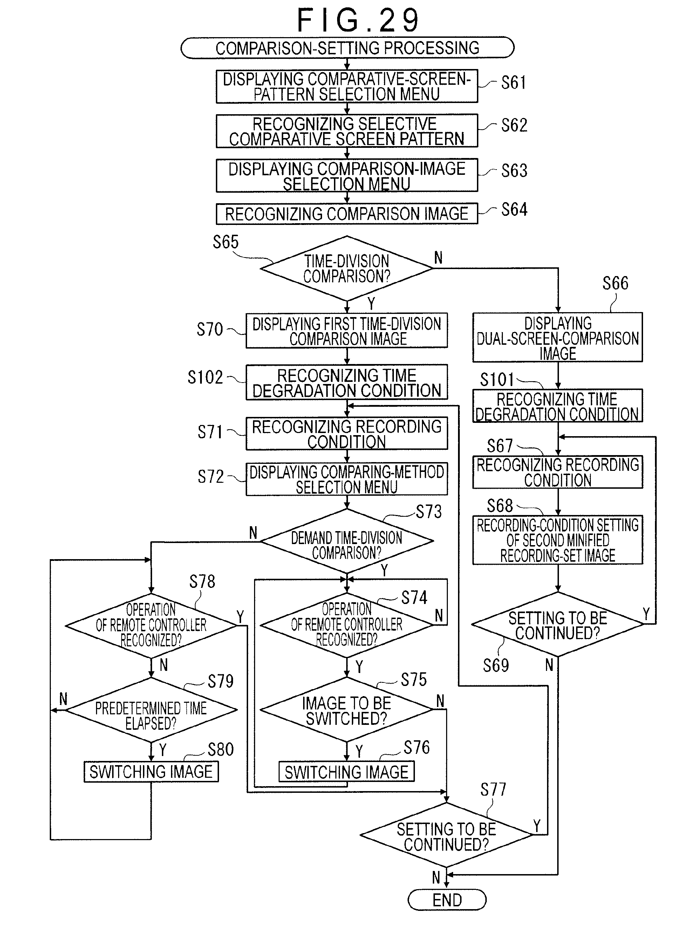

Fig. 29 is a flow chart showing a comparison setting processing.
It should be noted that, in the image processor system 1G, the same processing is performed as the recording-condition setting processing shown in the flow chart of Fig. 20 according to the third exemplary embodiment, and only a comparison setting processing in the step S53 is different from that of the third exemplary embodiment. In the comparison setting processing shown in Fig. 29, the same operation(s) as in the third to seventh exemplary embodiments will be denoted with the same numerals, the description of which will be simplified.

The image processor 700 of the image processor system 1G performs the processings of the steps S51 to S55 as shown in Fig. 20.
In the comparison setting processing in the step S53, after the image processor 700 performs the processings of the steps S61 to S66 as shown in Fig. 29, the degradation-mode selection menu M80 is displayed and the image processor 700 recognizes a time-degradation condition inputted and set by a user (step S101). Subsequently, the image processor 700 performs the processings of the steps S67 and S68 to display the second noised minified recording-setting image N23. Then, the image processor 700 performs the processing of the step S69.
The image processor 700 also performs the processing of the step S70 to display the degradation-mode selection menu M80 and recognizes the time-degradation condition that is inputted and set by the user (step S102). Subsequently, the processings of the steps S71 to S80 are performed to display the noised second time-division-comparison image J40 as necessary.

### [Advantage(s) of Seventh Exemplary Embodiment]

In the seventh exemplary embodiment as described above, the following advantages can be obtained in addition to the advantages of the third exemplary embodiment.

The image processor 730 includes the degradation simulator 733 for causing a noise on the encode-processed image data corresponding to a storage state of the recording medium 42.
Thus, the record-adjusted image reflecting a degradation state of image due to degradation of the recording medium 42 can be displayed based on the encode-processed image data that generates the noise. Further, the recording condition can be properly set.

### [Eighth Exemplary Embodiment]

An eighth exemplary embodiment of the invention will be described below with reference to the attached drawings.
In the eighth exemplary embodiment, an image processor system including an image display controller and an image processor according to the invention, in which two images of which conditions for quality adjustment processing (processing) are mutually different, is exemplified. Specifically, an arrangement in which a motion compensation is performed in addition to the quality adjustment processing of the first exemplary embodiment will be described.
The image(s) is exemplarily a motion image(s). Operation(s) of the image processor is the same as that of the first exemplary embodiment, and the description thereof will be omitted.

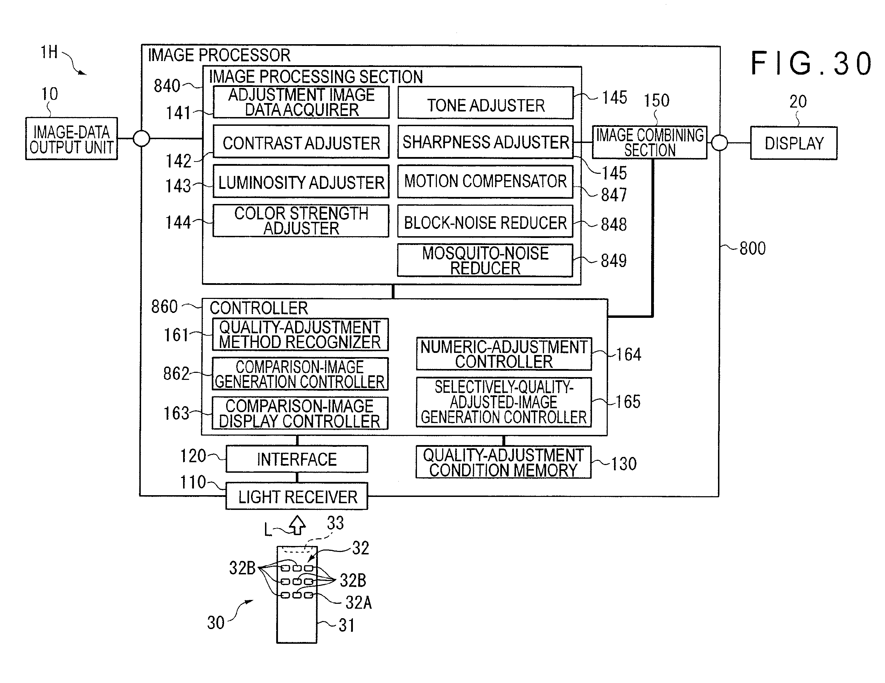

Fig. 30 is a block diagram schematically showing an arrangement of the image processor system.

### [Arrangement of Image Processor System]

In Fig. 30, the numeral 1 H denotes the image processor system.
In the image processor system 1H, only an image processor 800 has a different arrangement from that of the first exemplary embodiment. The image processor 800 includes an image processing section 840 serving as an outputted image acquirer and a processed-image generator, and a controller 860 serving as an image display controller and a computing unit. Only the image processing 840 and the controller 860 are arranged differently from those of the image processor 100.

The image processing section 840 includes: a to-be-adjusted image data acquirer 141; a contrast adjuster 142; a luminosity adjuster 143; a color strength adjuster 144; a tone adjuster 145; a sharpness adjuster 146; a motion compensator 847; a block-noise reducer 848; and a mosquito-noise reducer 849.
The motion compensator 847 performs a motion compensation processing on an outputted image based on a plurality of outputted image data under the control of the controller 860.
The block-noise reducer 848 provides a noise-reducing filter on a block boundary where a block-noise is generated under the control of the controller 860, thereby performing a block-noise reduction processing on an outputted image generated by decoding an outputted image data corded per a block.
The mosquito-noise reducer 849 applies a coring technique in which an image signal having a lower signal level than a predetermined signal level is regarded as a zero signal, thereby performing a mosquito-noise reduction processing on the outputted image generated by decoding an outputted image data corded per a block.

In the controller 860, only a comparison-image generation controller 862 serving as a processed-image generation controller and a selective-processing recognizer has a different arrangement as compared with the controller 160.
The comparison-image generation controller 862 performs the following processings in addition to the same processings as the comparison-image generation controller 162. When one of the motion compensation processing, the block-noise reduction processing, and the mosquito-noise reduction processing is selected by a user under a predetermined condition while a quality-comparison selection information M23 is selected, the comparison-image generation controller 862 controls a second quality-adjustment condition information to record a command for performing the selected one of the motion compensation processing, the block-noise reduction processing, and the mosquito-noise reduction processing and an adjusted value corresponding to a position of an adjustment-degree graphic M22C. Then, the second quality-adjustment condition information is outputted to the image processing section 840 to generate a second quality-adjustment image data subjected to the selected processing.
Also, when an adjustment-termination selective information M24 is selected, a content of the first quality-adjustment condition information is updated to a content of the second quality-adjustment condition information.

### [Advantage(s) of Eighth Exemplary Embodiment]

In the eighth exemplary embodiment as described above, the following advantages can be obtained in addition to the advantages of the first exemplary embodiment.

In the arrangement according to the eighth exemplary embodiment, in addition to the quality-adjustment processing, the selected one processing of the motion compensation processing, the block-noise reduction processing, and the mosquito-noise reduction processing can be performed on the second quality-adjusted image, and therefore the second quality-adjusted image can be used for comparison.
Accordingly, when the motion compensation processing is selected, the motion compensation processing is performed. Thus, even when the movement between the outputted images is fast, more properly adjusted images can be compared and selected.
When the block-noise reduction processing is selected, the block-noise reducing processing is performed. Thus, even when a block-noise with MPEG compression is noticeably generated, more properly adjusted images can be compared and selected.
When the mosquito-noise reduction processing is selected, the mosquito-noise reduction processing is performed. Thus, even when a mosquito-noise with MPEG compression is noticeably generated, more properly adjusted images can be compared and selected.
Incidentally, all of the motion compensation processing, the block-noise reduction processing, and the mosquito-noise reduction processing may be performed. Especially, when a compressibility rate is high, all three processings are preferably performed as necessary.

### [Ninth Exemplary Embodiment]

A ninth exemplary embodiment of the invention will be described below with reference to the attached drawings.
In the ninth exemplary embodiment, an image processor system according to the invention exemplarily displays two images of which conditions for encode processing of image data and quality-adjustment processing are mutually different. While two images of which conditions for encode processing are mutually different are displayed in the third exemplary embodiment, two images of which conditions for encode processing and quality-adjustment processing are mutually different are displayed in the ninth exemplary embodiment.
The image(s) is either a still image(s) or a motion image(s).
The components for performing the same processings as in the third exemplary embodiment will be denoted with the same names and the same numerals, and the description thereof will be omitted or simplified. Also, the components for performing substantially the same processings as in the third exemplary embodiment will be denoted with the same names, and the description thereof will be omitted or simplified.

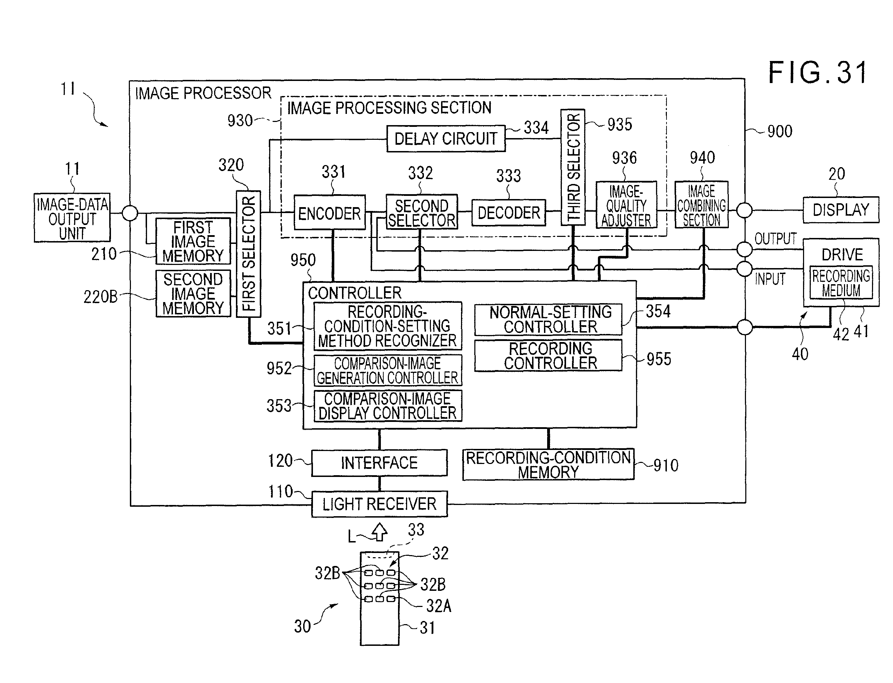

Fig. 31 is a block diagram schematically showing an arrangement of the image processor system.

In Fig. 31, the numeral 1I denotes the image processor system.
In the image processor system 1I, only an image processor 900 has a different arrangement from that in the image processor system 1C of the third exemplary embodiment. In the image processor 900, only a recording condition memory 910, an image processing section 930 serving as a processed-image generator, an image combining section 940 serving as a processed-image display controller included in an image display controller and a computing unit, and a controller 950 serving as the image display controller and the computing unit are arranged differently from those of the image processor 300.

Like the recording-condition memory 310 according to the third exemplary embodiment, a recording-condition memory 910 records an HD condition information, a high-quality condition information, a normal condition information, and a long-time condition information in a manner readable as necessary. Further, the recording-condition memory 910 records: an HD adjustment condition information; a high-quality adjustment condition information; a normal adjustment condition information; and a long-time adjustment condition information. These informations include quality-adjustment conditions under which outputted image data recorded in an HD mode, a high-quality mode, a normal mode, and a long-time mode are to be read and decoded, respectively. Furthermore, the recording-condition memory 910 records an uncompressed adjustment condition information including a quality-adjustment condition under a condition that an image data is not compressed.
The HD adjustment condition information, the high-quality adjustment condition information, the normal adjustment condition information, the long-time adjustment condition information, and the uncompressed adjustment information record adjusted values of contrast, chromatic luminosity, color strength, tone, sharpness, motion compensation, block-noise reduction, and mosquito-noise reduction, all of which are adjustable by the image processing section 930.
For example, when reading and decoding the image data recorded in the long-time mode based on the long-time condition information, the long-time adjustment condition information records a command for performing a sharpness adjustment as a quality-adjustment processing. Also, the HD adjustment condition information records a set value of the sharpness adjustment when reading and decoding the image data recorded in the HD mode.
The above processings are performed from the following reasons. Since the compressibility rate is high in the long-time mode, high-frequency components may be deteriorated and an image may be blurry as compared with an original image. At this time, an image adjustment for enhancing the high-frequency components by performing the sharpness adjustment may be effective. Also, since the compressibility rate is low in the HD mode, noise components may be noticeable by performing the sharpness adjustment in the HD mode.
Like the sharpness adjustment, set values of the block-noise reduction and the mosquito-noise reduction are also recorded on the recording-condition memory 910 corresponding to compressibility rates, i.e., recording modes. Here, the recording-modes include the HD mode, the high-quality mode, the normal mode, and the long-time mode. In short, typically most suitable quality-adjustment condition informations corresponding to the recording modes are recorded on the recording-condition memory 910.
Typically, as the compressibility rate is higher, block-noise and mosquito-noise become more noticeable. Therefore, it is preferable that the set values of the block-noise reduction and the mosquito-noise reduction are set to be higher (i.e., the noise-reduction is increased) as the compressibility rate is higher.
When the recording mode is set, an information regarding the quality-adjustment condition corresponding to the recording mode is recorded by default on the recording-condition memory 910.

The image processing section 930 includes an encoder 331, a second selector 332, a decoder 333, a delay circuit 334, a third selector 935, and an image-quality adjuster 936 serving as a processed-image generator.
Data output terminals of the decoder 333 and the delay circuit 334 are respectively connected to a data input terminal of the third selector 935.

A data output terminal of the third selector 935 is connected to a data input terminal of the image-quality adjuster 936 by a data line. A control-signal input terminal of the third selector 935 is connected to a control-signal output terminal of the controller 950 by a control line.
The third selector 935 is controlled by the controller 950 to output to the image-quality adjuster 936 the outputted image data acquired from the decoder 333 and the delay circuit 334 at different timings.

A data output terminal of the image-quality adjuster 936 is connected to a data input terminal of the image combining section 940 by a data line. A control-signal input terminal of the image-quality adjuster 936 is connected to a control-signal output terminal of the controller 950 by a control line.
The image-quality adjuster 936 is controlled by the controlled 950 to perform the quality adjustment processing regarding contrast, chromatic luminosity, color strength, tone, sharpness, motion compensation, block-noise reduction, and mosquito-noise reduction corresponding to the encode processing on the record-adjusted image data outputted from the decoder 333 as necessary, and outputs to the image combining section 940 this record-adjusted image data as a second recording-quality adjusted image data. Similarly, the image-quality adjuster 936 is controlled by the controller 950 to perform the quality adjustment processing regarding contrast, chromatic luminosity, color strength, tone, sharpness, motion compensation, block-noise reduction, and mosquito-noise reduction on the image data outputted from the delay circuit 334 as necessary and outputs to the image combining section 940 this image data as a first recording-quality adjusted image data.
Before the quality adjustment processing, the HD adjustment condition information, the high-quality adjustment condition information, the normal adjustment condition information, and the long-time adjustment condition information record the set values regarding image-quality adjustment which is set in advance. However, the set value regarding image-quality adjustment corresponding to the recording mode may be recorded by default on the recording-condition memory 910 when the recording mode is set as described above.

The image combining section 940 displays a recording-condition-setting method selection menu M60, a recording-condition selection menu M70, an image-quality adjustment menu M20, a comparative-screen-pattern selection menu M30, a comparing-method selection menu M40, and a comparison-image selection menu M50 as necessary.
The image combining section 940 acquires the first and second recording-quality adjusted image data from the image processing section 930, a setting-recording-condition information from the controller 950, a first quality adjustment condition information corresponding to a condition of uncompression, and a second quality adjustment condition information corresponding to a recording mode of the set-recording-condition information, and displays images similar to a first time-division-comparison image J30 based on the first recording-quality adjusted image data as shown in Fig. 17 and a second time-division-comparison image J40 based on the second recording-quality adjusted image data as shown in Fig. 18 in an alternately-switching manner as necessary. Alternatively, the image combining section 940 displays an image similar to a dual-screen-comparison image N20 as shown in Fig. 19.
In other words, the image combining section 940 displays an image generated by performing the encode processing and the quality adjustment processing corresponding to the encode processing and an image generated by performing the quality adjustment processing corresponding to the encode processing as necessary without performing the encode processing.
An information for indicating the quality adjustment condition similar to a first adjustment degree information J13 of the first exemplary embodiment may be displayed on the first and second time-division-comparison images J30 and J40 and the dual-screen-comparison image N20.

In the controller 950, only a comparison-image generation controller 952 serving as a processed-image generation controller and a selective-processing recognizer and a recording controller 955 have different arrangements as compared with the controller 350.

When the recording-condition selection menu M70 is displayed and the comparison-image generation controller 952 recognizes that the quality-comparison selective information M76 is selected while a predetermined recording condition is selected, the comparison-image generation controller 952 outputs to the encoder 331 the setting-recording-condition information regarding the recording condition while outputting to the second selector 332 a second selective signal. Also, the comparison-image generation controller 952 outputs to the third selector a third selective signal for commanding that outputted image data acquired from the decoder 333 and the delay circuit 334 be outputted to the image-quality adjuster 936 at different timings.
Further, the comparison-image generation controller 952 outputs to the image combining section 940 either one of the HD adjustment condition information, the high-quality adjustment condition information, the normal adjustment condition information, and the long-time adjustment condition information as a second quality-adjustment condition information based on the selected recording condition. Then, the image-quality-adjustment menu M20 based on the quality-adjustment condition information is displayed.
When recognizing that the adjustment-termination selective information M24 is selected while a predetermined quality-adjustment condition is selected by the user, the comparison-image generation controller 952 outputs to the image-quality adjuster 936 a second quality-adjustment condition information updated to the selected content and generates a second recording-quality adjusted image data based on the second record-adjusted image data acquired from the decoder 333.

The comparison-image generation controller 952 further outputs to the image combining section 940 an uncompressed adjustment condition information as a first quality-adjustment condition information to display the image-quality-adjustment menu M20 based on the first quality-adjustment condition information.
When recognizing that the adjustment-termination selective information M24 is selected while a predetermined quality-adjustment condition is selected by the user, the comparison-image generation controller 952 outputs to the image-quality adjuster 936 a first quality-adjustment condition information updated to the selected content and generates a first recording-quality adjusted image data based on the first record-adjusted image data acquired from the delay circuit 334.
Further, the setting-recording-condition information and the first and second quality-adjustment condition informations are further outputted to the image combining section 940 and the recording controller 955 as necessary.

When recognizing that the outputted image data is requested to be recorded, the recording controller 955 controls the storage 40 to write an encode-processed image data generated by performing the encode processing by the encoder 331.
At this time, as the quality adjustment condition when the encode-processed image data is reproduced, device informations regarding a device manufacturer, a model number and the like of the image processor 900 that performs the quality adjustment, and the second quality adjustment condition information are also written into the storage 40, so that the image data can be reproduced with the same quality.
The setting-recording-condition information and the second quality adjustment condition information can be written every series of scene during writing on a DVD, for instance, every scene change or every chapter during writing on a DVD. Specifically, the most suitable setting-recording-condition information and the most suitable second quality-adjustment condition information are selected depending on a feature of a scene such as a fast-moving scene, a slow-moving scene requiring a highly detailed display, a wholly dark scene. When reproducing, not only the setting-recording-condition information but also the second quality-adjustment condition information are reproduced, so that an image intended to be produced during recording can be reproduced. Such an arrangement for reproducing may be provided.
In addition, only the second quality-adjustment condition information can be changed every scene while the setting-recording-condition information is the same.
The device manufacturer and the model number of the image processor are written with the second quality-adjustment condition information because, when a device for recording a recording medium is different from a device for reproducing the recording medium, a quality-adjustment condition information in the device for recording is preferably converted into a quality-adjustment condition information in the device for reproducing.

### [Advantage(s) of Ninth Exemplary Embodiment]

In the ninth exemplary embodiment as described above, the following advantages can be obtained in addition to the advantages of the third exemplary embodiment.

The image processor 900 of the image processor system 1I generates the second recording-quality adjusted image data generated by performing the encode processing and the second quality adjustment processing, and the first recording-quality adjusted image data generated by performing the first quality adjustment processing without performing the encode processing. Then, the display 20 displays the second recording-quality adjusted image based on the second recording quality-adjusted image data and the first recording quality-adjusted image based on the first recording-quality adjusted image data.
Accordingly, the whole second recording-quality adjusted image and the whole first recording-quality adjusted image are displayed, so that a user can entirely view the images while viewing the images processed under different encoding conditions. Thus, a user can properly compare the images in terms of their encoding conditions. Also, even when degradation of image quality peculiar to encode processing is observed, a user can compare the images subjected to the image-quality adjustment corresponding to the degradation of image quality. Further, since different quality adjustment processings are performed on images subjected to different encode processings, a user can compare the images subjected to the proper quality adjustment processings as compared with an arrangement in which the same quality adjustment processings are performed. Thus, a user can properly compare the images to select a desired image.

The quality adjustment processing condition corresponding to the encoding condition is displayed as the image-quality adjustment menu M20, so that a user can adjust an image quality.
At this time, a user can predict how the image is degraded depending on encoding conditions, and what kind of quality adjustment processing is suitable for the degradation of the image. Thus, a user can perform an image-quality adjustment mainly under a condition suggested by the image-quality adjustment menu M20, which improves user-friendliness.

### [Modification(s) of Exemplary Embodiment(s)]

The invention is not limited to the first to the ninth exemplary embodiments as described above, but includes other modifications and improvements as long as an object of the invention can be achieved.

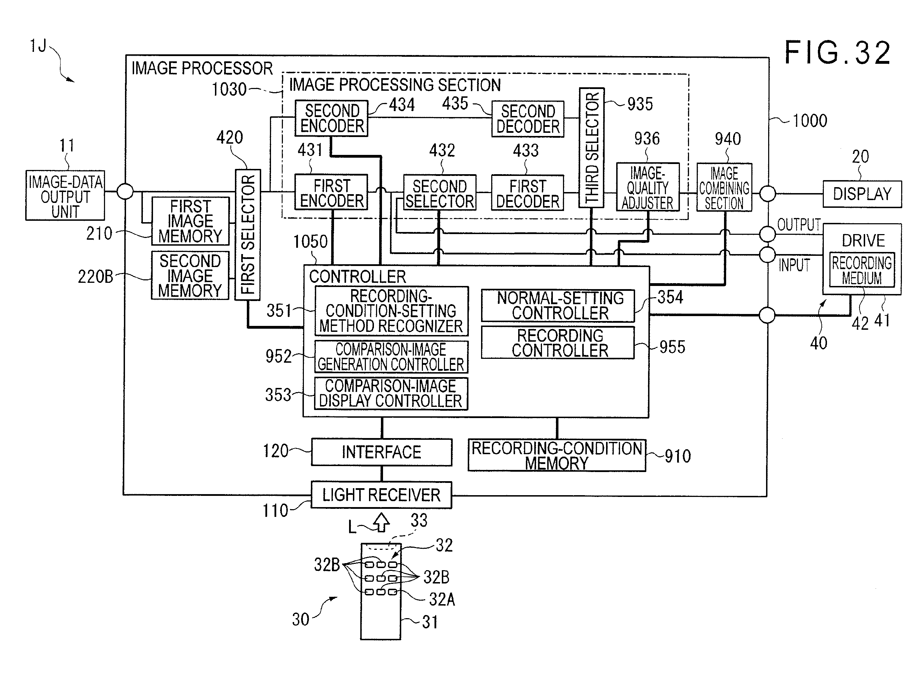

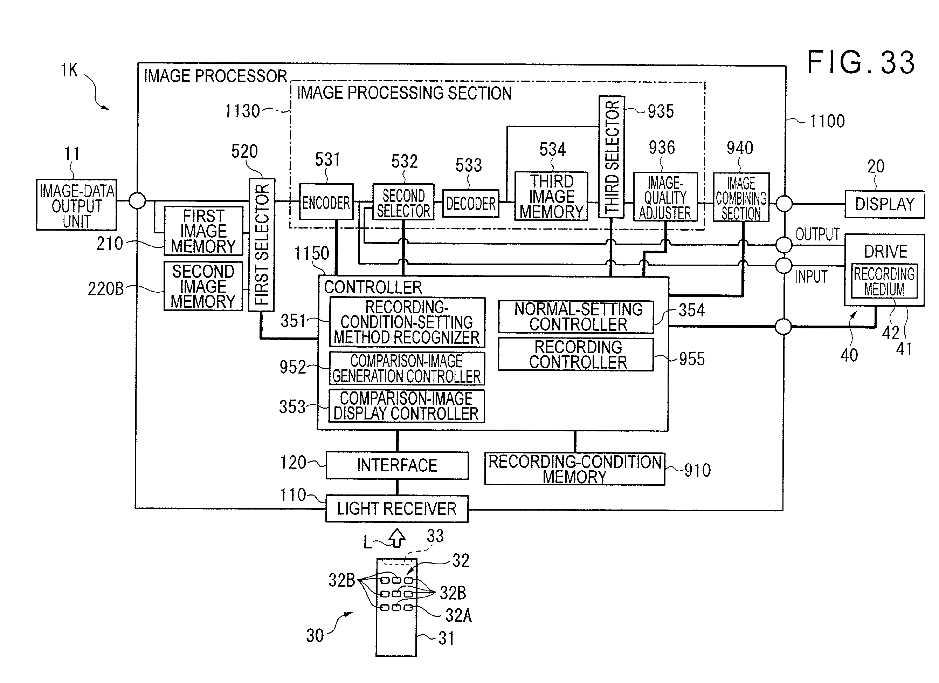

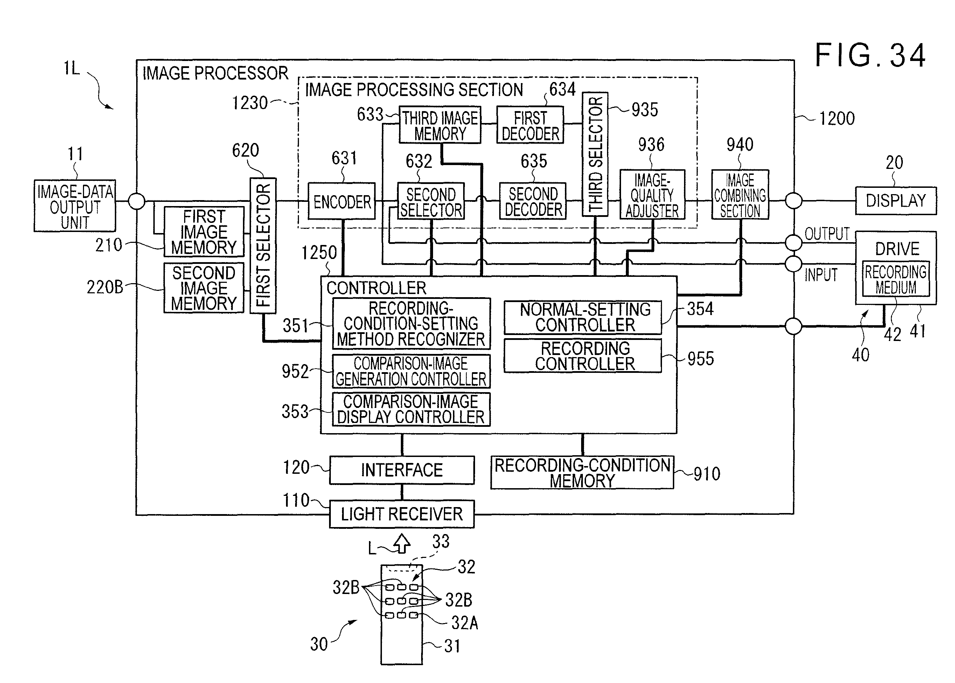

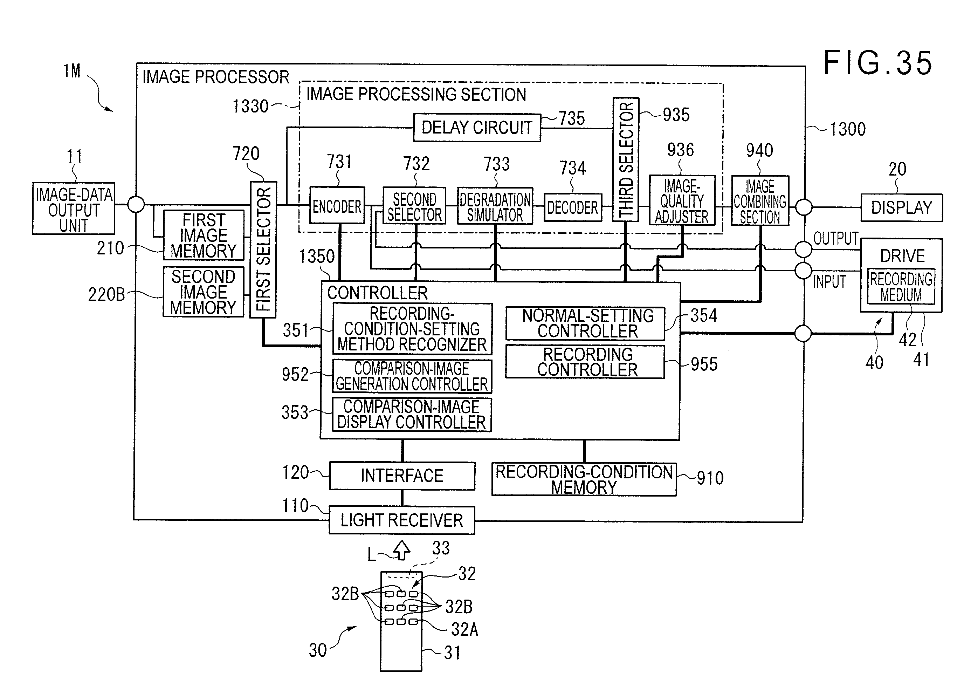

For example, similarly to the ninth exemplary embodiment, the image processor systems 1D to 1G according to the fourth to seventh exemplary embodiments may be provided with a section for displaying two images of which conditions for an encode processing and a quality adjustment processing are mutually different to form the image processor systems 1J to 1M as shown in Figs. 32 to 35.
As shown in Figs. 32 and 34, an image processing section 1030, 1230 of an image processor 1000, 1200 provided in the image processor system 1J, 1L include a third selector 935 connected to a first decoder 433, 634 and a second decoder 435, 635, and an image-quality adjuster 936. As shown in Fig. 33, an image processing section 1130 of an image processor 1100 provided in the image processor system 1K includes the third selector 935 connected to a decoder 533 and a third image memory 534, and the image-quality adjuster 936. Further, as shown in Fig. 35, an image processing section 1330 of an image processor 1300 provided in the image processor system 1M includes a third selector 935 connected to a decoder 734 and a delay circuit 735, and the image-quality adjuster 936.
The image-quality adjuster 936 of the image processor systems 1J to 1L acquires first and second record-adjusted image data subjected to encode processings under different encoding conditions. Subsequently, corresponding to the encoding conditions, quality adjustment processings set by a user as necessary are performed on the first and second record-adjusted image data. Then, the image-quality adjuster 936 outputs these record-adjusted image data to the image combining section 940 as first and second recording-quality adjusted image data processed under different conditions for the encode processing and the quality adjustment processing. Further, first and second recording-quality adjusted images accorded with the first and second recording-quality adjusted image data are displayed for time-division comparison or dual-screen comparison.
Also, in the image processor system 1M, an image generated by performing a quality adjustment processing corresponding to an encode processing and reflecting a degradation state due to degradation of a recording medium 42, and an original image are displayed in time division or on a dual screen.

In the first, second and eighth exemplary embodiments, the quality-adjustment condition memory 130 may record a quality-adjustment condition information including an adjustment condition suitable for a movie, sport, animation or the like, or an adjustment condition uniquely set by a user. Based on the recorded quality-adjustment condition information, the first and second time-division-comparison images J10 and J20 or the dual-screen-comparison image N10 may be displayed.
With this arrangement, time for specifically setting quality adjustment conditions by a user can be reduced, which allows an easy comparison of images.

In the first to ninth exemplary embodiments, only time-division comparison or dual-screen comparison may be conducted.
With this arrangement, an arrangement of the image processor 100, 200, 300, 400, 500, 600, 700, 800, 900 can be simplified.

Further, in the first to ninth exemplary embodiments, an operation button for displaying the first time-division-comparison image J10, J30, and an operation button for displaying the second time-division-comparison image J20, J40 may be separately provided on the remote controller 300.
With this arrangement, a user's desirable image may be displayed only by operating the operation button dedicated for displaying the desirable image. Further, if N operation buttons for displaying N time-division-comparison images are provided, a user's desirable image can be displayed only through one operation, i.e., only by operating one of the operation buttons corresponding to the desirable image.

Furthermore, a character, symbol, figure or the like may be displayed in different display formats when the first time-division-comparison image J10, J30 is displayed and when the second time-division-comparison image J20, J40 is displayed. Specifically, a red frame, figure or symbol may displayed on the first time-division-comparison image J10, J30, and a blue frame, figure or symbol may be displayed on the second time-division-comparison image J20, J40. A red color may be used for displaying the first adjustment-condition name information J12, J32. Alternatively, a red color may be used for displaying the second adjustment-condition name information J22, J42. Further, frames having different width, different figures or symbols, or different sized frames, figures, or symbols may be displayed corresponding to the first time-division-comparison image J10, J30 and the second time-division-comparison image J20, J40. Alternatively, a frame, figure, character, or symbol may be displayed on only one of the above-described images.
With such arrangements, a user can easily recognize an image quality and an encoding condition.
Incidentally, the same arrangement may be applied to the first and second minified quality-adjusted images N11 and N13 and the first and second adjustment-condition name informations N12 and N 14 of the dual-screen-comparison image N10, and the first and second minified recording-setting images N21 and N23 and the first and second adjustment condition name informations N22 and N24 of the dual-screen-comparison image N10.

Further, when a red frame or the like is displayed on the first time-division-comparison image J10, J30 and a blue frame or the like is displayed on the second time-division-comparison image J20, J40, the operation button for displaying the first time-division-comparison image J10, J30 may be colored in a red color and the operation button for displaying the second time-division-comparison image J20, J40 may be colored in a blue color.
With this arrangement, the color of the operation button and the color for representing the first time-division-comparison image J10, J30 or second time-division-comparison image J20, J40 are the same. Thus, the operation button can be easily found when a desirable image is to be displayed.

In the first, second, and eighth exemplary embodiments, the first and second adjustment degree information J13, J23 may not be displayed on the first and second time-division-comparison image J10, J20.
With this arrangement, an amount of information displayed as the first and second time-division-comparison image J10, J20 can be reduced, which improves visibility of the first and second quality-adjusted image J11, J21.

In addition, the second adjustment-degree graphic J23D for indicating a quality-adjustment condition of the first quality-adjusted image J11 may not be displayed on the second adjustment-degree information J23 of the second time-division-comparison image J20.
With this arrangement, an amount of information displayed as the second adjustment-degree information can be reduced, and the quality-adjustment condition of the second quality-adjusted image J21 based on the first adjustment-degree graphic J23C can be easily recognized.
In addition, an information for indicating the quality-adjustment condition of the first and second quality-adjusted images J11 and J21 may be displayed on the first adjustment degree information J13.

Further, the quality-adjustment condition of the first and second quality-adjusted images J11 and J21 may be displayed as a number or a string of characters. At this time, the number or the string of characters may be in the same display manner or a different display manner.
With this arrangement, as compared with an arrangement in which the quality-adjustment condition is shown in the number line J23B and the first and second adjustment-degree graphics J23C and J23D, the quality-adjustment condition can be recognized more accurately.

The first and second adjustment-degree graphics J23C and J23D may be displayed in the same shape and the same color, i.e., in the same display manner.

In addition, in the third to seventh, and ninth exemplary embodiments, an information regarding recording conditions of both first and second recording-setting images J31 and J41 may be displayed on at least one of the first and second time-division-comparison images J30 and J40. With this arrangement, the recording conditions may be displayed in a number, or in a graphic displayed at a position corresponding to the recording condition on the number line. Then, the recording conditions of the first and second recording-setting images J31 and J41 may be displayed in a different display manner.

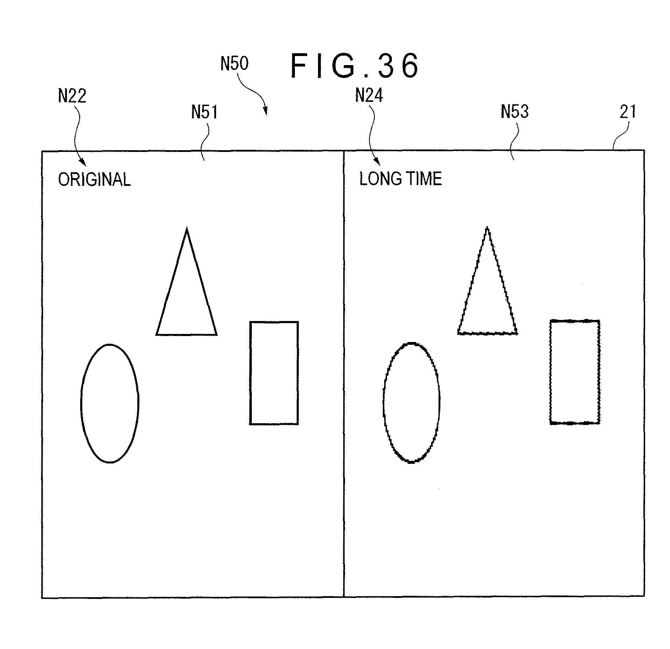

In the third to seventh, and the ninth exemplary embodiments, a dual-screen-comparison image N50 as shown in Fig. 36 may be displayed.
The dual-screen-comparison image N50 as shown in Fig. 36 includes: a first modified recording-setting image N51 displayed at the left of a display area 21; a first recording-setting-condition name information N22; a second modified recording-setting image N53 displayed at the right of the display area 21; and a second recording-setting-condition name information N24.
The first and second modified recording-setting images N51 and N53 are formed by changing the aspect ratio of the first and second recording-setting images J31 and J41 to have an approximately half of the horizontal length of the display 21 without changing the vertical length.
Accordingly, although a shape of an object displayed on the image may be modified, because the entire first and second record-adjusted images are displayed, a user can entirely view the images while viewing the images processed under different encoding conditions. Thus, a user can properly compare the images in terms of their encoding conditions.

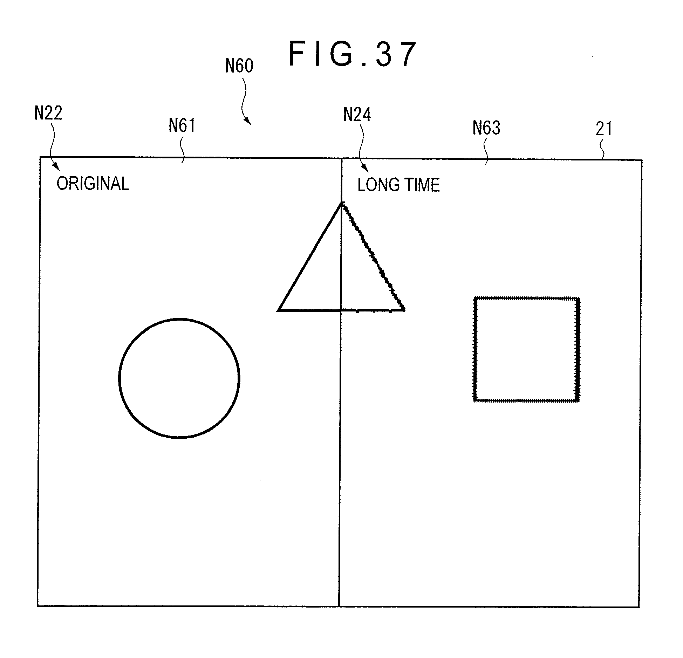

Further, in the third to seventh and the ninth exemplary embodiments, a dual-screen-comparison image N60 may be displayed as shown in Fig. 37.
The dual-screen-comparison image N60 as shown in Fig. 37 includes: a first half recording-setting image N61 displayed at the left of a display area 21; a first recording-setting-condition name information N22; a second half recording-setting image N63 displayed at the right of the display area 21; a second recording-setting-condition name information N24.
The first half recording-setting image N61 is the left half of the first recording-setting image J31. The second half recording-setting image N63 is the right half of the second recording-setting image J41.
With this arrangement, an original image can be displayed as a whole by combining the first and second half recording-setting images N61 and B63, so that a user can entirely view the images while viewing the images processed under different encoding conditions. Accordingly, a user can properly compare the images in terms of their encoding conditions.

In the first exemplary embodiment, the image combining section 150 and the controller 160 included in the image display controller of the invention may be provided independently of the image processor 100. The same arrangement may be applied to the second to seventh exemplary embodiments.

The above-described modifications may be made for the arrangements shown in Figs. 32 to 35.

The above-described components are configured as programs. However, the components may be configured in other configurations, for instance, as a hardware such as a circuit board or one IC (Integrated Circuit). When the components are read from the program or the recording medium, operation can be facilitated and usage can be easily expanded as described above.

The specific arrangements and procedures for carrying out the invention may be modified as necessary as long as an object of the invention can be achieved.

### [Advantage(s) of Exemplary Embodiment(s)]

As described above, according to the exemplary embodiments, the image processor 100 of the image processor system 1A acquires the outputted image data from the image-data output unit 10, and generates the first quality-adjusted image data and the second quality-adjusted image data each of which has been processed under a different quality adjustment condition. Then, the first time-division-comparison image J10 having the first quality-adjusted image J11 accorded with the first quality-adjusted image data and the second time-division-comparison image J20 having the second quality-adjusted image J21 accorded with the second quality-adjusted image data are displayed on the display area 21 of the display 20 in an alternately-switching manner.
With this arrangement, the first and second quality-adjusted images J11 and J21 can be displayed without reducing the scale of the entirety. Thus, a user can view the images processed under different quality-adjustment conditions alternately in the same size as the actual size. In addition, since motion images are switchably displayed, continuously-inputted images such as broadcast can be compared with each other in real time. Accordingly, a user can properly compare the images in terms of their quality.

In another exemplary embodiment, the image processor 900 of the image processor system 1I generates the second recording quality-adjustment image data by performing the encode processing and the second quality-adjustment processing, and the first recording-quality adjusted image data by performing the first quality-adjustment processing without performing the encode processing. Then, the display 20 displays the second recording-quality-adjusted image based on the second recording-quality adjusted image data and the first recording-quality-adjusted image based on the first recording quality adjustment image data.
Accordingly, the whole second recording-quality adjusted image and the whole first recording-quality adjusted image are displayed, so that a user can entirely view the images while viewing the images processed under different encoding conditions. Accordingly, a user can properly compare the images in terms of their encoding conditions. Even when image degradation peculiar to the encode processing is observed, a user can compare the images subjected to the image-quality adjustment corresponding to the image degradation. Further, since a different quality adjustment processing is performed on an image subjected to a different encode processing, a user can compare the images subjected to the proper image-quality adjustment as compared with an arrangement in which the same encode processing is performed. Thus, a user can properly compare the images in terms of their quality to select a desired image.

### Industrial Applicability

The invention is applicable as an image-display controller, an image processor, an image processor system, an image-display controlling method, and a program thereof for displaying on a display an image accorded with a processed image data generated by performing a predetermined processing on a predetermined image data.

## Claims

1. An image display controller that controls a display to display an image based on a processed image data generated by performing a predetermined processing on a predetermined image data, the image display controller comprising:
an outputted-image acquirer that acquires an outputted image data continuously outputted from an image-data output unit as the image data;
a processed-image generation controller that controls a processed-image generator for generating the processed image data to generate a first processed image data and a second processed image data based on the image data acquired by the outputted-image acquirer at different timings, the first processed image data and the second processed image data being different in a processing condition; and
a processed-image display controller that controls the display to display an image based on the first processed image data and an image based on the second processed image data in one display area of the display in an alternately-switching manner.

2. The image display controller according to claim 1, wherein
the processing is an encode processing of the image data, a decode processing of the image data and a quality adjustment processing of the image, and
the processed-image generation controller controls the processed-image generator to generate the first processed image data and the second processed image data of which conditions for the encode processings and the quality adjustment processings are different.

3. The image display controller according to claim 2, wherein the processed-image generation controller controls the processed-image generator to generate the first processed image data by performing on the image data a first encode processing, the decode processing and a first quality adjustment processing corresponding to the first encode processing, and to generate the second processed image data by performing on the image data a second encode processing, the decode processing and a second quality adjustment processing corresponding to the second encode processing.

4. The image display controller according to claim 1, wherein the processing is a quality adjustment processing of the image.

5. The image display controller according to claim 4, further comprising
an adjustment-condition-information storage that stores an adjustment condition information about a condition of the quality adjustment processing, wherein
the processed-image generation controller acquires the adjustment condition information stored in the adjustment-condition-information storage and controls the processed-image generator to generate the first processed image data and the second processed image data under the acquired adjustment condition information.

6. The image display controller according to claim 4 or 5, wherein the processing is a motion compensation of the image.

7. The image display controller according to any one of claims 1 to 6, further comprising:
an input unit that includes an operating section on which an input operation is performed, the input unit outputting an operation signal for commanding a switch of the image when recognizing that the image displayed in the one display area is to be switched based on the input operation on the operating section; and
a processing-signal output unit that acquires the operation signal from the input unit and outputs a processing signal for commanding that a processing corresponding to the operation signal be performed, wherein
the processed-image display controller controls the image displayed in the one display area to be switched based on the processing signal from the processing-signal output unit.

8. The image display controller according to claim 7, wherein
the input unit recognizes from the input operation on a first operating section that the image to be displayed in the one display area is the image based on the first processed-image data and outputs a first processing signal for so notifying, and recognizes from the input operation on a second operating section that the image to be displayed in the one display area is the image based on the second processing-image data and outputs a second processing signal for so notifying,
the processing-signal output unit outputs a first processing signal for commanding that a processing corresponding to the first operation signal be performed and a second processing signal for commanding that a processing corresponding to the second operation signal to be performed, and
the processed-image display controller controls the image based on the first processed image data to be displayed when acquiring the first processing signal while the image based on the second processed image data is being displayed, and controls the image based on the second processed image data to be displayed when acquiring the second processing signal while the image based on the first processed image data is being displayed.

9. The image display controller according to claim 7, wherein the input unit includes a plurality of operating sections and outputs the operation signal every time the input operation is performed on a specific one of the operating sections.

10. The image display controller according to any one of claims 1 to 9, wherein the processed-image display controller controls at least one of a character, a symbol and a figure to be displayed differently between when the image based on the first processed image data is displayed and when the image based on the second processed image data is displayed.

11. The image display controller according to claim 8, wherein
the processed-image display controller controls at least one of the character, the symbol and the figure in a first color to be displayed when the image based on the first processing image data is to be displayed, and controls at least one of the character, the symbol and the figure in a second color to be displayed when the image based on the second processing image data is to be displayed,
the first operating section is colored in the first color, and
the second operating section is colored in the second color.

12. The image display controller according to any one of claims 1 to 6, wherein the processed-image display controller controls the image to be switched at predetermined time intervals.

13. The image display controller according to any one of claims 1 to 12, wherein the processed-image display controller controls a displayed-image processing information to be displayed together with a displayed image, the displayed-image processing information indicating a condition of the processing performed on the processed image data on which the displayed image is based.

14. The image display controller according to claim 13, wherein the processed-image display controller controls a non-displayed-image processing information to be displayed together with the displayed image and the displayed-image processing information, the non-displayed-image processing information indicating a condition of the processing performed on the processed image data on which a non-displayed image is based.

15. The image display controller according to claim 13 or 14, wherein
the condition of the processing is numerically indicated, and
the processed-image display controller controls a number line that serves as a reference for indicating the condition of the processing to be displayed, controls a first figure to be displayed on the number line at a position corresponding to the condition of the processing for the displayed image as the displayed-image processing information, and controls a second figure to be displayed on the number line at a position corresponding to the condition of the processing for the non-displayed image as the non-displayed-image processing information.

16. The image display controller according to claim 14 or 15, wherein the processed-image display controller controls the displayed-image processing information and the non-displayed image processing information to be displayed differently.

17. The image display controller according to any one of claims 1 to 16, further comprising:
a selective-processing recognizer that recognizes that either one of the processing corresponding to the first processed image data and the processing corresponding to the second processed image data is selected;
a selectively-processed-image generation controller that controls the processed-image generator to generate a selectively-processed image data by performing the either one of the processings recognized by the selective-processing recognizer on the outputted image data; and
a selectively-processed-image display controller that controls the display to display an image based on the selectively-processed-image data.

18. An image display controller that controls a display to display an image based on a processed image data generated by performing a predetermined processing on a predetermined image data, the processing being an encode processing of the image data, a decode processing of the image data and a quality adjustment processing of the image, the image display controller comprising:
a processed-image generation controller that controls a processed-image generator for generating the processed-image data to generate a first processed image data and a second processed image data of which encode processings and quality adjustment processings are different; and
a processed-image display controller that controls the display to display an image based on the first processed image data and an image based on the second processed image data.

19. The image display controller according to claim 18, wherein the processed-image display controller controls the display to display the image based on the first processed image data and the image based on the second processed image data in one display area of the display in an alternately-switching manner.

20. The image display controller according to claim 19, further comprising:
an input unit that includes an operating section on which an input operation is performed, the input unit outputting an operation signal for commanding a switch of the image when recognizing that the image displayed in the one display area is to be switched based on the input operation on the operating section; and
a processing-signal output unit that acquires the operation signal from the input unit and outputs a processing signal for commanding that a processing corresponding to the operation signal be performed, wherein
the processed-image display controller controls the image displayed in the one display area to be switched based on the processing signal from the processing-signal output unit.

21. The image display controller according to claim 20, wherein the input unit includes a plurality of operating sections and outputs the operation signal every time the input operation is performed on a specific one of the operating sections.

22. The image display controller according to claim 21, wherein the processed-image display controller controls the image to be switched at predetermined time intervals.

23. The image display controller according to claim 20, wherein
the input unit recognizes from the input operation on a first operating section that the image to be displayed in the one display area is the image based on the first processed-image data and outputs a first processing signal for so notifying, and recognizes from the input operation on a second operating section that the image to be displayed in the one display area is the image based on the second processing-image data and outputs a second processing signal for so notifying,
the processing-signal output unit outputs a first processing signal for commanding that a processing corresponding to the first operation signal be performed and a second processing signal for commanding that a processing corresponding to the second operation signal to be performed, and
the processed-image display controller controls the image based on the first processed image data to be displayed when acquiring the first processing signal while the image based on the second processed image data is being displayed, and controls the image based on the second processed image data to be displayed when acquiring the second processing signal while the image based on the first processed image data is being displayed.

24. The image display controller according to claim 18, wherein the processed-image display controller controls the display to display the image based on the first processed image data and the image based on the second processed image data in one display area of the display in juxtaposition.

25. The image display controller according to any one of claims 18 to 24, wherein the processed-image generation controller controls the processed-image generator to generate the first processed image data by a predetermined encode processing and a predetermined decode processing on the image data and to generate the second processing image data without performing the encode processing and the decode processing on the image data.

26. The image display controller according to claim 25, wherein
the processed-image generator includes:
an encoder that acquires the image data and generates an encode-processed image data by performing the encode processing on the image data;
a decoder that generates a decode-processed image data by performing the decode processing on the encode-processed image data generated by the encoder;
a delay unit that acquires the image data and outputs the acquired image data as a non-processed image data after a time equal to a time required for the encode processing and the decode processing is elapsed; and
an image-quality adjuster that generates the first processed image data and the second processed image data by performing quality adjustment processings of different conditions on the decode-processed image data and the non-processed image data respectively for outputting to the processed-image display controller, and
the processed-image generation controller controls the encoder and the delay unit to acquire the image data at the same timing.

27. The image display controller according to any one of claims 18 to 24, wherein the processed-image generation controller controls the processed-image generator to generate the first processed image data by performing on the image data a first encode processing, the decode processing and a first quality adjustment processing corresponding to the first encode processing, and to generate the second processed image data by performing on the image data a second encode processing, the decode processing and a second quality adjustment processing corresponding to the second encode processing.

28. The image display controller according to claim 27, wherein
the processed-image generator includes:
a first encoder that acquires the image data and generates a first encode-processed image data by performing the first encode processing on the image data;
a first decoder that generates a first decode-processed image data by performing the decode processing on the encode-processed image data generated by the first encoder;
a second encoder that acquires the image data and generates a second encode-processed image data by performing the second encode processing on the image data;
a second decoder that generates a second decode-processed image data by performing the decode processing on the encode-processed image data generated by the second encoder; and
an image-quality adjuster that generates the first processed image data by performing the first quality adjustment processing on the first decode-processed image data and generates the second processed image data by performing the second quality adjustment processing on the second decode-processed image data for outputting to the processed-image display controller, and
the processed-image generation controller controls the first encoder and the second encoder to acquire the image data at the same timing.

29. The image display controller according to claim 28, wherein
the processed-image generator includes:
an encoder that acquires the image data and generates an encode-processed image data by performing the encode processing on the image data;
a decoder that generates a decode-processed image data by performing the decode processing on the encode-processed image data generated by the encoder;
a storage-and-output processor that performs a storage processing for acquiring and storing the decode-processed image data generated by the decoder and an output processing for outputting the stored decode-processed image data; and
an image-quality adjuster that generates the processed image data by performing the quality adjustment processing on the decode-processed image data generated by the decoder for outputting to the processed-image display controller, and
the processed-image generation controller:
controls the encoder to acquire the image data and to generate the first encode-processed image data by performing the first encode processing on the image data, and controls the decoder to generate the first decode-processed image data by performing the decode processing on the first encode-processed image data;
controls the storage-and-output processor to store the first decode-processed image data;
controls the encoder to acquire the image data and to generate the second encode-processed image data by performing the second encode processing on the image data, and controls the decoder to generate the second decode-processed image data by performing the decode processing on the second encode-processed image data for outputting to the image-quality adjuster;
controls the storage-and-output processor to output the stored first decode-processed image data to the image-quality adjuster; and
controls the image-quality adjuster to generate the first processed image data by performing the first quality adjustment processing on the first decode-processed image data and to generate the second processed image data by performing the second quality adjustment processing on the second decode-processed image data.

30. The image display controller according to claim 27, wherein
the processed-image generator includes:
an encoder that acquires the image data and generates the encode-processed image data by performing the encode processing on the image data;
a first decoder that generates the first decode-processed image data by performing the decode processing on a first encode-processed image data generated by the encoder;
a second decoder that generates the second decode-processed image data by performing the decode processing on a second encode-processed image data generated by the encoder;
a storage-and-output processor that performs a storage processing for acquiring and storing the encode-processed image data generated by the encoder and an output processing for outputting the stored encode-processed image data to the first decoder; and
an image-quality adjuster that generates the first processed image data by performing the first quality adjustment processing on the first decode-processed image data generated by the decoder and generates the second processed image data by performing the second quality adjustment processing on the second decode-processed image data for outputting to the processed-image display controller, and
the processed-image generation controller :
controls the encoder to acquire the image data and to generate the first encode-processed image data by performing the first encode processing on the image data;
controls the storage-and-output processor to store the first encode-processed image data;
controls the encoder to acquire the image data and to generate the second encode-processed image data by performing the second encode processing on the image data for outputting to the second decoder, and controls the second decoder to generate the second decode-processed image data;
controls the storage-and-output unit to output the stored first encode-processed image data to the first decoder, and controls the first decoder to generate the first decode-processed image data; and
controls the image-quality adjuster to generate the first processed image data based on the first decode-processed image data and the second processed image data based on the second decode-processed image data.

31. The image display controller according to any one of claims 18 to 30, further comprising:
an outputted-image acquirer that acquires an outputted image data outputted from an image-data output unit;
a selective-processing recognizer that recognizes that either one of the encode processing corresponding to the first processed image data and the encode processing corresponding to the second processed image data is selected;
a selectively-processed-image generation controller that controls the processed-image generator to generate a selectively-processed image data by performing the either one of the encode processings recognized by the selective-processing recognizer on the outputted image data; and
a recording controller that controls the selectively-processed image data to be recorded on a recording medium.

32. The image display controller according to claim 31, wherein the processed-image generator generates the first processing image data and the second processing image data by reflecting degradation of the image based on the selectively-processed image data therein, the degradation being caused by time degradation of the recording medium.

33. The image display controller according to claim 31 or 32, wherein the processed-image generation controller controls the processed-image generator to acquire the outputted image data from the outputted-image acquirer as the image data and to generate the first processed image data and the second processed image data based on the outputted image data.

34. The image display controller according to any one of claims 31 to 33, further comprising:
an outputted-image storage that stores the outputted image data, wherein
the outputted-image acquirer controls the outputted-image storage to store the acquired outputted image data, and
the processed-image generation controller controls the processed-image generator to acquire the outputted image data stored in the outputted-image storage as the image data and to generate the first processed image data and the second processed image data based on the outputted image data.

35. The image display controller according to any one of claims 31 to 34, further comprising:
a generation-image storage that stores generation-image data solely used for generating the first processed image data and the second processed image data, wherein
the processed-image generation controller controls the processed-image generator to acquire the generation image data stored in the generation-image storage as the image data and to generate the first processed image data and the second processed image data based on the generation image data.

36. The image display controller according to any one of claims 31 to 35, wherein the recording controller controls a condition of a quality adjustment processing performed on the processed image data corresponding to the selectively-processed image data to be recorded on the recording medium as a quality-adjustment condition information.

37. The image display controller according to claim 36, wherein the selectively-processed image data and the quality-adjustment condition information are acquired from the recording medium, and the image based on the selectively-processed image data is subjected to a quality adjustment processing under the condition according to the quality-adjustment condition information for reproduction.

38. The image display controller according to claim 36, wherein the recording controller records a device information on the recording medium, the device information being information for specifying an image display controller for which the condition of the quality adjustment processing is set.

39. The image display controller according to claim 38, wherein the selectively-processed image data, the quality-adjustment condition information and the device information are acquired from the recording medium, the condition according to the quality-adjustment condition information is converted so as to correspond to the image display controller specified by the device information, and the image based on the selectively-processed image data is subjected to a quality adjustment processing under the converted condition for reproduction.

40. An image processor, comprising:
a processed-image generator that generates a processed image data by performing a predetermined processing on a predetermined image data; and
the image display controller according to any one of claims 1 to 39, the image display controller controlling a display to display an image based on the processed image data generated by the processed-image generator.

41. An image-display controlling method for controlling a display by a computing unit to display an image based on a processed image data generated by performing a predetermined processing on a predetermined image data, the computing unit executing:
acquiring an outputted image data continuously outputted from an image-data output unit as the image data;
controlling a processed-image generator for generating the processed image data to generate a first processed image data and a second processed image data based on the image data acquired at different timings, the first processed image data and the second processed image data being different in a processing condition; and
controlling the display to display an image based on the first processed image data and an image based on the second processed image data in one display area of the display in an alternately-switching manner.

42. An image-display controlling method for controlling a display by a computing unit to display an image based on a processed image data generated by performing a predetermined processing on a predetermined image data, the processing being an encode processing of the image data, a decode processing of the image data and a quality adjustment processing of the image, the computing unit executing:
controlling a processed-image generator for generating the processed-image data to generate a first processed image data and a second processed image data of which encode processings and quality adjustment processings are different; and
controlling the display to display an image based on the first processed image data and an image based on the second processed image data.

43. An image-display controlling program for operating a computing unit to execute the image-display controlling method according to claim 41 or 42.

44. An image-display controlling program for operating a computing unit to function as the image display controller according to any one of claims 1 to 39.

45. A recording medium on which the image-display controlling program according to claim 43 or 44 is recorded in a computer-readable manner.
